(19) Europäisches Patentamt
European Patent Office
Office européen des brevets

(11) **EP 4 714 536 A2**

(12) **EUROPEAN PATENT APPLICATION**

(43) Date of publication:
**25.03.2026 Bulletin 2026/13**

(21) Application number: **26156527.9**

(22) Date of filing: **05.07.2022**

(51) International Patent Classification (IPC):
**B01J 13/16** (2006.01)

(52) Cooperative Patent Classification (CPC):
(C-Sets available)
**B01J 13/185; B01J 13/203; C08F 2/18; C08F 2/44; C08F 220/20; C08F 222/102** (Cont.)

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **05.07.2021 JP 2021111341**

(62) Document number(s) of the earlier application(s) in accordance with Art. 76 EPC:
**22837657.0 / 4 368 646**

(71) Applicant: **Zeon Corporation**
**Tokyo 100-8246 (JP)**

(72) Inventors:
- **WATANABE, Masashi**
  **Tokyo 100-8246 (JP)**
- **YAGYU, Sakyo**
  **Tokyo 100-8246 (JP)**

(74) Representative: **Kraus & Lederer PartGmbB**
**Thomas-Wimmer-Ring 15**
**80539 München (DE)**

Remarks:
This application was filed on 05.02.2026 as a divisional application to the application mentioned under INID code 62.

(54) **HOLLOW PARTICLES, METHOD FOR PRODUCING HOLLOW PARTICLES, RESIN COMPOSITION, MOLDED BODY AND METHOD FOR PRODUCING MOLDED BODY**

(57) Hollow particles which comprise a resin-containing shell and a hollow portion surrounded by the shell, wherein a void ratio is 50% or more; wherein the shell contains, as the resin, a polymer in which 60 to 100 parts by mass of a crosslinkable monomer unit is contained in 100 parts by mass of all monomer units; wherein the hollow particles have at least one kind of reactive group selected from a hydroxy group and an amino group on a surface thereof and the hydroxyl value is 0.20 mmol/g or more or the amine value is 0.20 mmol/g or more, or wherein the hollow particles have at least one kind of reactive group selected from the group consisting of a carboxy group, a carboxylic anhydride group and a sulfo group on a surface thereof and the acid value is 0.20 mmol/g or more.

FIG. 1

**(Cont. next page)**

(52) Cooperative Patent Classification (CPC): (Cont.)

C-Sets
**C08F 220/20, C08F 222/102, C08F 222/104,
C08F 212/36, C08F 212/12;
C08F 222/102, C08F 220/20, C08F 222/104;
C08F 222/102, C08F 222/104;
C08F 222/102, C08F 222/104, C08F 220/20;
C08F 222/102, C08F 226/04, C08F 222/104;
C08F 222/102, C08F 226/04, C08F 222/104,
C08F 212/36, C08F 212/12**

## Description

Technical Field

The disclosure relates to hollow particles, a method for producing the hollow particles, a resin composition comprising the hollow particles, a molded body comprising hollow particles derived from the hollow particles, and a method for producing the molded body.

Background Art

Hollow particles (hollow resin particles) are particles each of which has a hollow in its interior, and they can scatter light well and can reduce light transmissivity as compared to solid particles in which their interiors are practically filled with resin. Hence, hollow particles are widely used in the applications of, for example, aqueous coating materials and paper coating compositions, as organic pigments and masking agents excellent in optical properties such as opacity and whiteness. Also, in recent years, hollow particles are used as weight reducing materials, heat insulation materials or the like for resins and coating materials, which are used in various kinds of fields such as the automotive field, the electronic field, the electric field and the architecture field.

To enhance the effects of various kinds of compositions and molded bodies containing hollow particles, such as weight reduction and heat insulation, it is desirable that hollow particles can retain a high void ratio even when they are mixed and kneaded with other materials and even when the mixture is molded after the mixing and kneading. However, when the void ratio of hollow particles is increased, the shell thickness of the hollow particles decreases and makes the hollow particles more likely to collapse. Accordingly, there is a demand for hollow particles which have a high void ratio and which are less likely to collapse.

For example, Patent Literatures 1 and 2 disclose hollow particles such that the shell contains a polymer which is obtained by polymerizing a reactive monomer having a radically polymerizable functional group (e.g., a vinyl group) and a crosslinkable functional group (e.g., an epoxy group) and then crosslinking the functional groups by use of a crosslinking agent (e.g., a polyamine-based compound).

Citation List

Patent Literatures

Patent Literature 1: International Publication No. WO 2019/177006
Patent Literature 2: Japanese Patent Application Laid-Open (JP-A) No. 2006-89648

Summary of Invention

Technical Problem

For the hollow particles described in Patent Literatures 1 and 2, however, the pressure resistance is likely to be poor when the void ratio is increased, and it is difficult to achieve both pressure resistance and a high void ratio.

A resin composition obtained by adding conventional hollow particles to a resin has the following problem: its properties relating to strength to external force, such as tensile strength and flexural strength, deteriorate compared to a resin composition not containing hollow particles. This is presumed to be due to poor adhesion between the hollow particles and resin in the resin composition.

In light of the above circumstances, an object of the present disclosure is to provide hollow particles having a high void ratio, excellent pressure resistance and excellent adhesion to resin, a method for producing the hollow particles, and a resin composition comprising the hollow particles. Another object of the present disclosure is to provide a molded body comprising hollow particles derived from the hollow particles, and a method for producing the molded body.

Solution to Problem

The inventor of the present disclosure found the following: hollow particles in which the shell-forming polymer contains many crosslinkable monomer units and which have reactive groups on the surface, have excellent adhesion to resin and can exert excellent pressure resistance even when the void ratio is high.

According to the present disclosure, there are provided hollow particles which comprise a shell containing a resin and a hollow portion surrounded by the shell,

> wherein a void ratio is 50% or more;
> wherein the shell contains, as the resin, a polymer in which from 60 parts by mass to 100 parts by mass of a crosslinkable monomer unit is contained in 100 parts by mass of all monomer units;
> wherein the hollow particles have at least one kind of reactive group selected from a hydroxy group and an amino group on a surface thereof; and
> wherein a hydroxyl value is 0.20 mmol/g or more, or an amine value is 0.20 mmol/g or more.

Also provided are hollow particles which comprise a shell containing a resin and a hollow portion surrounded by the shell,

> wherein a void ratio is 50% or more;
> wherein the shell contains, as the resin, a polymer in which from 60 parts by mass to 100 parts by mass of a crosslinkable monomer unit is contained in 100 parts by mass of all monomer units;
> wherein the hollow particles have at least one kind of reactive group selected from the group consisting of a carboxy group, a carboxylic anhydride group and a sulfo group on a surface thereof; and
> wherein an acid value is 0.20 mmol/g or more.

In the hollow particles of the present disclosure, the crosslinkable monomer unit preferably contains a reactive group-containing monomer unit and a reactive group-free monomer unit.

In the hollow particles of the present disclosure, a content of a reactive group-containing monomer unit in 100 parts by mass of the crosslinkable monomer unit is preferably 10 parts by mass or more.

Also in the hollow particles of the present disclosure, the shell preferably contains, as the resin, from 60 parts by mass to 97 parts by mass of a crosslinkable monomer unit and from 3 parts by mass to 40 parts by mass of a non-crosslinkable monomer unit in 100 parts by mass of all the monomer units, and a content of a reactive group-containing monomer unit in 100 parts by mass of the non-crosslinkable monomer unit is preferably 80 parts by mass or more.

In the hollow particles of the present disclosure, a volume average particle diameter is preferably 1 μm or more.

According to the present disclosure, there is provided a method for producing the above-described hollow particles which have at least one kind of reactive group selected from a hydroxy group and an amino group,
the method comprising:

> preparing a mixture liquid containing a polymerizable monomer, a hydrophobic solvent, a dispersion stabilizer and an aqueous medium,
> suspending the mixture liquid to prepare a suspension in which droplets of a monomer composition containing the polymerizable monomer and the hydrophobic solvent are dispersed in the aqueous medium,
> subjecting the suspension to a polymerization reaction to prepare a precursor composition containing precursor particles which have a hollow portion surrounded by a shell containing a resin and which include the hydrophobic solvent in the hollow portion, and
> removing the hydrophobic solvent from the precursor particles,
> wherein, in the polymerization, a second polymerization reaction is optionally performed by further adding a second polymerizable monomer after a first polymerization reaction is performed by subjecting the suspension to the polymerization reaction;
> wherein from 60 parts by mass to 100 parts by mass of a crosslinkable monomer is contained in 100 parts by mass of the polymerizable monomer contained in the mixture liquid; and
> wherein at least one of the polymerizable monomer contained in the mixture liquid and the second polymerizable monomer contains a crosslinkable or non-crosslinkable monomer containing at least one kind of reactive group selected from a hydroxy group and an amino group.

According to the present disclosure, also provided is a method for producing the above-described hollow particles which have at least one kind of reactive group selected from the group consisting of a carboxy group, a carboxylic anhydride group and a sulfo group,
the method comprising:

> preparing a mixture liquid containing a polymerizable monomer, a hydrophobic solvent, a dispersion stabilizer and an aqueous medium,
> suspending the mixture liquid to prepare a suspension in which droplets of a monomer composition containing the polymerizable monomer and the hydrophobic solvent are dispersed in the aqueous medium,

subjecting the suspension to a polymerization reaction to prepare a precursor composition containing precursor particles which have a hollow portion surrounded by a shell containing a resin and which include the hydrophobic solvent in the hollow portion, and

removing the hydrophobic solvent from the precursor particles,

wherein, in the polymerization, a second polymerization reaction is optionally performed by further adding a second polymerizable monomer after a first polymerization reaction is performed by subjecting the suspension to the polymerization reaction;

wherein from 60 parts by mass to 100 parts by mass of a crosslinkable monomer is contained in 100 parts by mass of the polymerizable monomer contained in the mixture liquid; and

wherein at least one of the polymerizable monomer contained in the mixture liquid and the second polymerizable monomer contains a crosslinkable or non-crosslinkable monomer containing at least one kind of reactive group selected from the group consisting of a carboxy group, a carboxylic anhydride group and a sulfo group.

In the method for producing the hollow particles according to the present disclosure, at least one of the polymerizable monomer contained in the mixture liquid and the second polymerizable monomer preferably contains the crosslinkable monomer containing the reactive group.

In the method for producing the hollow particles according to the present disclosure, the crosslinkable monomer contained in the mixture liquid preferably contains a reactive group-free monomer.

In the method for producing the hollow particles according to the present disclosure, a content of a reactive group-containing monomer in a total of 100 parts by mass of the crosslinkable monomer contained in the polymerizable monomer contained in the mixture liquid and the second polymerizable monomer, is preferably 10 parts by mass or more.

Also in the method for producing the hollow particles according to the present disclosure, at least one of the polymerizable monomer contained in the mixture liquid and the second polymerizable monomer preferably contains a non-crosslinkable monomer; a content of the crosslinkable monomer in a total of 100 parts by mass of the polymerizable monomer contained in the mixture liquid and the second polymerizable monomer, is preferably from 60 parts by mass to 97 parts by mass; a content of the non-crosslinkable monomer is preferably from 3 parts by mass to 40 parts by mass; and a content of a reactive group-containing monomer in a total of 100 parts by mass of the non-crosslinkable monomer, is preferably 80 parts by mass or more.

According to the present disclosure, there is provided a resin composition comprising the hollow particles of the present disclosure and a resin containing a functional group, wherein the reactive group on the surface of the hollow particles is reactive with the functional group of the resin.

According to the present disclosure, there is provided a molded body comprising hollow particles derived from the hollow particles of the present disclosure and a solidified resin product, wherein the shell of the hollow particles is crosslinked to the solidified resin product.

According to the present disclosure, there is provided a method for producing a molded body, the method comprising:

mixing the hollow particles of the present disclosure and a resin containing a functional group that is reactive with the reactive group on the surface of the hollow particles,

solidifying the resin, and

reacting the reactive group of the hollow particles with the functional group of the resin.

Advantageous Effects of Invention

The present disclosure as described above can provide hollow particles having a high void ratio, excellent pressure resistance and excellent adhesion to resin, a method for producing the hollow particles, and a resin composition comprising the hollow particles. Also, the present disclosure as described above can provide a molded body comprising hollow particles derived from the hollow particles, and a method for producing the molded body.

Brief Description of Drawing

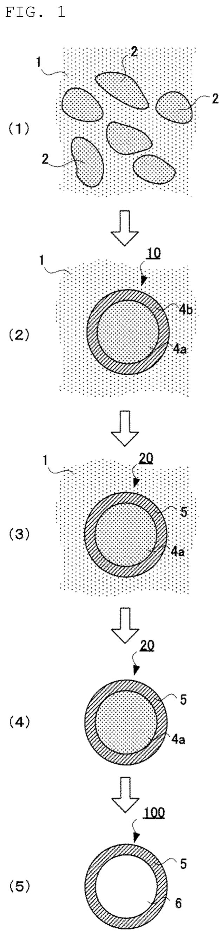

FIG. 1 is a diagram illustrating an example of the method for producing the hollow particles of the present disclosure.

Description of Embodiments

In the present disclosure, "A to B" in a numerical range is used to describe a range in which the numerical value A is included as the lower limit value and the numerical value B is included as the upper limit value.

Also in the present disclosure, (meth)acrylate means each of acrylate and methacrylate; (meth)acryl means each of acryl and methacryl; and (meth)acryloyl means each of acryloyl and methacryloyl.

Also in the present disclosure, the term "polymerizable monomer" means a compound having an addition-polymerizable functional group (in the present disclosure, it may be simply referred to as a "polymerizable functional group"). Also in the present disclosure, as the polymerizable monomer, a compound having an ethylenically unsaturated bond as the addition-polymerizable functional group, is generally used.

There are two kinds of polymerizable monomers: a non-crosslinkable monomer and a crosslinkable monomer. The non-crosslinkable monomer is a polymerizable monomer which has only one polymerizable functional group, and the crosslinkable monomer is a polymerizable monomer which has two or more polymerizable functional groups and which forms a crosslink in a resin by a polymerization reaction.

1. Hollow particles

The hollow particles of the present disclosure are particles which comprise a resin-containing shell (outer shell) and a hollow portion surrounded by the shell.

In the present disclosure, the term "hollow portion" means a hollow space clearly distinguished from the shell of hollow particles formed from a resin material. The shell of the hollow particles may have a porous structure. In this case, the hollow portion has a size that can be clearly distinguished from many minute spaces uniformly dispersed in the porous structure.

The hollow portion of the hollow particles can be determined by, for example, SEM observation of a cross section of the particles or TEM observation of the particles as they are.

Depending on the intended use, the hollow portion of the hollow particles may be filled with gas such as air, may be in a reduced pressure state close to vacuum, or may contain a solvent.

Since hollow particles have a hollow portion in the interior of the particles, they can impart performances such as weight reduction and heat insulation to various kinds of compositions, molded bodies and so on, all of which contain the hollow particles.

In the hollow particles of the present disclosure, the void ratio is 50% or more; the shell contains a polymer in which from 60 parts by mass to 100 parts by mass of a crosslinkable monomer unit is contained in 100 parts by mass of all monomer units; and the hollow particles have a reactive group on the surface.

In the present disclosure, when the hollow particles have the reactive group on the surface, the reactive group is fixed on the surface of the shell by a covalent bond.

In the present disclosure, the reactive group on the surface of the hollow particles preferably includes the reactive group of the crosslinkable or non-crosslinkable monomer unit in the shell-forming polymer, which is exposed on the surface of the hollow particles.

The reactive group of the crosslinkable or non-crosslinkable monomer unit may be such a reactive group that the polymerizable monomer used for the formation of the shell preliminarily has, may be such a reactive group that is introduced after the polymerization reaction of the polymerizable monomer, or may be such a reactive group that is produced in association with the polymerization reaction. In the case of performing the polymerization reaction in a slurry containing the aqueous medium, for example, the polymerizable monomer containing an epoxy group is brought into contact with water, alkali or acid, thereby ring-opening the epoxy group and converting it into a hydroxy group. After the polymerization reaction, accordingly, the polymerizable monomer containing an epoxy group becomes a monomer unit having a hydroxy group.

Also, for example, after the polymerization reaction of a polymerizable monomer containing a hydroxy group, a reactive group may be introduced into the resulting monomer unit by reaction with a silane coupling agent containing a reactive group such as a thiol group.

In the hollow particles of the present disclosure, the content of the crosslinkable monomer unit in the shell is large, and a covalent bond network is tightly strung in the shell. Accordingly, the strength of the shell is high, and even when the hollow particles have a high void ratio, they have excellent pressure resistance. In addition, the hollow particles of the present disclosure have excellent adhesion to resin since they have the reactive group on the surface. When the hollow particles are added to resin, accordingly, a deterioration in the properties of the resin can be suppressed. A resin composition obtained by adding conventional hollow particles to a resin has the following problem: when the resin composition is molded into a molded body, its properties such as tensile strength and flexural strength deteriorate compared to a resin composition not containing hollow particles. This is presumed to be because the adhesion of the interface between the resin and the hollow particles is low, and the strength of the interface between the resin and the hollow particles is relatively low. When the resin composition obtained by adding the hollow particles of the present disclosure to a resin is molded into a molded body, a deterioration in the properties is suppressed. This is presumed to be because the adhesion of the interface between the resin and the hollow particles is high. The resin having excellent adhesion to the hollow particles of the present disclosure is the resin containing a functional group that is reactive with the reactive group on the surface of the hollow particles of the present disclosure. The reaction of the reactive group of the hollow particles with the functional group of the resin is required to be a covalent bond-forming reaction. When the hollow particles of the present disclosure are added to the resin composition containing the resin in which such a functional group is contained, in the process of forming the molded body, a crosslink is formed by the reaction of the reactive group on the surface of the hollow particles with the functional group of the resin, and the interface between the resin and the hollow particles obtains high adhesion, accordingly. In the resin composition containing the hollow particles of the present disclosure and the resin containing the above-described functional group and serving as a compatibilizer, the adhesion between the hollow particles and resin can be improved even when the resin composition further contains a resin not containing a functional group.

When the hollow particles of the present disclosure having the reactive group on the surface are dispersed in the resin containing the functional group that is reactive with the reactive group, due to close polarity between the particles and the resin and high affinity between them, the hollow particles obtain good dispersibility. In a molded body containing hollow particles, if the hollow particles aggregate, pressure is likely to be applied to a part where the hollow particles aggregate at the time of pressuring the molded body, and the hollow particles are likely to collapse, accordingly. In the molded body obtained by adding the hollow particles of the present disclosure to the resin containing the functional group, however, the hollow particles are likely to be uniformly dispersed, and the aggregation of the hollow particles is suppressed. Accordingly, pressure is likely to be uniformly applied when pressuring the molded body. Accordingly, there is a tendency that the pressure resistance of the hollow particles is improved, and the collapse of the hollow particles is suppressed. Also in the molded body obtained by adding the hollow particles of the present disclosure to the resin containing the functional group, since the reactive group of the hollow particles is crosslinked to the functional group of the resin, there is a three-dimensional crosslinked structure in the vicinity of the particle surface. Accordingly, there is a tendency that the pressure resistance of the hollow particles is improved, and the collapse of the hollow particles is suppressed.

[Reactive group]

The reactive group on the surface of the hollow particles of the present disclosure is a group that crosslinks, by a chemical reaction with the functional group of the resin used in combination, the hollow particles to the resin.

As the reactive group, examples include, but are not limited to, a hydroxy group, an amino group, an epoxy group, a thiol group, an isocyanate group, a carboxy group, a carboxylic anhydride group, a sulfo group, a chlorosulfo group, a phosphoric acid group, a nitrile group, an aziridine group, an oxazoline group, an alkoxysilane group and a silanol group. As the reactive group, a reactive group that is reactive with the functional group of the resin can be appropriately selected and used, without any particular limitation. As the reactive group on the surface of the hollow particles of the present disclosure, one kind of reactive group or two or more kinds of reactive groups may be used.

In the present disclosure, the amino group on the surface of the hollow particles is required to be a monovalent functional group ($-NH_2$, -NHR, -NRR') obtained by removing hydrogen from ammonia, primary amine or secondary amine. Of them, from the viewpoint of improving the adhesion to the resin, $-NH_2$ or -NHR is preferred, and -NHR is more preferred. In -NHR and -NRR', each of R and R' represents an organic group. From the viewpoint of the adhesion of the hollow particles to the resin, each of R and R' is preferably an alkyl group containing 6 or less carbon atoms, and more preferably an alkyl group containing 4 or less carbon atoms.

The resin in the resin composition containing the hollow particles is appropriately selected depending on the intended use. From the viewpoint of ease of improving the affinity and adhesion between the resin and the hollow particles, the functional group of the resin is preferably an acidic group (such as a carboxy group and a carboxylic anhydride group), an epoxy group, a hydroxy group, an amino group, an isocyanate group, an amide bond, an alkoxycarbonyl group containing 1 to 4 carbon atoms, or the like.

When the functional group of the resin is a carboxy group or a carboxylic anhydride group, the reactive group of the hollow particles is preferably a hydroxy group, an amino group, an epoxy group, an isocyanate group or the like, for example.

When the functional group of the resin is an epoxy group, the reactive group of the hollow particles is preferably a hydroxy group, an amino group, a thiol group, a carboxy group, a carboxylic anhydride group or the like, for example.

When the functional group of the resin is a hydroxy group, the reactive group of the hollow particles is a carboxy group, a carboxylic anhydride group, a sulfo group, an epoxy group or the like, for example.

When the functional group of the resin is an amino group, the reactive group of the hollow particles is a carboxy group, a carboxylic anhydride group, a sulfo group, an epoxy group or the like, for example.

When the functional group of the resin is an isocyanate group, the reactive group of the hollow particles is preferably a hydroxy group, an amino group, an epoxy group or the like, for example.

When the functional group of the resin is an amide bond, the reactive group of the hollow particles is preferably a carboxy group, a carboxylic anhydride group or the like, for example.

When the functional group of the resin is an alkoxycarbonyl group containing 1 to 4 carbon atoms, the reactive group of the hollow particles is preferably a hydroxy group or an amino group. The hollow particles having a hydroxy group can be crosslinked to the resin by a transesterification reaction with the C1 to C4 alkoxycarbonyl group contained in the resin. The hollow particles having the amino group can be crosslinked to the resin by an aminolysis reaction with the C1 to C4 alkoxycarbonyl group contained in the resin.

The reactive group on the surface of the hollow particles of the present disclosure is preferably at least one kind selected from a hydroxy group and an amino group, from the viewpoint of excellent reactivity with a carboxy group, a carboxylic anhydride group, an epoxy group, an isocyanate group and a C1 to C4 alkoxycarbonyl group contained in the resin. From the viewpoint of improving the adhesion to these resins, the reactive group on the surface of the hollow particles of the present disclosure more preferably contains both a hydroxy group and an amino group. From the viewpoint of excellent reactivity with the hydroxy group and amino group contained in the resin, the reactive group on the surface of the hollow particles of the present disclosure is preferably at least one kind selected from the group consisting of a carboxy group, a carboxylic anhydride group and a sulfo group. From the viewpoint of excellent reactivity with the amide bond contained in the resin, the reactive group on the surface of the hollow particles of the present disclosure is preferably at least one kind selected from a carboxy group and a carboxylic anhydride group.

When the hollow particles of the present disclosure have a hydroxy group on the surface, from the viewpoint of improving the adhesion to the resin and improving the pressure resistance, the hydroxyl value of the hollow particles is preferably 0.20 mmol/g or more, more preferably 0.30 mmol/g or more, still more preferably 0.40 mmol/g or more, and even more preferably 0.50 mmol/g or more. The upper limit of the hydroxyl value is not particularly limited. From the viewpoint of suppressing a deterioration in the pressure resistance, the upper limit is preferably 3.00 mmol/g or less, more preferably 2.50 mmol/g or less, still more preferably 2.00 mmol/g or less, and even more preferably 1.00 mmol/g or less.

Even when the hollow particles of the present disclosure have a hydroxy group and an amino group on the surface, the hydroxyl value of the hollow particles is preferably equal to or more than the lower limit value described above, and it is preferably equal to or less than the upper limit value described above.

The hydroxyl value of the hollow particles can be used as the benchmark of the amount of a hydroxy group on the surface of the hollow particles. The hydroxyl value is measured according to JIS K 0070.

When the hollow particles of the present disclosure have an amino group on the surface, from the viewpoint of improving the adhesion to the resin and improving the pressure resistance, the amine value of the hollow particles is preferably 0.20 mmol/g or more, more preferably 0.24 mmol/g or more, and still more preferably 0.25 mmol/g or more. The upper limit of the amine value is not particularly limited. From the viewpoint of suppressing a deterioration in the pressure resistance, the upper limit is preferably 0.60 mmol/g or less, more preferably 0.50 mmol/g or less, and still more preferably 0.40 mmol/g or less.

Even when the hollow particles of the present disclosure have a hydroxy group and an amino group on the surface, the amine value of the hollow particles is preferably equal to or more than the lower limit value described above, and it is preferably equal to or less than the upper limit value described above.

The amine value of the hollow particles can be used as the benchmark of the amount of an amino group on the surface of the hollow particles. The amine value is measured according to JIS K 7237.

When the hollow particles of the present disclosure have at least one kind of reactive group selected from the group consisting of a carboxy group, a carboxylic anhydride group and a sulfo group on the surface, from the viewpoint of improving the adhesion to the resin and improving the pressure resistance, the acid value of the hollow particles is preferably 0.20 mmol/g or more, more preferably 0.24 mmol/g or more, and still more preferably 0.25 mmol/g or more. The upper limit of the acid value is not particularly limited. From the viewpoint of suppressing a deterioration in the pressure resistance, the upper limit is preferably 1.00 mmol/g or less, and more preferably 0.90 mmol/g or less. The upper limit may be 0.60 mmol/g or less, 0.50 mmol/g or less, or 0.40 mmol/g or less.

The acid value of the hollow particles can be used as the benchmark of the amount of an acidic group on the surface of the hollow particles. The acid value is measured according to JIS K 0070.

[Polymer]

The shell of the hollow particles of the present disclosure contains, as the resin, a polymer containing a crosslinkable monomer unit. The polymer forms the framework of the shell of the hollow particles and may further contain a non-crosslinkable monomer unit. The polymer is typically the polymer of the polymerizable monomer used in the below-described method for producing the hollow particles according to the present disclosure.

In the hollow particles of the present disclosure, the polymer preferably contains a crosslinkable or non-crosslinkable monomer unit containing a reactive group. From the viewpoint of achieving both the adhesion to the resin of the hollow particles and the pressure resistance, the polymer more preferably contains the crosslinkable monomer unit containing a reactive group.

In the present disclosure, the crosslinkable monomer unit is a monomer unit derived from the crosslinkable monomer, and the non-crosslinkable monomer unit is a monomer unit derived from the non-crosslinkable monomer. In the polymer, when the content of the crosslinkable monomer unit is less than 100 parts by mass, the monomer unit other than the crosslinkable monomer unit is the non-crosslinkable monomer unit.

(Crosslinkable monomer)

Since the crosslinkable monomer has a plurality of ethylenically unsaturated double bonds, it can link monomers and can improve the crosslinking density of the shell.

As the crosslinkable monomer, examples include, but are not limited to, a bifunctional crosslinkable monomer containing two polymerizable functional groups and a trifunctional or higher-functional crosslinkable monomer containing three or more polymerizable functional groups.

The crosslinkable monomer may be a reactive group-containing monomer containing a reactive group, or it may be a reactive group-free monomer not containing a reactive group.

As the crosslinkable monomer, one kind of crosslinkable monomer or two or more kinds of crosslinkable monomers may be used.

As the crosslinkable monomer containing a reactive group, examples include, but are not limited to, a monomer containing a hydroxy group, such as 2-hydroxy-3-methacryloyloxypropyl acrylate, 2-hydroxy-1,3-dimethacryloxypropane(1,3-bis(methacryloyloxy)-2-propanol) and glycerol diacrylate; a monomer containing an amino group, such as diallylamine; and a monomer containing an isocyanate group, such as 1,1-(bisacryloyloxymethyl)ethyl isocyanate. A modified polybasic acrylic oligomer containing a carboxy group, such as ARONIX (registered trademark) M-510 and M-520 manufactured by Toagosei Co., Ltd., can be used as the crosslinkable monomer containing a carboxy group as the reactive group, since it contains two or more acryloyl groups per molecule.

As the crosslinkable monomer not containing a reactive group, examples include, but are not limited to, a bifunctional crosslinkable monomer such as divinylbenzene, divinylbiphenyl, divinylnaphthalene, dicyclopentadiene, ethylidene tetracyclododecene, diallyl phthalate, allyl (meth)acrylate, ethylene glycol di(meth)acrylate, diethylene glycol di(meth)acrylate, pentaerythritol di(meth)acrylate, tricyclodecane dimethanol di(meth)acrylate and a diene-based monomer (e.g., butadiene, isoprene; and a trifunctional or higher-functional crosslinkable monomer such as trimethylolpropane tri(meth)acrylate, ditrimethylolpropane tetra(meth)acrylate, pentaerythritol tri(meth)acrylate, pentaerythritol tetra(meth)acrylate, dipentaerythritol hexa(meth)acrylate, dipentaerythritol poly(meth)acrylate and ethoxylates thereof.

As the crosslinkable monomer not containing a reactive group, a polyfunctional urethane acrylate or an oligomer- or polymer-type crosslinkable monomer may be used. As the oligomer- or polymer-type crosslinkable monomer, examples include, but are not limited to, a both-vinyl-terminated or both-(meth)acryl-terminated polyphenylene ether, polybutadiene, polyisoprene, a styrene-butadiene block copolymer (SBS) and a styrene-isoprene block copolymer (SIS).

The crosslinkable monomer unit is a reactive group-containing monomer unit containing a reactive group, a reactive group-free monomer unit not containing a reactive group, or a combination thereof, and it is not particularly limited. From the viewpoint of achieving both the adhesion of the hollow particles to the resin and the pressure resistance, the crosslinkable monomer unit preferably contains the reactive group-containing monomer unit. From the viewpoint of improving the pressure resistance, the crosslinkable monomer unit preferably contains the reactive group-free monomer unit, and it more preferably contains both the reactive group-containing monomer unit and the reactive group-free monomer unit.

When the crosslinkable monomer unit contains the reactive group-containing monomer unit, the content of the reactive group-containing monomer unit in 100 parts by mass of the crosslinkable monomer unit, is appropriately controlled depending on the type of the reactive group-containing monomer, and it is not particularly limited. From the viewpoint of improving the adhesion between the hollow particles and the resin and from the viewpoint of improving the pressure resistance of the hollow particles, the lower limit of the content is preferably 10 parts by mass or more, more preferably 12 parts by mass or more, still more preferably 15 parts by mass or more, and even more preferably 20 parts by mass or more. The upper limit of the content is not particularly limited, and the crosslinkable monomer unit may be composed of the reactive group-containing monomer unit. For example, from the viewpoint of improving the pressure resistance of the hollow particles by containing the reactive group-free monomer unit, the upper limit is preferably 60 parts by mass or less, more preferably 50 parts by mass or less, and still more preferably 40 parts by mass or less.

When the crosslinkable monomer unit contains the reactive group-free monomer unit, from the viewpoint of improving the pressure resistance of the hollow particles, the lower limit of the content of the reactive group-free monomer unit in 100 parts by mass of the crosslinkable monomer unit, is preferably 40 parts by mass or more, more preferably 50 parts by mass or more, and still more preferably 60 parts by mass or more. The upper limit is not particularly limited. For example, from the viewpoint of sufficiently containing the reactive group-containing monomer unit to improve the adhesion between the hollow particles and the resin, the upper limit is preferably 90 parts by mass or less, more preferably 85 parts by mass or less, and still more preferably 80 parts by mass or less.

From the viewpoint of improving the pressure resistance of the hollow particles, the crosslinkable monomer unit preferably contains the bifunctional crosslinkable monomer unit in combination with the trifunctional or higher-functional crosslinkable monomer unit.

When the crosslinkable monomer unit contains the bifunctional crosslinkable monomer unit in combination with the trifunctional or higher-functional crosslinkable monomer unit, the content of the bifunctional crosslinkable monomer unit in 100 parts by mass of the crosslinkable monomer unit, is not particularly limited. From the viewpoint of improving the pressure resistance of the hollow particles, the lower limit of the content is preferably 60 parts by mass or more, and more preferably 70 parts by mass or more. From the viewpoint of sufficiently containing the trifunctional or higher-functional crosslinkable monomer unit, the upper limit is preferably 90 parts by mass or less, and more preferably 85 parts by mass or less.

In the present disclosure, the crosslinkable monomer unit derived from the bifunctional crosslinkable monomer is referred to as the "bifunctional crosslinkable monomer unit", and the crosslinkable monomer unit derived from the trifunctional or higher-functional crosslinkable monomer is referred to as the "trifunctional or higher-functional crosslinkable monomer unit".

From the viewpoint of improving the pressure resistance of the hollow particles, the crosslinkable monomer unit also preferably contains a (meth)acrylic crosslinkable monomer unit. The polymerizable monomer which contains a (meth)acryloyl group as the polymerizable functional group has excellent reactivity. Accordingly, by use of the (meth) acrylic polymerizable monomer, the strength of the shell is improved, and the pressure resistance of the hollow particles is improved.

The (meth)acrylic crosslinkable monomer which contains a reactive group is preferably 2-hydroxy-3-methacryloyloxypropyl acrylate, 1,3-bis(methacryloyloxy)-2-propanol or glycerol diacrylate, and it is more preferably 2-hydroxy-3-methacryloyloxypropyl acrylate or 1,3-bis(methacryloyloxy)-2-propanol.

The bifunctional (meth)acrylic crosslinkable monomer which does not contain a reactive group is preferably ethylene glycol di(meth)acrylate or pentaerythritol di(meth)acrylate, and more preferably a bifunctional methacrylic crosslinkable monomer in which the polymerizable functional group is a methacryloyl group.

The trifunctional or higher-functional (meth)acrylic crosslinkable monomer which does not contain a reactive group is preferably trimethylolpropane tri(meth)acrylate or pentaerythritol tetra(meth)acrylate.

In the present disclosure, the (meth)acrylic crosslinkable monomer is required to be a crosslinkable monomer which contains at least one of a methacryloyl group and an acryloyl group as the polymerizable functional groups, and all the polymerizable functional groups of the crosslinkable monomer are preferably methacryloyl groups or acryloyl groups. The methacrylic crosslinkable monomer is a crosslinkable monomer in which the polymerizable functional groups contain at least one methacryloyl group and do not contain an acryloyl group, and all the polymerizable functional groups are preferably methacryloyl groups.

From the viewpoint of improving the pressure resistance of the hollow particles, the crosslinkable monomer unit also preferably contains a crosslinkable monomer unit derived from a vinyl-based crosslinkable monomer having a molecular weight of 250 or less and not containing a reactive group.

In the present disclosure, the vinyl-based crosslinkable monomer refers to a crosslinkable monomer in which all the polymerizable functional groups are vinyl groups, and the vinyl groups do not include a (meth)acryloyl group.

As the vinyl-based crosslinkable monomer having a molecular weight of 250 or less and not containing a reactive group, examples include, but are not limited to, divinylbenzene, divinylbiphenyl, divinylnaphthalene and diallyl phthalate. Of them, divinylbenzene is preferred.

From the viewpoint of improving the pressure resistance of the hollow particles, in 100 parts by mass of the crosslinkable monomer unit, the total content of the (meth)acrylic crosslinkable monomer unit and the crosslinkable monomer unit derived from the vinyl-based crosslinkable monomer having a molecular weight of 250 or less and not containing a reactive group, is preferably more than 60 parts by mass, more preferably 70 parts by mass or more, and still more preferably 75 parts by mass or more.

In the hollow particles of the present disclosure, the content of the crosslinkable monomer unit in 100 parts by mass of all the monomer units of the polymer is from 60 parts by mass to 100 parts by mass. From the viewpoint of improving the pressure resistance of the hollow particles, the lower limit of the content is preferably 65 parts by mass or more, more preferably 70 parts by mass or more, and still more preferably 75 parts by mass or more. When the polymer contains the non-crosslinkable monomer unit, the upper limit of the content of the crosslinkable monomer in 100 parts by mass of all the monomer units, is not particularly limited. From the viewpoint of fulfilling the function of the non-crosslinkable monomer unit, the upper limit may be 97 parts by mass or less, may be 95 parts by mass or less, may be 90 parts by mass or less, or may be 80 parts by mass or less.

(Non-crosslinkable monomer)

The polymer may further contain the non-crosslinkable monomer unit, to the extent that does not impair the effects of the present disclosure. When the polymer contains the crosslinkable monomer unit in combination with the non-crosslinkable monomer unit, the mechanical properties of the shell of the hollow particles may be improved.

The non-crosslinkable monomer may be a reactive group-containing monomer containing a reactive group, or it may be a reactive group-free monomer not containing a reactive group.

As the non-crosslinkable monomer, one kind of non-crosslinkable monomer or two or more kinds of non-crosslinkable monomers may be used.

As the non-crosslinkable monomer containing a reactive group, examples include, but are not limited to, a non-crosslinkable monomer containing a hydroxy group, such as 2-hydroxyethyl (meth)acrylate; a non-crosslinkable monomer containing an amino group, such as 2-(tert-butylamino)ethyl methacrylate and 4-vinylbenzylamine; a non-crosslinkable monomer containing an epoxy group, such as glycidyl (meth)acrylate and allyl glycidyl ether; a non-crosslinkable monomer containing a sulfo group, such as styrene sulfonate, an alkali metal salt thereof, sodium methacrylsulfonate, sodium isoprene sulfonate and 2-acrylamido-2-methylpropanesulfonate; a non-crosslinkable monomer containing a thiol group, such as allyl mercaptan; a non-crosslinkable monomer containing a phosphoric acid group, such as 2-(meth) acryloyloxyethyl acid phosphate; and a non-crosslinkable monomer containing an isocyanate group, such as 2-isocyanatoethyl (meth)acrylate and 2-(2-methacryloyloxyethyloxy)ethyl isocyanate. The non-crosslinkable monomer containing an epoxy group is used to introduce a hydroxy group to the surface of the hollow particles.

As with the crosslinkable monomer containing a reactive group, the non-crosslinkable monomer containing a reactive group is not limited to one preliminarily containing a reactive group as described above, and it may be one which can introduce a reactive group after polymerization reaction.

From the viewpoint of excellent reactivity, the non-crosslinkable monomer containing a reactive group is preferably a (meth)acrylic non-crosslinkable monomer.

As the non-crosslinkable monomer not containing a reactive group, examples include, but are not limited to, a (meth)acrylic non-crosslinkable monomer such as methyl (meth)acrylate, ethyl (meth)acrylate, butyl (meth)acrylate, 2-ethylhexyl (meth)acrylate and lauryl (meth)acrylate; an aromatic vinyl monomer such as styrene, vinyl toluene, $\alpha$-methylstyrene, p-methylstyrene, ethylvinylbenzene, ethylvinylbiphenyl and ethylvinylnaphthalene; and a monoolefin monomer such as ethylene, propylene, butylene, vinylcyclohexane, norbornene, tricyclododecene and 1,4-methano-1,4,4a,9a-tetrahydrofluorene.

From the viewpoint of excellent reactivity and ease of improving the mechanical properties of the shell, the non-crosslinkable monomer not containing a reactive group is preferably a (meth)acrylic non-crosslinkable monomer or an aromatic vinyl monomer. As the (meth)acrylic non-crosslinkable monomer, at least one kind selected from butyl acrylate and methyl methacrylate is more preferred. As the aromatic vinyl monomer, at least one kind selected from ethylvinylbenzene and styrene is more preferred.

The non-crosslinkable monomer unit is the reactive group-containing monomer unit, the reactive group-free monomer unit or a combination thereof, and it is not particularly limited. From the viewpoint of achieving both the adhesion of the hollow particles to the resin and the pressure resistance, the non-crosslinkable monomer unit preferably contains the reactive group-containing monomer unit.

When the non-crosslinkable monomer unit contains the reactive group-containing monomer unit, from the viewpoint of improving the adhesion between the hollow particles and the resin, the lower limit of the content of the reactive group-containing monomer unit in 100 parts by mass of the non-crosslinkable monomer unit, is preferably 80 parts by mass or more; it is more preferably 90 parts by mass or more; or it may be 100 parts by mass. The upper limit of the content is not particularly limited, and it may be 95 parts by mass or less, for example.

In the hollow particles of the present disclosure, the content of the non-crosslinkable monomer unit in 100 parts by mass of all the monomer units of the polymer, is from 0 part by mass to 40 parts by mass. From the viewpoint of suppressing a deterioration in the pressure resistance, the upper limit of the content is preferably 35 parts by mass or less, and more preferably 30 parts by mass or less. The lower limit of the content is not particularly limited. From the viewpoint of fulfilling the function of the non-crosslinkable monomer unit, the lower limit may be 3 parts by mass or more, may be 5 parts by mass or more, may be 10 parts by mass or more or more, or may be 20 parts by mass or more.

The content of the reactive group-containing monomer unit in 100 parts by mass of all the monomer units of the polymer, is appropriately controlled depending on the type of the reactive group-containing monomer, and it is not particularly limited. From the viewpoint of improving the adhesion between the hollow particles of the present disclosure and the resin, the lower limit of the content is preferably 10 parts by mass or more, more preferably 12 parts by mass or more, still more preferably 15 parts by mass or more, and even more preferably 20 parts by mass or more. The upper limit of the content is not particularly limited, and the polymer may be composed of the reactive group-containing monomer unit. For example, from the viewpoint of improving the pressure resistance of the hollow particles by containing the crosslinkable monomer unit not containing a reactive group, the upper limit is preferably 60 parts by mass or less, more preferably 50 parts by mass or less, and still more preferably 40 parts by mass or less.

From the viewpoint of improving the pressure resistance of the hollow particles, in 100 parts by mass of all the monomer units of the polymer, the total content of the (meth)acrylic polymerizable monomer unit and the crosslinkable monomer unit derived from the vinyl-based crosslinkable monomer having a molecular weight of 250 or less and not containing a reactive group, is preferably more than 60 parts by mass, more preferably 70 parts by mass or more, and still more preferably 75 parts by mass or more.

In the hollow particles, the content of the polymer is preferably 90% by mass or more, and more preferably 95% by mass or more, in the total solid content (100% by mass) of the shell. The pressure resistance of the hollow particles can be improved by controlling the content of the polymer to the lower limit value or more.

In the present disclosure, the solid component includes all components excluding a solvent, and a liquid polymerizable monomer and the like are included in the solid component.

[Polar component]

The shell of the hollow particles of the present disclosure may further contain a polar component. As the polar component, an organic acid, a metal salt thereof, and a polar resin described below can be used.

Details of the polar component are as described below in the method for producing the hollow particles of the present disclosure.

The presence and content of the polar component in the shell of the hollow particles can be determined by pyrolysis-gas chromatography, for example.

When the shell of the hollow particles of the present disclosure contains an organic acid or a metal salt thereof as the polar component, the total content of the organic acid and metal salt thereof in the shell is preferably from 0.0001% by mass to 0.1% by mass, and more preferably from 0.001% by mass to 0.01% by mass.

When the shell of the hollow particles of the present disclosure contains a polar resin as the polar component, the content of the polar resin in the shell is preferably from 0.1% by mass to 10.0% by mass, and more preferably from 0.3% by mass to 8.0% by mass.

When the content of the polar component is equal to or more than the lower limit value, the thickness of the shell of the hollow particles can be easily controlled, and the pressure resistance of the hollow particles can be improved. On the other hand, when the content of the polar solvent is equal to or less than the upper limit value, a decrease in the ratio of the content of the polymer can be suppressed. Accordingly, a deterioration in the strength of the shell can be suppressed, and a deterioration in the pressure resistance of the hollow particles can be suppressed.

[Properties of the hollow particles]

The void ratio of the hollow particles of the present disclosure is 50% or more, and preferably 60% or more. When the void ratio is equal to or more than the lower limit value, the hollow particles obtain excellent lightness in weight, excellent heat insulation properties and so on. The upper limit of the void ratio of the hollow particles of the present disclosure is not particularly limited. From the viewpoint of suppressing a deterioration in the strength of the hollow particles and improving the pressure resistance, the upper limit is preferably 90% or less, more preferably 80% or less, and still more preferably 70% or less.

The void ratio of the hollow particles of the present disclosure can be calculated from the apparent density $D_1$ and true density $D_0$ of the hollow particles.

A method for measuring the apparent density $D_1$ of the hollow particles is as follows. First, approximately 30 cm³ of the hollow particles are introduced into a measuring flask with a volume of 100 cm³, and the mass of the introduced hollow particles is precisely weighed. Next, the measuring flask in which the hollow particles are introduced, is precisely filled with isopropanol up to the marked line while care is taken so that air bubbles do not get in. The mass of the isopropanol added to the measuring flask is precisely weighed, and the apparent density $D_1$ (g/cm³) of the hollow particles is calculated by the following formula (I).

Apparent density $D_1$ = [Mass of the hollow particles]/(100-[Mass of the isopropanol]/[Specific gravity of the isopropanol at the measuring temperature])          Formula (I)

The apparent density $D_1$ is equivalent to the specific gravity of the whole hollow particle in the case where the hollow portion is regarded as a part of the hollow particle.

A method for measuring the true density $D_0$ of the hollow particles is as follows. The hollow particles are pulverized in advance; approximately 10 g of the pulverized hollow particles are introduced into a measuring flask with a volume of 100 cm³; and the mass of the introduced pulverized particles is precisely weighed. After that, similarly to the measurement of the apparent density mentioned above, isopropanol is added to the measuring flask; the mass of the isopropanol is precisely weighed; and the true density $D_0$ (g/cm³) of the hollow particles is calculated by the following formula (II).

True density $D_0$ = [Mass of the pulverized hollow particles]/(100-[Mass of the isopropanol]/[Specific gravity of the isopropanol at the measuring temperature])　　　Formula (II)

The true density $D_0$ is equivalent to the specific gravity of the shell portion alone of the hollow particle. As is clear from the measurement method mentioned above, when calculating the true density $D_0$, the hollow portion is not regarded as a part of the hollow particle.

The void ratio (%) of the hollow particles is calculated by the following formula (III) where $D_1$ is the apparent density of the hollow particles and $D_0$ is the true density thereof.

Void ratio (%) = 100-([Apparent density $D_1$]/[True density $D_0$])$\times$100　　　Formula (III)

The volume average particle diameter of the hollow particles of the present disclosure is not particularly limited. The lower limit of the volume average particle diameter is preferably 1 $\mu$m or more, more preferably 5 $\mu$m or more, and still more preferably 8 $\mu$m or more, from the viewpoint of improving the pressure resistance and from the point of view that since the aggregability of the hollow particles is lowered, excellent dispersibility can be exerted. The upper limit is preferably 20 $\mu$m or less, more preferably 15 $\mu$m or less, and still more preferably 13 $\mu$m or less, from the viewpoint of suppressing shell thickness non-uniformity and suppressing a deterioration in the pressure resistance.

The particle size distribution (volume average particle diameter (Dv)/number average particle diameter (Dn)) of the hollow particles may be 1.1 or more and 2.5 or less, for example. When the particle size distribution is 2.5 or less, hollow particles such that compressive strength slightly varies between the hollow particles, can be obtained. When the particle size distribution is 2.5 or less, a product having uniform thickness can be produced in the case of producing a molded body in a sheet form, for example.

The volume average particle diameter (Dv) and number average particle diameter (Dn) of the hollow particles can be found as follows, for example. The particle diameter of each of the hollow particles is measured with a particle size distribution measuring apparatus; the number average and volume average of the particle diameters are calculated; and the obtained values can be used as the number average particle diameter (Dn) and volume average particle diameter (Dv) of the hollow particles. The particle size distribution is found by dividing the volume average particle diameter by the number average particle diameter.

The shape of the hollow particles of the present disclosure is not particularly limited, as long as the hollow portion is formed in the interior. A spherical shape is preferable from the viewpoint of pressure resistance.

The hollow particles of the present disclosure may have one or two or more hollow portions. From the viewpoint of maintaining good balance between high void ratio and mechanical strength, the hollow particles preferably have only one hollow portion. The shell of the hollow particles of the present disclosure and, when the hollow particles have two or more hollow portions, a partition separating the adjacent hollow portions from each other may be porous. From the viewpoint of suppressing a deterioration in pressure resistance, the shell and the partition are preferably solid.

The average circularity of the hollow particles of the present disclosure is preferably from 0.95 to 1.00, and more preferably from 0.97 to 1.00. The term "circularity" is defined as a value obtained by dividing the perimeter of a circle having the same area as the projected area of a particle image, by the perimeter of the projected image of the particle. Also in the present disclosure, the term "average circularity" is used as a simple method for quantitatively representing the shape of the particles. The average circularity is 1 when the hollow particles are perfectly spherical, and it gets smaller as the surface shape of the hollow particles becomes more complex.

An example of the image of the shape of the hollow particles of the present disclosure, is a bag made of a thin film and inflated with gas. A cross-section of the bag is like the hollow particle 100 shown in the diagram (5) of FIG. 1. In this example, one thin film is provided on the outside, and the interior is filled with gas.

The shape of the particles can be determined by SEM or TEM, for example.

Impurity particles are likely to be mixed in with conventional hollow particles. The impurity particles are particles with cracking, chipping or holes about the size of 1 $\mu$m or more or at least 5% of the particle diameter.

In the hollow particles of the present disclosure, the amount of the impurity particles is reduced. The reason for the suppression of the cracking, chipping and holes of the shell is presumed as follows: since the hollow particles of the present disclosure are produced by use of the polymerizable monomer containing a highly polar reactive group, precipitation of the polymer from the hydrophobic solvent and shelling of the polymer easily and uniformly proceed in the polymerization step, thereby suppressing the cracking, chipping, hole generation, etc., of the shell. In the hollow particles of the present disclosure, when the total of the number of the hollow particles and that of the impurity particles is defined as 100%, the percentage of the impurity particles is preferably 5% or less, more preferably 4% or less, still more preferably 2% or less, and particularly preferably 0%.

The percentage of the impurity particles is obtained as the number of the impurity particles included in randomly selected 100 particles, by observing the hollow particles with a field emission-scanning electron microscope (FE-SEM) at a viewing angle at a magnification of 1000x.

2. Method for producing the hollow particles

The method for producing the hollow particles of the present disclosure is not particularly limited, as long as it is a method that can produce the above-described hollow particles of the present disclosure. For example, the hollow particles of the present disclosure can be produced by the emulsion polymerization method or the suspension polymerization method. The method for producing the hollow particles of the present disclosure is preferably the suspension polymerization method, from the viewpoint of ease of producing the hollow particles having the preferred volume average particle diameter described above.

As the method for producing the hollow particles of the present disclosure by suspension polymerization, examples include, but are not limited to, the method including the following steps: preparing a mixture liquid containing a polymerizable monomer, a hydrophobic solvent, a dispersion stabilizer and an aqueous medium, suspending the mixture liquid to prepare a suspension in which droplets of a monomer composition containing the polymerizable monomer and the hydrophobic solvent are dispersed in the aqueous medium, subjecting the suspension to a polymerization reaction to prepare a precursor composition containing precursor particles which have the hollow portion surrounded by the shell containing the resin and which include the hydrophobic solvent in the hollow portion, and removing the hydrophobic solvent from the precursor particles.

In the present disclosure, the hollow particles having the hollow portion filled with the hydrophobic solvent, may be considered as the intermediate of the hollow particles in which the hollow portion is filled with gas, and they may be referred to as the "precursor particles". Also in the present disclosure, the "precursor composition" means a composition containing the precursor particles.

The method for producing the hollow particles follows the following basic technique: by carrying out the suspension treatment of the mixture liquid containing the polymerizable monomer, the hydrophobic solvent, the dispersion stabilizer and the aqueous medium, phase separation occurs between the polymerizable monomer and the hydrophobic solvent. Accordingly, the suspension in which droplets are dispersed in the aqueous medium is prepared, the droplets having a distribution structure such that the polymerizable monomer is distributed on the surface side and the hydrophobic solvent is distributed in the center. By subjecting the suspension to a polymerization reaction, the surface of the droplets is cured to form the hollow particles having the hollow portion filled with the hydrophobic solvent.

The method for producing the hollow particles includes the steps of preparing the mixture liquid, preparing the suspension, subjecting the suspension to the polymerization reaction, and removing the solvent. The method may further include other steps. As far as technically possible, two or more of the above steps and other additional steps may be simultaneously carried out as one step, or their order may be changed and then they may be carried out in that order. For example, the preparation and suspension of the mixture liquid may be simultaneously carried out in one step (e.g., the mixture liquid may be suspended while adding the materials for the mixture liquid).

A preferred embodiment of the method for producing the hollow particles may be a production method including the following steps.

(1) Mixture liquid preparation step

The mixture liquid preparation step includes preparing a mixture liquid containing a polymerizable monomer, a hydrophobic solvent, a dispersion stabilizer and an aqueous medium.

(2) Suspension step

The suspension step includes suspending the mixture liquid to prepare a suspension in which droplets of a monomer composition containing the polymerizable monomer and the hydrophobic solvent are dispersed in the aqueous medium.

(3) Polymerization step

The polymerization step includes subjecting the suspension to a polymerization reaction to prepare a precursor composition containing precursor particles which have the hollow portion surrounded by the shell containing the resin and which include the hydrophobic solvent in the hollow portion.

(4) Solid-liquid separation step

The solid-liquid separation step includes performing solid-liquid separation of the precursor composition to obtain the precursor particles including the hydrophobic solvent in the hollow portion.

(5) Solvent removal step

The solvent removal step includes removing the hydrophobic solvent from the precursor particles to obtain the hollow particles.

FIG. 1 is a schematic diagram showing an example of the method for producing the hollow particles of the present disclosure. The diagrams (1) to (5) in FIG. 1 correspond to the steps (1) to (5) described above, respectively. White arrows between the diagrams indicate the order of the steps. FIG. 1 is merely a schematic diagram for description, and the production method is not limited to the method shown in FIG. 1. Further, the structures, dimensions and shapes of materials used for the production methods of the present disclosure are not limited to the structures, dimensions and shapes of various materials shown in these diagrams.

The diagram (1) of FIG. 1 is a schematic cross-sectional view showing an embodiment of the mixture liquid in the mixture liquid preparation step. As shown in the diagram, the mixture liquid contains an aqueous medium 1 and a low polarity material 2 dispersed in the aqueous medium 1. Here, the low polarity material 2 means a material that has low polarity and is less likely to mix with the aqueous medium 1. In the present disclosure, the low polarity material 2 contains the polymerizable monomer and the hydrophobic solvent.

The diagram (2) of FIG. 1 is a schematic cross-sectional view showing an embodiment of the suspension in the suspension preparation step. The suspension contains the aqueous medium 1 and a droplet 10 of the monomer composition dispersed in the aqueous medium 1. The droplet 10 of the monomer composition contains the polymerizable monomer and the hydrophobic solvent, and their distribution in the droplet is not uniform. The droplet 10 of the monomer composition has the following structure: phase separation occurs between a hydrophobic solvent 4a and a material 4b containing the polymerizable monomer and not containing the hydrophobic solvent; the hydrophobic solvent 4a is distributed in the center; the material 4b not containing the hydrophobic solvent is distributed on the surface side; and the dispersion stabilizer (not shown) is on the surface.

The diagram (3) of FIG. 1 is a schematic cross-sectional view showing an embodiment of the precursor composition containing the precursor particles which have the hollow portion surrounded by the shell containing the resin and which include the hydrophobic solvent in the hollow portion. The precursor composition contains the aqueous medium 1 and the precursor particle (a precursor particle 20) which includes the hydrophobic solvent 4a in the hollow portion. A shell 5 forming the outer surface of the precursor particle 20 is formed by polymerization of the polymerizable monomer in the droplet 10 of the monomer composition, and the shell 5 contains the polymer of the polymerizable monomer as the resin.

The diagram (4) of FIG. 1 is a schematic cross-sectional view showing an embodiment of the precursor particle after the solid-liquid separation step. The diagram (4) of FIG. 1 shows a state where the aqueous medium 1 has been removed from the state shown in the diagram (3) of FIG. 1.

The diagram (5) of FIG. 1 is a schematic cross-sectional view showing an embodiment of the hollow particle after the solvent removal step. The diagram (5) of FIG. 1 shows a state where the hydrophobic solvent 4a has been removed from the state shown in the diagram (4) of FIG. 1. By the removal of the hydrophobic solvent from the precursor particle, a hollow particle 100 having a gas-filled hollow portion 6 in the interior of the shell 5, is obtained.

Hereinbelow, the five steps described above and other steps are described in order.

(1) Mixture liquid preparation step

The mixture liquid preparation step includes preparing the mixture liquid containing the polymerizable monomer, the hydrophobic solvent, the dispersion stabilizer and the aqueous medium. The mixture liquid may further contain other materials to the extent that does not impair the effects of the present disclosure.

The mixture liquid preferably further contains a polymerization initiator, and the polymerization initiator is preferably an oil-soluble polymerization initiator.

The materials for the mixture liquid will be described in the order of (A) the polymerizable monomer, (B) the hydrophobic solvent, (C) the polymerization initiator, (D) the dispersion stabilizer, (E) the aqueous medium and (F) other materials.

(A) Polymerizable monomer

In the production method, the polymerizable monomer in the mixture liquid contains at least the crosslinkable monomer. It may further contain the non-crosslinkable monomer to the extent that does not impair the effects of the present disclosure.

As the crosslinkable monomer and the non-crosslinkable monomer, those mentioned above may be used.

The crosslinkable monomer in the mixture liquid is a reactive group-containing monomer containing a reactive group, a reactive group-free monomer not containing a reactive group, or a combination thereof, and it is not particularly limited.

From the viewpoint of improving the pressure resistance, the crosslinkable monomer in the mixture liquid preferably contains the reactive group-free monomer. When the second polymerization reaction is performed by adding the reactive group-containing monomer as the second polymerizable monomer in the below-described polymerization step, the polymerizable monomer in the mixture liquid may be free of the reactive group-containing monomer. From the viewpoint of efficiently introducing the reactive group, however, the polymerizable monomer in the mixture liquid preferably contains the reactive group-containing monomer.

When the crosslinkable monomer in the mixture liquid contains the reactive group-containing monomer, the lower limit of the content of the reactive group-containing monomer in 100 parts by mass of the crosslinkable monomer is preferably 10 parts by mass or more, more preferably 12 parts by mass or more, still more preferably 15 parts by mass or more, and even more preferably 20 parts by mass or more, from the viewpoint of improving the adhesion between the hollow particles and the resin and improving the pressure resistance of the hollow particles. The upper limit of the content is not particularly limited, and the crosslinkable monomer may be composed of the reactive group-containing monomer. From the viewpoint of sufficiently containing the reactive group-free monomer to improve the pressure resistance of the hollow particles, the upper limit is preferably 60 parts by mass or less, more preferably 50 parts by mass or less, and still more preferably 40 parts by mass or less.

When the crosslinkable monomer in the mixture liquid contains the reactive group-free monomer, the lower limit of the content of the reactive group-free monomer in 100 parts by mass of the crosslinkable monomer is preferably 40 parts by mass or more, more preferably 50 parts by mass or more, and still more preferably 60 parts by mass or more, from the viewpoint of improving the pressure resistance of the hollow particles. The upper limit of the content is not particularly limited. For example, from the viewpoint of sufficiently containing the reactive group-containing monomer to improve the adhesion between the hollow particles and the resin, the upper limit is preferably 90 parts by mass or less, more preferably 85 parts by mass or less, and still more preferably 80 parts by mass or less.

From the viewpoint of improving the pressure resistance of the hollow particles, the crosslinkable monomer in the mixture liquid preferably contains the bifunctional crosslinkable monomer in combination with the trifunctional or higher-functional crosslinkable monomer.

When the crosslinkable monomer in the mixture liquid contains the bifunctional crosslinkable monomer in combination with the trifunctional or higher-functional crosslinkable monomer, the content of the bifunctional crosslinkable monomer in 100 parts by mass of the crosslinkable monomer is not particularly limited. From the viewpoint of improving the pressure resistance of the hollow particles, the lower limit of the content of the bifunctional crosslinkable monomer is preferably 60 parts by mass or more, and more preferably 70 parts by mass or more. From the viewpoint of sufficiently containing the trifunctional or higher-functional crosslinkable monomer, the upper limit of the content is preferably 90 parts by mass or less, and more preferably 85 parts by mass or less.

Also, the crosslinkable monomer in the mixture liquid preferably contains the (meth)acrylic crosslinkable monomer, from the viewpoint of improving the reactivity of the crosslinkable monomer and improving the pressure resistance of the hollow particles.

Also, the crosslinkable monomer in the mixture liquid preferably contains the vinyl-based crosslinkable monomer having a molecular weight of 250 or less and not containing a reactive group, from the viewpoint of improving the pressure resistance of the hollow particles.

In 100 parts by mass of the crosslinkable monomer contained in the mixture liquid, the total content of the (meth) acrylic crosslinkable monomer and the vinyl-based crosslinkable monomer having a molecular weight of 250 or less and not containing a reactive group, is not particularly limited. From the viewpoint of improving the pressure resistance of the hollow particles, the total content is preferably more than 60 parts by mass, more preferably 70 parts by mass or more, and still more preferably 75 parts by mass or more.

With respect to the total mass (100 parts by mass) of the polymerizable monomer in the mixture liquid, the content of the crosslinkable monomer is preferably 60 parts by mass or more, more preferably 65 parts by mass or more, still more preferably 70 parts by mass or more, and even more preferably 75 parts by mass or more, from the viewpoint of improving the pressure resistance of the hollow particles. When the polymerizable monomer in the mixture liquid contains the non-crosslinkable monomer, the upper limit of the content of the crosslinkable monomer is not particularly limited, and it may be 100 parts by mass. From the viewpoint of fulfilling the function of the non-crosslinkable monomer, it may be 97 parts by mass or less, may be 95 parts by mass or less, may be 90 parts by mass or less, or may be 80 parts by mass or less.

When the polymerizable monomer in the mixture liquid contains the non-crosslinkable monomer, the non-crosslinkable monomer in the mixture liquid is the reactive group-containing monomer, the reactive group-free monomer or a combination thereof and is not particularly limited. From the viewpoint of achieving both the adhesion to the resin of the hollow particles and the pressure resistance, the non-crosslinkable monomer in the mixture liquid preferably contains the reactive group-containing monomer.

When the non-crosslinkable monomer in the mixture liquid contains the reactive group-containing monomer, from the viewpoint of improving the adhesion between the hollow particles and the resin, the lower limit of the content of the reactive group-containing monomer in 100 parts by mass of the non-crosslinkable monomer is preferably 80 parts by mass or more, and more preferably 90 parts by mass or more, or it may be 100 parts by mass. The upper limit of the content is not particularly limited and may be 95 parts by mass or less, for example.

When the polymerizable monomer in the mixture liquid contains the non-crosslinkable monomer, with respect to 100 parts by mass of the polymerizable monomer in the mixture liquid, the content of the non-crosslinkable monomer is preferably 40 parts by mass or less, more preferably 35 parts by mass or less, and still more preferably 30 parts by mass or less, from the viewpoint of sufficiently containing the crosslinkable monomer. The content of the non-crosslinkable monomer may be 0 part by mass. However, from the viewpoint of fulfilling the function of the non-crosslinkable monomer, it may be 3 parts by mass or more, may be 5 parts by mass or more, may be 10 parts by mass or more, or may be 20 parts by mass or more.

The content of the polymerizable monomer in the mixture liquid is not particularly limited. From the viewpoint of improving the strength of the shell and improving the pressure resistance of the hollow particles, the content of the polymerizable monomer is preferably 90% by mass or more, and more preferably 95% by mass or more, with respect to the total mass (100% by mass) of a solid component obtained by excluding the hydrophobic solvent from the material for the oil phase in the mixture liquid.

(B) Hydrophobic solvent

The hydrophobic solvent used in the above-described production method is a non-polymerizable, sparingly water-soluble organic solvent.

The hydrophobic solvent serves as a spacer material for forming the hollow portion in the interior of particles. In the suspension step described later, the suspension in which the droplets of the monomer composition containing the hydrophobic solvent are dispersed in the aqueous medium, is obtained. In the suspension step, phase separation occurs in the droplets of the monomer composition. As a result, the hydrophobic solvent with low polarity is likely to collect in the interior of droplets of the polymerizable monomer. In the end, according to their respective polarities, the hydrophobic solvent is distributed in the interior of the droplets of the monomer composition, and the material not containing the hydrophobic solvent is distributed at the periphery of the droplets of the monomer composition.

Then, in the polymerization step described later, an aqueous dispersion containing the hollow particles including the hydrophobic solvent, is obtained. That is, since the hydrophobic solvent collects in the interior of the particles, the hollow portion filled with the hydrophobic solvent is formed in the interior of the obtained precursor particles.

In the above-described production method, the hydrophobic solvent is appropriately selected depending on the type of the polymerizable monomer, and it is not particularly limited. As the hydrophobic solvent, a conventionally-known hydrophobic solvent may be used. As the hydrophobic solvent, examples include, but are not limited to, esters such as ethyl acetate and butyl acetate; ether esters such as propylene glycol monomethyl ether acetate and propylene glycol monoethyl ether acetate; aromatic hydrocarbons such as benzene, toluene and xylene; and aliphatic hydrocarbons such as butane, pentane, hexane, methylhexane, cyclohexane, methylcyclohexane, heptane and octane. These hydrophobic solvents may be used alone or in combination of two or more kinds.

From the point of view that the hollow portion is easily formed in the interior of the particles and the thickness of the shell easily becomes uniform, the hydrophobic solvent is preferably at least one kind of hydrocarbon solvent selected from the group consisting of aromatic hydrocarbons and aliphatic hydrocarbons, more preferably aliphatic hydrocarbons, and still more preferably saturated aliphatic hydrocarbons.

For the hydrocarbon solvent, the ratio of the saturated hydrocarbon solvent is preferably 50% by mass or more, more preferably 60% by mass or more, and still more preferably 80% by mass or more. When the ratio of the saturated hydrocarbon solvent is equal to or more than the lower limit value, sufficient phase separation occurs in the droplets of the monomer composition. As a result, hollow particles having only one hollow portion can be easily obtained, and the production of porous particles can be suppressed.

The hydrocarbon solvent is preferably a hydrocarbon solvent containing 4 to 7 carbon atoms. A hydrocarbon compound containing 4 to 7 carbon atoms can be easily included in the precursor particles in the polymerization step and can be easily removed from the precursor particles in the solvent removal step. Among hydrocarbon compounds containing 4 to 7 carbon atoms, a hydrocarbon solvent containing 5 or 6 carbon atoms is preferred, and at least one kind selected from hexane and cyclohexane is particularly preferred. Also, in the case of using the vinyl-based crosslinkable monomer such as divinylbenzene as the crosslinkable monomer, hexane is preferably used. In the case of using only the (meth)acrylic crosslinkable monomer, cyclohexane is preferably used.

The boiling point of the hydrophobic solvent is not particularly limited. From the viewpoint of ease of removal in the solvent removal step described later, the boiling point of the hydrophobic solvent is preferably 130°C or less, and more preferably 120°C or less. On the other hand, the boiling point of the hydrophobic solvent is preferably 50°C or more, and more preferably 60°C or more, from the point of view that the hydrophobic solvent can be easily included in the precursor particles.

When the hydrophobic solvent is a mixed solvent containing several kinds of hydrophobic solvents and it has several boiling points, the boiling point of the solvent having the highest boiling point among the solvents contained in the mixed solvent, is preferably equal to or less than the upper limit value, and the boiling point of the solvent having the lowest boiling point among the solvents contained in the mixed solvent, is preferably equal to or more than the lower limit value.

The relative permittivity at 20°C of the hydrophobic solvent used in the above-described production method, is preferably 3 or less. The relative permittivity is one of the benchmarks of the level of the polarity of a compound. In the case where the relative permittivity of the hydrophobic solvent is 3 or less and sufficiently small, it is considered that phase separation progresses rapidly in the droplets of the polymerizable monomer and the hollow portion is easily formed.

Examples of hydrophobic solvents having a relative permittivity at 20°C of 3 or less, are as follows. The inside of the parentheses is the value of relative permittivity.

Pentane (1.8), hexane (1.9), heptane (1.9), octane (1.9), cyclohexane (2.0), benzene (2.3) and toluene (2.4)

For the relative permittivity at 20°C, values written in known literatures (for example, the Chemical Society of Japan, as editor, "Kagaku Binran, Kiso Hen, Kaitei 4 Ban", pp. II-498 to II-503, published by Maruzen Publishing Co., Ltd. on September 30, 1993) and other technical information may be used as reference. Examples of the method of measuring the relative permittivity at 20°C include a relative permittivity test that is in conformity with 23 of JIS C 2101:1999 and is performed at the measuring temperature set to 20°C.

The void ratio of the hollow particles can be controlled by changing the amount of the hydrophobic solvent in the mixture liquid. In the suspension step described later, the polymerization reaction progresses while oil droplets containing the crosslinkable monomer and so on include the hydrophobic solvent. Accordingly, as the content of the hydrophobic solvent increases, the void ratio of the obtained hollow particles tends to increase.

In the present disclosure, with respect to 100 parts by mass of the polymerizable monomer, the content of the hydrophobic solvent in the mixture liquid is preferably 50 parts by mass or more and 500 parts by mass or less, from the following viewpoints: the particle diameter of the hollow particles is easily controlled; the void ratio is easily increased while maintaining the strength of the hollow particles; and the amount of the residual hydrophobic solvent in the hollow particles is easily reduced. With respect to 100 parts by mass of the polymerizable monomer, the content of the hydrophobic solvent in the mixture liquid is more preferably 60 parts by mass or more and 400 parts by mass or less, and still more preferably 70 parts by mass or more and 300 parts by mass or less.

(C) Polymerization initiator

In the above-described production method, the mixture liquid preferably contains an oil-soluble polymerization initiator as the polymerization initiator. In the suspension polymerization method using the oil-soluble polymerization initiator, the oil-soluble polymerization initiator generates radicals in the interior of the droplets of the monomer composition. Accordingly, the precursor particles having a target particle diameter can be produced without excessively growing the droplets. Also in the suspension polymerization method using the oil-soluble polymerization initiator, there is no opportunity for the polymerization initiator to come into contact with the polymerizable monomer dispersed in the aqueous medium. Accordingly, the subgeneration of surplus resin particles (e.g., solid particles having a relatively small particle diameter) in addition to the target resin particles having the hollow portion, can be suppressed.

The oil-soluble polymerization initiator is not particularly limited, as long as it is a lipophilic one having a solubility in water at 25°C of 2 g/L or less. As the oil-soluble polymerization initiator, examples include, but are not limited to, benzoyl peroxide, lauroyl peroxide, t-butyl peroxy-2-ethylhexanoate, 2,2'-azobis(2,4-dimethylvaleronitrile), azobis(isobutyronitrile) and 2,2'-azobis(4-methoxy-2,4-dimethylvaleronitrile).

With respect to 100 parts by mass of the polymerizable monomer in the mixture liquid, the content of the polymerization initiator is preferably from 0.1 parts by mass to 10 parts by mass, more preferably from 0.5 parts by mass to 7 parts by mass, and still more preferably from 1 part by mass to 5 parts by mass. When the content of the polymerization initiator is within the above range, a polymerization reaction can progress sufficiently; the polymerization initiator is less likely to remain after the polymerization reaction is completed; and an unexpected side reaction is less likely to progress.

(D) Dispersion stabilizer

The dispersion stabilizer is an agent for dispersing the droplets of the monomer composition in the aqueous medium in the suspension step. The dispersion stabilizer may be an organic water-soluble polymer stabilizer, an inorganic water-soluble polymer stabilizer, or an inorganic dispersion stabilizer. In the present disclosure, an inorganic dispersion stabilizer is preferably used as the dispersion stabilizer, from the point of view that the particle diameter of the droplets can be easily controlled in the suspension and the particle size distribution of the obtained hollow particles can be sharp, and that an excessive decrease in the shell thickness is suppressed, and a deterioration in the pressure resistance of the hollow particles is suppressed.

As the inorganic dispersion stabilizer, examples include, but are not limited to, inorganic compounds including a sulfate such as barium sulfate and calcium sulfate; a carbonate such as barium carbonate, calcium carbonate and magnesium carbonate; a phosphate such as calcium phosphate; a metal oxide such as aluminum oxide and titanium oxide; a metal hydroxide such as aluminum hydroxide, magnesium hydroxide, calcium hydroxide, barium hydroxide and iron (II) hydroxide; and silicon dioxide. These inorganic dispersion stabilizers may be used alone or in combination of two or more kinds.

The inorganic dispersion stabilizer is preferably a sparingly water-soluble inorganic dispersion stabilizer, more preferably a sparingly water-soluble metal salt such as the above-mentioned sulfate, carbonate, phosphate and metal hydroxide, still more preferably a metal hydroxide, and particularly preferably a magnesium hydroxide.

In the present disclosure, the sparingly water-soluble inorganic dispersion stabilizer is preferably an inorganic compound such that the solubility in 100 g of water is 0.5 g or less. The sparingly water-soluble metal salt is preferably an inorganic metal salt such that the solubility in 100 g of water is 0.5 g or less.

In the present disclosure, the sparingly water-soluble inorganic dispersion stabilizer is particularly preferably used in the form of colloidal particles being dispersed in the aqueous medium, that is, in the form of a colloidal dispersion containing the sparingly water-soluble, inorganic dispersion stabilizer colloidal particles. Accordingly, the particle size distribution of the droplets of the monomer composition can be sharp; moreover, the amount of the residual inorganic dispersion stabilizer in the obtained hollow particles can be easily reduced by washing.

The colloidal dispersion containing the sparingly water-soluble inorganic dispersion stabilizer colloidal particles can be prepared by, for example, reacting at least one selected from alkali metal hydroxide salts and alkaline earth metal hydroxide salts with a water-soluble polyvalent metal salt, which is not an alkaline earth metal hydroxide salt, in the aqueous medium.

As the alkali metal hydroxide salts, examples include, but are not limited to, lithium hydroxide, sodium hydroxide and potassium hydroxide. As the alkaline earth metal hydroxide salts, examples include, but are not limited to, barium hydroxide and calcium hydroxide.

The water-soluble polyvalent metal salt is required to be a water-soluble polyvalent metal salt other than compounds corresponding to the above-mentioned alkaline earth metal hydroxide salts. As the polyvalent metal salt, examples include, but are not limited to, magnesium metal salts such as magnesium chloride, magnesium phosphate and magnesium sulfate; calcium metal salts such as calcium chloride, calcium nitrate, calcium acetate and calcium sulfate; aluminum metal salts such as aluminum chloride and aluminum sulfate; barium salts such as barium chloride, barium nitrate and barium acetate; and zinc salts such as zinc chloride, zinc nitrate and zinc acetate. Among them, magnesium metal salts, calcium metal salts and aluminum metal salts are preferred; magnesium metal salts are more preferred; and magnesium chloride is particularly preferred. These water-soluble polyvalent metal salts may be used alone or in combination of two or more kinds.

The method for reacting the water-soluble polyvalent metal salt with the at least one selected from alkali metal hydroxide salts and alkaline earth metal hydroxide salts in the aqueous medium, is not particularly limited. As the method, examples include, but are not limited to, mixing an aqueous solution of the water-soluble polyvalent metal salt and an aqueous solution of the at least one selected from alkali metal hydroxide salts and alkaline earth metal hydroxide salts.

Colloidal silica may be also used as the colloidal dispersion containing the sparingly water-soluble inorganic dispersion stabilizer colloidal particles.

As the organic water-soluble polymer stabilizer, examples include, but are not limited to, polyvinyl alcohol, polycarboxylic acid, celluloses (e.g., hydroxyethyl cellulose, carboxymethyl cellulose) and polyvinylpyrrolidone.

As the inorganic water-soluble polymeric compound, examples include, but are not limited to, sodium tripolyphosphate.

The content of the dispersion stabilizer is not particularly limited. With respect to the total mass (100 parts by mass) of the polymerizable monomer and the hydrophobic solvent, the content of the dispersion stabilizer is preferably from 0.5 parts by mass to 10 parts by mass, and more preferably from 1.0 part by mass to 8.0 parts by mass. When the content of the dispersion stabilizer is equal to or more than the lower limit value, the droplets of the monomer composition can be sufficiently dispersed in the suspension so that they do not join together. On the other hand, when the content of the dispersion stabilizer is equal to or less than the upper limit value, an increase in the viscosity of the suspension is prevented in the formation of the droplets, and a problem such that a droplet forming machine is clogged with the suspension, can be avoided.

With respect to 100 parts by mass of the aqueous medium, the content of the dispersion stabilizer is generally 2 parts by mass or more and 15 parts by mass or less, and preferably 3 parts by mass or more and 8 parts by mass or less.

(E) Aqueous medium

In the present disclosure, the term "aqueous medium" means a medium selected from the group consisting of water, a hydrophilic solvent and a mixture thereof.

The hydrophilic solvent in the present disclosure is not particularly limited, as long as it is one that mixes with water sufficiently and does not develop phase separation. Examples of the hydrophilic solvent include alcohols such as methanol and ethanol; tetrahydrofuran (THF); and dimethyl sulfoxide (DMSO).

Among the aqueous media, water is preferably used in terms of its high polarity. From the viewpoint of decreasing the content of the metal in the shell, the water is preferably ion-exchanged water.

When a mixture of water and a hydrophilic solvent is used, from the viewpoint of forming the droplets of the monomer composition, it is important that the polarity of the entire mixture is not too low. In this case, for example, the mass ratio between water and the hydrophilic solvent (water : hydrophilic solvent) may be set to 99:1 to 50:50.

(F) Other materials

The mixture liquid may further contain other materials that are different from the above-mentioned materials (A) to (E), to the extent that does not impair the effects of the present disclosure.

As another material, the mixture liquid may contain a polar component. When the mixture liquid contains the polar component, The thickness of the shell of the obtained hollow particles can be appropriately controlled.

As the polar component, for example, an organic acid, a metal salt thereof, or the below-described polar resin may be used.

In the present disclosure, the polar resin is a polymer containing a repeating unit which contains a heteroatom. As the polar resin, examples include, but are not limited to, an acrylic resin, a polyester resin, and a vinyl resin containing a heteroatom.

In general, the polar resin has a water solubility of less than 1 g/L.

The polar resin may be a homopolymer or copolymer of a heteroatom-containing monomer, or it may be a copolymer of a heteroatom-containing monomer and a heteroatom-free monomer. When the polar resin is a copolymer of a heteroatom-containing monomer and a heteroatom-free monomer, from the viewpoint of easily controlling the particle diameter of the hollow particles, in 100% by mass of all the repeating units constituting the copolymer, the amount of the heteroatom-containing monomer unit is preferably 50% by mass or more, more preferably 70% by mass or more, and still more preferably 90% by mass or more.

The number average molecular weight (Mn) of the polar resin is not particularly limited. The polystyrene equivalent number average molecular weight (Mn) of the polar resin measured by gel permeation chromatography (GPC) using tetrahydrofuran is preferably in a range of 3000 or more and 20000 or less, more preferably in a range of 4000 or more and 17000 or less, and still more preferably in a range of 6000 or more and 15000 or less. When the number average molecular weight (Mn) of the polar resin is equal to or more than the lower limit value, the solubility of the polar resin is improved, and the particle diameter of the hollow particles can be easily controlled. When the number average molecular weight of the polar resin is equal to or less than the upper limit value, a deterioration in the strength of the shell can be suppressed.

In the case of using the polar resin as the polar component, with respect to 100 parts by mass of the polymerizable monomer, the content of the polar resin is preferably 0.1 parts by mass or more and 10.0 parts by mass or less, more preferably 0.3 parts by mass or more and 8.0 parts by mass or less, and still more preferably 0.5 parts by mass or more and 8.0 parts by mass or less. When the content of the polar resin is equal to or more than the lower limit value, the thickness of the shell of the hollow particles is easily controlled. When the content of the polar resin is equal to or less than the upper limit value, a decrease in the ratio of the content of the polymerizable monomer can be suppressed. Accordingly, a deterioration in the strength of the shell can be suppressed.

As the organic acid, examples include a rosin acid and a higher fatty acid. As the higher fatty acid, examples include higher fatty acids each containing 10 to 25 carbon atoms from which the carbon atom of the carboxyl group is excluded.

As the metal used in the metal salt of the organic acid, examples include, but are not limited to, an alkali metal such as Li, Na and K, and an alkaline-earth metal such as Mg and Ca. Of them, an alkali metal is preferred, and at least one selected from Li, Na and K is more preferred.

When the organic acid or metal salt thereof is used as the polar component, the total content of the organic acid and metal salt thereof is preferably 0.0001 parts by mass or more and 0.02 parts by mass or less, more preferably 0.001 parts by mass or more and 0.01 parts by mass or less, and still more preferably 0.0015 parts by mass or more and 0.006 parts by mass or less, with respect to the total (100 parts by mass) of the polymerizable monomer and the hydrophobic solvent. When the content is equal to or more than the lower limit value, the thickness of the shell of the hollow particles can be easily controlled.

The mixture liquid is obtained by mixing the above-mentioned materials and other materials as needed, appropriately stirring the mixture, etc. In the mixture liquid, an oil phase containing the lipophilic materials such as (A) the polymerizable monomer, (B) the hydrophobic solvent and (C) the polymerization initiator is dispersed with a size of a particle diameter of approximately several millimeters in an aqueous phase containing (D) the dispersion stabilizer, (E) the aqueous medium, etc. The dispersion state of these materials in the mixture liquid can be observed with the naked eye, depending on the types of the materials.

In the mixture liquid preparation step, the mixture liquid may be obtained by simply mixing the above-mentioned materials and other materials as needed, appropriately stirring the mixture, etc. From the point of view that the shell can be easily uniform, it is preferable to prepare the mixture liquid by separately preparing the oil phase containing the polymerizable monomer, the hydrophobic solvent and the polymerization initiator with the aqueous phase containing the dispersion stabilizer and the aqueous medium in advance, and then mixing the phases together. In the present disclosure, a colloidal dispersion in which a sparingly water-soluble inorganic dispersion stabilizer is dispersed in the form of colloidal particles in the aqueous medium, can be preferably used as the aqueous phase.

As just described, by separately preparing the oil phase and the aqueous phase in advance and then mixing them, hollow particles such that the composition of the shell portion is uniform, can be produced.

(2) Suspension step

The suspension step includes suspending the mixture liquid to prepare the suspension in which the droplets of the monomer composition containing the hydrophobic solvent are dispersed in the aqueous medium.

The suspension method for forming the droplets of the monomer composition is not particularly limited. For example, it is performed using an apparatus capable of performing strong stirring, such as an in-line type emulsifying disperser (e.g., a horizontal in-line type disperser such as MILDER (product name, manufactured by Pacific Machinery & Engineering Co., Ltd.) and CAVITRON (product name, manufactured by EUROTEC, Ltd.) and a vertical in-line type disperser such as DRS 2000/5 (product name, manufactured by IKA Works, Inc.)) and a high-speed emulsifying disperser such as T.K. HOMOMIXER MARK II (product name, manufactured by PRIMIX Corporation).

In the suspension prepared in the suspension step, the droplets of the monomer composition containing the lipophilic materials mentioned above and having a particle diameter of approximately from 1 $\mu$m to 20 $\mu$m, are dispersed uniformly in the aqueous medium. Such droplets of the monomer composition are difficult to observe with the naked eye and can be observed with a known observation instrument such as an optical microscope.

In the suspension step, since phase separation occurs in the droplets of the monomer composition, the hydrophobic solvent with low polarity is likely to collect in the interior of the droplets. As a result, in the obtained droplets, the hydrophobic solvent is distributed in the interior thereof, and the material other than the hydrophobic solvent, such as the polymerizable monomer, is distributed at the periphery thereof.

(3) Polymerization step

The polymerization step includes subjecting the suspension obtained by the suspension preparation step to a polymerization reaction to prepare a precursor composition containing precursor particles which have a hollow portion surrounded by a shell containing a resin and which include the hydrophobic solvent in the hollow portion.

In this step, the second polymerization reaction may be performed by, after the first polymerization reaction is performed by subjecting the suspension to the polymerization reaction, further adding the second polymerizable monomer to the precursor composition obtained by first polymerization reaction. By performing the two-stage polymerization reaction in the polymerization step in this manner, the solvent resistance of the hollow particles can be improved.

The precursor particles are formed by polymerization of the polymerizable monomer contained in the droplets of the monomer composition and the second polymerizable monomer added as needed. The shell of the precursor particles contains, as the resin, the polymer of the polymerizable monomer contained in the droplets of the monomer composition and the second polymerizable monomer added as needed.

In this step, the shell portion of the droplets of the monomer composition, which contain the hydrophobic solvent in the interior, polymerizes. Accordingly, the hollow portion filled with the hydrophobic solvent is formed in the interior of the obtained precursor particles.

The polymerization system performed in this step is not particularly limited. For example, a batch system, a semicontinuous system or a continuous system may be employed.

The polymerization temperature is preferably from 40°C to 80°C, and more preferably from 50°C to 70°C.

The temperature increase rate up to the polymerization temperature, is preferably 20°C/h or more, and more preferably 45°C/h or more. The temperature increase rate is generally 100°C/h or less.

The polymerization reaction time is preferably from 1 hour to 20 hours, and more preferably from 2 hours to 15 hours.

The speed of stirring the suspension during the polymerization reaction is preferably from 20 rpm to 200 rpm, and more preferably from 20 rpm to 100 rpm. When the tetrafunctional or higher-functional crosslinkable monomer is contained as the crosslinkable monomer, the stirring speed is particularly preferably from 20 rpm to 100 rpm.

In the case of performing the second polymerization reaction, the first polymerization reaction is preferably continued until the polymerization conversion rate of the polymerizable monomer in the suspension reaches preferably 93% by mass or more, more preferably 95% by mass or more, still more preferably 98% by mass or more, and even more preferably 99% by mass or more.

In the present disclosure, the polymerization conversion rate is obtained by the following formula (IV) using the mass of the solid component of the particles produced by the first polymerization reaction and contained in the reaction solution just after the first polymerization reaction and the mass of the polymerizable monomer remaining unreacted after the first polymerization reaction. The mass of the unreacted polymerizable monomer can be measured by gas chromatography (GC).

$$\text{Polymerization conversion rate (\% by mass)} = 100 - ([\text{Mass of the unreacted polymerizable monomer}] / [\text{Mass of the solid component of the particles produced by the first polymerization reaction}]) \times 100 \qquad \text{Formula (IV)}$$

The second polymerizable monomer added for the second polymerization reaction is not particularly limited. From the viewpoint of improving the solvent resistance of the hollow particles and improving the adhesion between the hollow particles and the resin, the polymerizable monomer is preferably a crosslinkable or non-crosslinkable monomer containing a reactive group.

The crosslinkable or non-crosslinkable monomer containing a reactive group has high solubility in the aqueous medium. Accordingly, when the crosslinkable or non-crosslinkable monomer containing a reactive group is used as the second polymerizable monomer, there is a possibility that the polymerization reaction of a part of the second polymerizable monomer does not proceed while the part of the second polymerizable monomer is dissolved in the aqueous medium. In this case, a theoretical void ratio is calculated from, the true density $D_0$ of the obtained hollow particles and the masses of the polymerizable monomer and hydrophobic solvent used for the production of the hollow particles. In addition, the theoretical apparent density $D_2$ of the hollow particles is calculated from the true density $D_0$ and the theoretical void ratio. Then, the amount of the monomer that passed to an aqueous phase side is calculated from the apparent density $D_1$ and theoretical apparent density $D_2$ of the hollow particles. Considering the amount of the monomer that passed to the aqueous phase side, the contents of the monomer units in the polymer contained in the shell of the obtained hollow particles, can be calculated.

The solubility of the second polymerizable monomer in distilled water at 20°C is preferably 2 g/L or more, more preferably 10 g/L or more, and still more preferably 15 g/L or more, due to the following reasons: it becomes easier for the second polymerizable monomer to be incorporated in the shell to accelerate the thermal motion of the shell, and the strength of the hollow particles is improved. The upper limit of the solubility of the second polymerizable monomer in distilled water at 20°C is not particularly limited, and it is generally 80 g/L or less.

The molecular weight of the second polymerizable monomer is not particularly limited. From the viewpoint of improving the solvent resistance of the hollow particles, it is preferably 300 or less, and more preferably 250 or less. The lower limit of the molecular weight is not particularly limited, and it is generally 50 or more.

In the case of performing the second polymerization reaction, from the viewpoint of improving the solvent resistance of the hollow particles, the amount of the added second polymerizable monomer is preferably from 3 parts by mass to 50 parts by mass, with respect to 100 parts by mass of the polymerizable monomer in the mixture liquid. In the case of using the reactive group-containing monomer as the second polymerizable monomer, the amount of the added reactive group-containing monomer is more preferably from 10 parts by mass to 50 parts by mass.

In the case of performing the second polymerization reaction, the polymerization reaction time of the first polymerization reaction is preferably from 0.5 hours to 5 hours, and more preferably from 1 hour to 3 hours. The polymerization reaction time of the second polymerization reaction is preferably from 1 hour to 6 hours, and more preferably from 2 hours to 4 hours.

In the method for producing the hollow particles, from the viewpoint of achieving both the adhesion of the hollow particles to the resin and the pressure resistance, at least one of the polymerizable monomer contained in the mixture liquid and the second polymerizable monomer preferably contains the crosslinkable or non-crosslinkable monomer containing a reactive group, and more preferably the crosslinkable monomer containing a reactive group.

When the crosslinkable monomer containing a reactive group is contained, depending on the type of the monomer, the content is appropriately controlled, and it is not particularly limited. From the viewpoint of improving the adhesion between the hollow particles and the resin, the content of the reactive group-containing monomer is preferably 10 parts by mass or more, more preferably 12 parts by mass or more, still more preferably 15 parts by mass or more, and even more preferably 20 parts by mass or more, in the total of 100 parts by mass of the crosslinkable monomer contained in the polymerizable monomer contained in the mixture liquid and the second polymerizable monomer. The upper limit of the content is not particularly limited, and the crosslinkable monomer may be composed of the reactive group-containing monomer. For example, from the viewpoint of improving the pressure resistance of the hollow particles by containing the crosslinkable monomer not containing a reactive group, the upper limit is preferably 60 parts by mass or less, more preferably 50 parts by mass or less, and still more preferably 40 parts by mass or less.

When the non-crosslinkable monomer containing a reactive group is contained, depending on the type of the monomer, the content is appropriately controlled, and it is not particularly limited. From the viewpoint of improving the adhesion between the hollow particles and the resin, the lower limit of the content of the non-crosslinkable monomer containing a reactive group is preferably 80 parts by mass or more, and more preferably 90 parts by mass or more, and it may be 100 parts by mass, in the total of 100 parts by mass of the crosslinkable monomer contained in the polymerizable monomer contained in the mixture liquid and the second polymerizable monomer. The upper limit of the content is not particularly limited, and it may be 95 parts by mass, for example.

The content of the non-crosslinkable monomer is from 0 part by mass to 40 parts by mass, in the total of 100 parts by mass of the polymerizable monomer contained in the mixture liquid and the second polymerizable monomer. The lower limit of the content of the non-crosslinkable monomer may be 3 parts by mass or more, may be 5 parts by mass or more, may be 10 parts by mass or more, or may be 20 parts by mass or more. The upper limit is preferably 35 parts by mass or less, and more preferably 30 parts by mass or less, from the viewpoint of suppressing a deterioration in the pressure resistance of the hollow particles.

When the content of the non-crosslinkable monomer is equal to or more than the lower limit value, the upper limit of the content of the crosslinkable monomer in the total of 100 parts by mass of the polymerizable monomer contained in the mixture liquid and the second polymerizable monomer, may be 97 parts by mass or less, may be 95 parts by mass or less, may be 90 parts by mass or less, or may be 80 parts by mass or less. When the content of the non-crosslinkable monomer is equal to or less than the upper limit value, the content of the crosslinkable monomer in the total of 100 parts by mass of the polymerizable monomer contained in the mixture liquid and the second polymerizable monomer, may be 65 parts by mass or more, or it may be 70 parts by mass or more.

The content of the crosslinkable or non-crosslinkable monomer containing a reactive group in the total of 100 parts by mass of the polymerizable monomer contained in the mixture liquid and the second polymerizable monomer, is appropriately controlled depending on the type of the monomer, and it is not particularly limited. From the viewpoint of improving the adhesion between the hollow particles of the present disclosure and the resin, the lower limit of the content is preferably 10 parts by mass or more, more preferably 12 parts by mass or more, still more preferably 15 parts by mass or more, and even more preferably 20 parts by mass or more. The upper limit is not particularly limited, and the polymerizable monomer may be composed of the reactive group-containing monomer. For example, from the viewpoint of improving the pressure resistance of the hollow particles by containing the crosslinkable monomer unit not containing a reactive group, the upper limit is preferably 60 parts by mass or less, more preferably 50 parts by mass or less, and still more preferably 40 parts by mass or less.

From the viewpoint of improving the pressure resistance of the hollow particles, in the total of 100 parts by mass of the polymerizable monomer contained in the mixture liquid and the second polymerizable monomer, the total content of the (meth)acrylic polymerizable monomer and the vinyl-based crosslinkable monomer having a molecular weight of 250 or less and not containing a reactive group, is preferably more than 60 parts by mass, more preferably 70 parts by mass or more, and still more preferably 75 parts by mass or more.

From the same point of view, in 100 parts by mass of the crosslinkable monomer contained in the polymerizable monomer contained in the mixture liquid and the second polymerizable monomer, the total content of the (meth)acrylic crosslinkable monomer and the vinyl-based crosslinkable monomer having a molecular weight of 250 or less and not containing a reactive group, is preferably more than 60 parts by mass, more preferably 70 parts by mass or more, and still more preferably 75 parts by mass or more.

(4) Solid-liquid separation step

The solid-liquid separation step includes performing solid-liquid separation of the precursor composition which contains the precursor particles and which is obtained by the above-described polymerization step, to obtain a solid component containing the precursor particles.

The method of performing the solid-liquid separation of the precursor composition is not particularly limited, and a known method may be used. Examples of the solid-liquid separation method include a centrifugation method, a filtration method, and still-standing separation. Among them, a centrifugation method or a filtration method may be employed, and from the viewpoint of simplicity of the operation, a centrifugation method may be employed.

Any step such as a preliminary drying step may be performed at a time after the solid-liquid separation step and before performing the solvent removal step described later. Examples of the preliminary drying step include performing preliminary drying on the solid component obtained after the solid-liquid separation step, by use of a drying apparatus such as a dryer and a drying appliance such as a hand dryer.

(5) Solvent removal step

The solvent removal step includes removing the hydrophobic solvent from the precursor particles obtained by the solid-liquid separation step.

By removing the hydrophobic solvent from the precursor particles in a gaseous atmosphere, the hydrophobic solvent in the interior of the precursor particles is substituted with air, and the hollow particles filled with gas are obtained.

In this step, the term "in a gaseous atmosphere" includes "in an environment where no liquid component exists in the outside of the precursor particles" and "in an environment where only a very small amount of liquid component at a level that does not influence the removal of the hydrophobic solvent, exists in the outside of the precursor particles" in a strict sense. The term "in a gaseous atmosphere" can be reworded as a state where the precursor particles do not exist in a slurry, or it can be reworded as a state where the precursor particles exist in a dry powder. That is, in this step, it is important to remove the hydrophobic solvent in an environment where the precursor particles come into direct contact with the outside gas.

The method of removing the hydrophobic solvent from the precursor particles in a gaseous atmosphere, is not particularly limited, and a known method may be employed. Examples of the method include a reduced pressure drying method, a heat drying method, a flash drying method, and a combination of these methods.

Especially, in the case of using the heat drying method, the heating temperature needs to be set to more than or equal to the boiling point of the hydrophobic solvent and less than or equal to the highest temperature at which the shell structure of the precursor particles does not collapse. Accordingly, depending on the composition of the shell and the type of the hydrophobic solvent in the precursor particles, the heating temperature may be from 50°C to 200°C, may be from 70°C to 200°C, or may be from 100°C to 200°C, for example.

The hydrophobic solvent in the interior of the precursor particles is substituted with the outside gas by the drying operation in the gaseous atmosphere. As a result, the hollow particles in which the hollow portion is occupied by gas, are obtained.

The drying atmosphere is not particularly limited and may be appropriately selected depending on the intended application of the hollow particles. Possible examples of the drying atmosphere include air, oxygen, nitrogen and argon. Further, by filling the interior of the hollow particles with gas once and then performing reduced pressure drying, hollow particles in which the interior is evacuated are also temporarily obtained.

As another method, the hydrophobic solvent may be removed as follows: the precursor composition obtained in the polymerization step, which is in the form of slurry, is not subjected to solid-liquid separation and, instead, in the slurry containing the precursor particles and the aqueous medium, the hydrophobic solvent included in the precursor particles is substituted with the aqueous medium of the slurry, thereby removing the hydrophobic solvent.

In this method, at a temperature equal to or more than the temperature obtained by subtracting 35°C from the boiling point of the hydrophobic solvent, an inert gas is bubbled into the precursor composition. Accordingly, the hydrophobic solvent can be removed from the precursor particles.

When the hydrophobic solvent is a mixed solvent containing several kinds of hydrophobic solvents and it has several boiling points, the boiling point of the hydrophobic solvent in the solvent removal step is determined as the boiling point of the solvent having the highest boiling point among the solvents contained in the mixed solvent, that is, the highest boiling point of the several boiling points.

The temperature at the time of bubbling the inert gas into the precursor composition, is preferably a temperature equal to or more than the temperature obtained by subtracting 30°C from the boiling point of the hydrophobic solvent, and more preferably a temperature equal to or more than the temperature obtained by subtracting 20°C from the boiling point of the hydrophobic solvent, from the viewpoint of reducing the amount of the residual hydrophobic solvent in the hollow particles. The temperature at the time of bubbling is generally set to a temperature equal to or more than the polymerization temperature of the polymerization step. The temperature at the time of bubbling is not particularly limited, and it may be 50°C or more and 100°C or less.

The inert gas used for the bubbling is not particularly limited. As the inert gas, examples include, but are not limited to, nitrogen and argon.

Depending on the type and amount of the hydrophobic solvent, the bubbling condition is appropriately controlled so that the hydrophobic solvent can be removed from the precursor particles. The bubbling condition is not particularly limited. For example, the inert gas may be bubbled in an amount of 1 L/min to 3 L/min for 1 hour to 10 hours.

By this method, an aqueous slurry is obtained, in which the inert gas is included in the precursor particles. The slurry is subjected to solid-liquid separation to obtain hollow particles, and the residual aqueous medium is removed from the hollow particles, thereby obtaining the hollow particles in which the hollow portion is occupied by gas.

The method for obtaining the hollow particles in which the hollow portion is filled with gas, by subjecting the precursor composition in the form of slurry to solid-liquid separation and then removing the hydrophobic solvent from the precursor particles in the gaseous atmosphere, is compared to the method for obtaining the hollow particles in which the hollow portion is filled with gas, by removing, in the slurry containing the precursor particles and the aqueous medium, the hydrophobic solvent from the precursor particles, subjecting the slurry to solid-liquid separation, and then removing the aqueous medium from the precursor particles in the gaseous atmosphere. As a result, the former method is advantageous in that the hollow particles are less likely to collapse in the hydrophobic solvent removal step, and the latter method is advantageous in that the amount of the residual hydrophobic solvent is decreased by bubbling the inert gas.

Also, a hydrophobic organic solvent included in the precursor particles may be removed therefrom after the polymerization step and before the solid-liquid separation step, without the solid-liquid separation of the slurry precursor composition obtained in the polymerization step, by use of the following method, for example: evaporating the hydrophobic organic solvent included in the precursor particles from the precursor composition at a predetermined pressure (a high, normal or reduced pressure), or evaporating the hydrophobic organic solvent included in the precursor particles from the precursor composition by introducing water vapor or inert gas such as nitrogen, argon and helium to the precursor composition at a predetermined pressure (a high, normal or reduced pressure).

(6) Others

In addition to the steps (1) to (5) mentioned above, the following washing step (6-a) and the following hollow portion re-substitution step (6-b) may be added, for example.

(6-a) Washing step

The washing step includes carrying out washing by adding acid or alkali, for removal of the dispersion stabilizer remaining in the precursor composition containing the precursor particles before the solid-liquid separation step. When the dispersion stabilizer used is an acid-soluble inorganic dispersion stabilizer, washing is preferably carried out by adding acid to the precursor composition containing the precursor particles. When the dispersion stabilizer used is an alkali-soluble inorganic compound, washing is preferably carried out by adding alkali to the precursor composition containing the precursor particles.

When the acid-soluble inorganic dispersion stabilizer is used as the dispersion stabilizer, the pH of the precursor composition is preferably controlled to 6.5 or less, and more preferably 6 or less, by adding acid to the precursor composition containing the precursor particles. As the added acid, an inorganic acid such as sulfuric acid, hydrochloric acid and nitric acid or an organic acid such as formic acid and acetic acid may be used. Of them, sulfuric acid is particularly preferred, due to its high dispersion stabilizer removal efficiency and small influence on production equipment.

(6-b) Hollow portion re-substitution step

The hollow portion re-substitution step includes resubstituting the gas or liquid in the interior of the hollow particles with another gas or liquid. By such substitution, the environment of the interior of the hollow particles can be changed; molecules can be selectively confined in the interior of the hollow particles; or the chemical structure of the interior of the hollow particles can be modified in accordance with the intended application thereof.

Due to having excellent pressure resistance, the hollow particles of the present disclosure are less likely to collapse when mixed and kneaded with other materials and even when molded after mixing and kneading with other materials. When they are added to a molded body, they exert excellent effects as a weight reducing material, a heat insulation material, an acoustic insulation material, a damping material and so on. Accordingly, the hollow particles of the present disclosure are particularly suitable as an additive for molded bodies. Also, the hollow particles of the present disclosure are less likely to collapse even when kneaded with a resin and even when molded into a molded body after kneading with a resin, and they have excellent adhesion to a resin. Accordingly, the hollow particles are particularly suitably used as an additive for molded bodies made of a resin.

The hollow particles of the present disclosure can be contained as a filler in a fiber reinforced molded body formed by use of reinforced fibers and a resin.

As the applications of the resin molded body containing the hollow particles of the present disclosure, examples include, but are not limited to, the same applications as those of the resin composition and molded body of the present disclosure described below.

The hollow particles of the present disclosure have a high void ratio, are less likely to collapse, and also excel in heat resistance. Accordingly, the hollow particles have heat insulation properties and shock-absorbing properties (cushioning properties) required of an under-coating material, and they also have heat resistance in line with thermal paper uses. Further, the hollow particles of the present disclosure are useful as a plastic pigment that is excellent in gloss, hiding power, etc.

A useful component such as a perfume, a medicine, an agricultural chemical and an ink component can be enclosed in the interior of the hollow particles of the present disclosure by a means such as immersion treatment or depressurized or pressurized immersion treatment. Accordingly, the hollow particles in which such a useful component is enclosed, can be used for various applications in accordance with the component contained in the interior.

3. Resin composition

The resin composition of the present disclosure contains the above-described hollow particles of the present disclosure and the resin.

The resin composition of the present disclosure contains, as the resin, the resin containing a functional group, and the reactive group on the surface of the above-described hollow particles of the present disclosure is reactive with the functional group of the resin.

In the present disclosure, the reaction of the reactive group on the surface of the hollow particles with the functional group of the resin is required to be a covalent bond forming reaction such as an addition reaction, a substitution reaction, a dehydration-condensation reaction and a transesterification reaction.

The resin composition of the present disclosure is in the state prior to being formed into a form applicable to various kinds of applications, and it is typically in a liquid form. In the resin composition of the present disclosure, the reactive group of the hollow particles and the functional group of the resin are typically unreacted; however, parts of them may be reacted to form a crosslink.

Even though the resin composition of the present disclosure contains the hollow particles, it is a resin composition that can suppress a deterioration in the properties by the hollow particles. In the resin composition of the present disclosure, it is presumed that in the process of being formed into a molded body, a crosslink can be formed by the reaction of the functional group of the resin with the reactive group on the surface of the hollow particles, and excellent adhesion of the interface between the resin and the hollow particles is obtained, thereby suppressing a deterioration in the properties of the obtained molded body.

The resin composition of the present disclosure can suppress a deterioration in the properties, even when the resin composition further contains a resin not containing a functional group. The reason is presumed as follows. Due to high affinity between the functional group of the resin and the reactive group on the surface of the hollow particles, in the resin composition, the resin containing functional group is likely to be distributed around the hollow particles, and even when the resin composition further contains a resin not containing a functional group, the functional group of the resin and the reactive group on the surface of the hollow particles can form a crosslink therebetween, thereby suppressing a deterioration in the properties.

Also, the hollow particles contained in the resin composition of the present disclosure has a high void ratio and excellent pressure resistance. Accordingly, the collapse of the hollow particles in the resin composition is suppressed. Due to containing such hollow particles, performances such as weight reduction and heat insulation are imparted to the resin composition of the present disclosure by the hollow particles.

[Resin]

The resin contained in the resin composition of the present disclosure is not particularly limited, as long as a resin curing reaction or a crosslinking reaction of the reactive group of the hollow particles with the functional group of the resin does not proceed while the resin composition is in a storage state. The storage state of the resin composition of the present disclosure is not particularly limited. The resin composition of the present disclosure is preferably stored in a normal temperature and normal humidity environment at a temperature of from 20°C to 40°C and a humidity of from 40% RH to 70% RH, or it is preferably stored in a low temperature and low humidity environment at a temperature of from 0°C to 20°C and a humidity of from 10% RH to 30% RH.

As the resin contained in the resin composition of the present disclosure, examples include, but are not limited to, curable resins such as a thermosetting resin, a photocurable resin, and a room temperature curable resin that is curable at room temperature by addition of a catalyst or the like. Of them, a thermosetting resin or a room temperature curable resin is preferably used.

The resin contained in the resin composition of the present disclosure may be an unreacted monomer, a prepolymer, a macromonomer, a polymer or a precursor of a cured resin such as polyamic acid. The resin contained in the resin composition of the present disclosure functions as a binder when it is typically cured by heating, by light irradiation, or by use of a curing agent, a polymerization initiator, a catalyst or the like.

At least a part of the resin contained in the resin composition of the present disclosure is required to have the functional group that is reactive with the reactive group of the hollow particles, and the resin may further contain a resin not containing a functional group.

As the thermosetting resin, a known resin may be used without particular limitation, such as phenol-based resin, melamine-based resin, urea-based resin, unsaturated polyester-based resin, epoxy-based resin, polyurethane-based resin, silicone-based resin, alkyd-based resin, polyimide-based resin, and precursors of these resins in an uncured state.

As the room temperature curable resin that is curable at room temperature by addition of a catalyst, examples include, but are not limited to, adhesives that are curable at room temperature by addition of a catalyst, such as an epoxy-based adhesive, silicone-based adhesive and an acrylic adhesive.

In the resin composition of the present disclosure, as the resin containing a functional group, a resin containing an epoxy group, such as an epoxy-based resin (an epoxy compound), may be used. As a resin containing a hydroxy group and an isocyanate group, a resin containing a polyol component and a polyisocyanate component, which can induce a polyurethane-based resin, may be used. As a resin containing a carboxy group and an amide group, polyamic acid, which is a precursor of a polyimide-based resin, may be used.

As the epoxy-based resin (an epoxy compound), examples include, but are not limited to, bixylenol-type epoxy resin, bisphenol A-type epoxy resin, bisphenol F-type epoxy resin, bisphenol S-type epoxy resin, bisphenol AF-type epoxy resin, dicyclopentadiene-type epoxy resin, trisphenol-type epoxy resin, naphthol novolac-type epoxy resin, phenol novolac-type epoxy resin, tert-butyl-catechol-type epoxy resin, naphthalene-type epoxy resin, naphthol-type epoxy resin, anthracene-type epoxy resin, glycidyl amine-type epoxy resin, glycidyl ester-type epoxy resin, cresol novolac-type epoxy resin, phenol aralkyl-type epoxy resin, biphenyl-type epoxy resin, linear aliphatic epoxy resin, butadiene structure-containing epoxy resin, alicyclic epoxy resin, heterocyclic epoxy resin, spiro ring-containing epoxy resin, cyclohexane-type epoxy resin, cyclohexanedimethanol-type epoxy resin, naphthylene ether-type epoxy resin, trimethylol-type epoxy resin, tetraphenylethane-type epoxy resin, isocyanurate-type epoxy resin, phenolphthalimidine-type epoxy resin, and phenolphthalein-type epoxy resin. These epoxy-based resins may be used alone or in combination of two or more kinds.

The polyurethane-based resin is obtained by the reaction of the polyol component with the polyisocyanate component.

As the polyol component which induces the polyurethane-based resin, examples include, but are not limited to, ethylene glycol, propylene glycol, glycerin, trimethylolpropane, pentaerythritol, sorbitol, sucrose, polyoxypropylene triol and polyester polyol.

As the polyisocyanate component which induces the polyurethane-based resin, examples include, but are not limited to, aliphatic polyisocyanate and aromatic polyisocyanate.

As the aliphatic polyisocyanate, examples include, but are not limited to, polyisocyanate having a chain structure, such as tetramethylene diisocyanate, hexamethylene diisocyanate, dodecamethylene diisocyanate, 2,2,4-trimethylhexamethylene diisocyanate, 2,4,4-trimethylhexamethylene diisocyanate, lysine diisocyanate, 2-methylpentane-1,5-diisocyanate, 3-methylpentane-1,5-diisocyanate, and polyisocyanate having a cyclic structure, such as isophorone diisocyanate, hydrogenated xylylene diisocyanate, 4,4'-dicyclohexylmethane diisocyanate, 1,4-cyclohexane diisocyanate, methylcyclohexylene diisocyanate and 1,3-bis(isocyanatemethyl)cyclohexane.

As the aromatic polyisocyanate, examples include, but are not limited to, tolylene diisocyanate, 2,2'-diphenylmethane diisocyanate, 2,4'-diphenylmethane diisocyanate, 4,4'-diphenylmethane diisocyanate, 4,4'-dibenzyl diisocyanate, 1,5-naphthylene diisocyanate, xylylene diisocyanate, 1,3-phenylene diisocyanate, 1,4-phenylene diisocyanate, dialkyldiphenylmethane diisocyanate, tetraalkyldiphenylmethane diisocyanate, and $\alpha,\alpha,\alpha,\alpha$-tetramethylxylylene diisocyanate.

The polyamic acid, which is a precursor of polyimide-based resin, is obtained by the reaction of a diamine component with a tetracarboxylic acid component such as a tetracarboxylic dianhydride, tetracarboxylic acid and tetracarboxylic acid derivative (e.g., tetracarboxylic acid diester).

As the tetracarboxylic acid component, examples include, but are not limited to, benzophenonetetracarboxylic dianhydride, 4,4'-oxydiphthalic anhydride, pyromellitic acid, its dianhydride, 3,3',4,4'-biphenyltetracarboxylic acid and its dianhydride.

As the diamine component, examples include, but are not limited to, p-phenylenediamine and 4,4'-diaminodiphenylether.

As the resin containing a functional group, a hydroxy group-containing resin (e.g., phenol-based resin), a binder resin containing an amino group (e.g., melamine-based resin) or the like may be used.

In the resin composition of the present disclosure, the content of the resin is not particularly limited. In the total solid content (100% by mass) of the resin composition, the content of the resin is generally from 40% by mass to 95% by mass, preferably from 50% by mass to 95% by mass, and more preferably from 70% by mass to 95% by mass, and it may be from 85% by mass to 95% by mass. When the content of the resin is equal to or more than the lower limit value, the resin composition obtains excellent moldability, and the mechanical strength of the obtained molded body can be improved. When the content of the resin is equal to or less than the upper limit value, the hollow particles can be sufficiently contained. Accordingly, effects such as weight reduction of the molded body can be excellent.

In the resin composition of the present disclosure, the content of the resin containing a functional group is not particularly limited. In the total solid content (100% by mass) of the resin composition, the content of the resin containing a functional group is preferably from 30% by mass to 95% by mass, and more preferably from 40% by mass to 90% by mass. Also, with respect to 100 parts by mass of the hollow particles, the content is preferably from 100 parts by mass to 1000 parts by mass, and more preferably from 300 parts by mass to 900 parts by mass. When the content of the resin containing a functional group is equal to or more than the lower limit value, the adhesion between the resin and the hollow particles can be easily improved. On the other hand, when the content of the resin containing a functional group is equal to or less than the upper limit value, the hollow particles can be sufficiently contained. Accordingly, effects such as weight reduction of the molded body can be excellent.

[Hollow particles]

The hollow particles contained in the resin composition of the present disclosure are the above-described hollow particles of the present disclosure.

In the resin composition of the present disclosure, the content of the hollow particles is not particularly limited. In the total solid content (100% by mass) of the resin composition, the lower limit of the content of the hollow particles is preferably 5% by mass or more, and more preferably 10% by mass or more, and the upper limit is preferably 50% by mass or less, more preferably 30% by mass or less, still more preferably 20% by mass or less, and even more preferably 15% by mass or less. When the content of the hollow particles is equal to or more than the lower limit value, effects such as weight reduction of the resin composition can be improved. When the content of the hollow particles is equal to or less than the upper limit value, the resin can be sufficiently contained in the resin composition. Accordingly, a deterioration in the properties of the obtained molded body can be suppressed, and the mechanical strength of the obtained molded body can be improved.

In the resin composition of the present disclosure, from the viewpoint of improving the adhesion between the hollow particles and resin in the molded body and improving the pressure resistance of the hollow particles, as the preferred combination of the hollow particles having a reactive group with the resin containing a functional group, examples include, but are not limited to, the following: a combination of hollow particles having at least one kind of reactive group selected from the group consisting of a hydroxy group, an amino group, a carboxy group and a carboxylic anhydride group with an epoxy-based resin, a combination of hollow particles having at least one kind of reactive group selected from the group consisting of a hydroxy group, an amino group, a carboxy group, a carboxylic anhydride group and a sulfo group with a resin containing a polyol component and a polyisocyanate component, and a combination of hollow particles having at least one kind of reactive group selected from the group consisting of a hydroxy group, an amino group, a carboxy group and a carboxylic anhydride group with polyamic acid. As the hollow particles having at least one kind of reactive group selected from the group consisting of a hydroxy group and an amino group, hollow particles having both a hydroxy group and an amino group are preferred, since the adhesion between the hollow particles and the resin is easily improved.

[Solvent]

As needed, the resin composition of the present disclosure may further contain a solvent for dissolving or dispersing the components. As the solvent, a known solvent can be used and is appropriately selected depending on the type of the resin.

[Other additives]

The resin composition of the present disclosure may further contain additives such as a UV absorber, a colorant, a thermal stabilizer and a filler, to the extent that does not impair the effects of the present disclosure.

The resin composition of the present disclosure may further contain organic or inorganic reinforced fibers such as carbon fibers, glass fibers, aramid fibers and polyethylene fibers.

The resin composition of the present disclosure may further contain an agent for curing the resin by heat, such as a curing agent, a curing accelerator, a thermal polymerization initiator, a catalyst and so on, or it may further contain an agent for curing the resin by light irradiation, such as a photopolymerization initiator, a polymerization accelerator, a catalyst and so on, to the extent in which a reaction of the reactive group of the hollow particles with the functional group of the resin do not occur when the resin composition of the present disclosure is in the storage state.

[Method for producing resin composition]

The resin composition of the present disclosure is obtained by mixing the hollow particles of the present disclosure, the resin, and agents that are added as needed, such as an additive and a solvent. As the method for mixing them, a known method may be and is not particularly limited.

In the production of the resin composition of the present disclosure, the mixing condition is appropriately set to the condition in which the reactive group of the hollow particles and the functional group of the resin do not react with each other, and the condition is not particularly limited.

4. Molded body

The molded body of the present disclosure contains hollow particles derived from the above-described hollow particles of the present disclosure and a solidified resin product, and the shell of the hollow particles is crosslinked to the solidified resin product.

The molded body of the present disclosure may be a molded body formed from the above-described resin composition of the present disclosure, or it may be a molded body formed from a melt obtained by melt-kneading the hollow particles of the present disclosure and a thermoplastic resin.

In the present disclosure, a solidified product is a product solidified through or not through a chemical reaction. As the solidified resin product, examples include, but are not limited to, a cured product of resin, which is cured by a curing reaction, a solidified product of resin, which is solidified by drying, and a solidified product of thermoplastic resin, which is solidified by cooling. The molded body obtained by use of the resin composition of the present disclosure contains, as the solidified resin product, a cured resin product cured by use of a curing agent, a polymerization initiator, a catalyst or the like, as needed. In this case, the solidified resin product may contain the curing agent or the like. A solidified product which is the thermoplastic resin solidified by cooling, is contained as the solidified resin product in the molded body obtained by melt-kneading the hollow particles of the present disclosure and the thermoplastic resin and then molding the melt.

In the molded body of the present disclosure, the collapse of the hollow particles contained in the molded body is suppressed, and a decrease in the void ratio is suppressed. Accordingly, performances such as weight reduction and heat insulation are imparted to the molded body. Also in the molded body of the present disclosure, due to excellent adhesion between the resin and the hollow particles, a deterioration in resin properties relating to strength to external force, such as tensile strength and flexural strength, is suppressed, while the molded body contains the hollow particles.

[Method for producing the molded body]

The method for producing the molded body according to the present disclosure includes the following steps in whichever case the molded body of the present disclosure is a molded body formed from the above-described resin composition of the present disclosure, or it is a molded body formed from a melt obtained by melt-kneading the hollow particles of the present disclosure and the thermoplastic resin. The method includes:

mixing the hollow particles of the present disclosure and a resin containing a functional group that is reactive with the reactive group on the surface of the hollow particles (hereinafter referred to as the first step),
solidifying the resin (hereinafter referred to as the second step), and
reacting the reactive group of the hollow particles with the functional group of the resin (hereinafter referred to as the third step).

In the molded body production method of the present disclosure, the order of the first step, the second step and the third step is not particularly limited. For example, after the first step, the second step and the third step may be carried out. In this case, the order of the second step and the third step is not particularly limited. As far as technically possible, the second step and the third step may be simultaneously carried out. Also, for example, the second step may be carried out after the first step and the third step are simultaneously carried out.

In the first step, a mixture is prepared, which contains at least the hollow particles of the present disclosure and the resin containing a functional group that is reactive with the reactive group on the surface of the hollow particles. The mixture prepared in the first step may further contain a resin not containing the functional group, or it may further contain an additive, a solvent or the like as needed.

In the mixture prepared in the first step, the content of the resin containing a functional group is not particularly limited. With respect to 100 parts by mass of the hollow particles, the content of the resin containing a functional group is preferably from 100 parts by mass to 1000 parts by mass, and more preferably from 300 parts by mass to 900 parts by mass.

In the second step, the mixture obtained in the first step or a mixture obtained by adding a curing agent for curing the resin, a catalyst or the like to the mixture obtained in the first step, is solidified through or not through a chemical reaction, thereby producing the solidified resin product.

In the third step, the mixture obtained in the first step, a mixture obtained by adding a curing agent for curing the resin, a catalyst or the like to the mixture obtained in the first step, or a mixture obtained in the second step, which contains the solidified resin product and the hollow particles, is reacted in the condition in which the reaction of the reactive group of the hollow particles with the functional group of the resin proceeds, thereby crosslinking the shell of the hollow particles and the resin.

Hereinafter, the method for forming the above-described resin composition of the present disclosure into the molded body will be described in detail.

(1) The first step

In the method for producing the molded body of the resin composition of the present disclosure, the first step may be the step of preparing the above-described resin composition of the present disclosure.

(2) The second step

The method of the second step is appropriately selected depending on the type of the resin, and it is not particularly limited. Since the resin composition of the present disclosure typically contains the above-described curable resin, the second step preferably uses the method for curing the curable resin. When the curable resin is curable by a curing agent, a catalyst or the like, the curing agent, the catalyst or the like is added in the second step. The method for curing the curable resin is not particularly limited. As the method, examples include, but are not limited to, heating and light irradiation such as ultraviolet and electron beam. In the case of the curable resin which is curable at room temperature by the addition of a catalyst or the like, the curable resin may be cured by adding a catalyst or the like to the resin and mixing them at room temperature.

(Curing agent)

The curing agent (a crosslinking agent) for curing the resin may be appropriately selected depending on the type of the resin, and it is not particularly limited.

As the curing agent for curing the epoxy-based resin, examples include, but are not limited to, amines, acid anhydrides, imidazoles, thiols, phenols, naphthols, benzoxazines, cyanate esters and carbodiimides.

The content of the curing agent is appropriately controlled depending on the type of the resin, and it is not particularly limited. For example, with respect to 100 parts by mass of the resin (the base material), the content of the curing agent may be from 5 parts by mass to 120 parts by mass.

The resin that is curable by the curing agent, may be a resin containing a functional group that is reactive with both the reactive group of the hollow particles and the curing agent, or it may be a resin containing a functional group that is reactive with only the reactive group of the hollow particles and a functional group that is reactive with only the curing agent.

(Catalyst)

The catalyst for curing the resin may be appropriately selected from known catalysts, depending on the type of the resin, and it is not particularly limited.

The catalyst used for curing the polyimide-based resin, that is, the catalyst used for imidization reaction may be a combination of an organic acid anhydride and an organic base, for example. As the organic acid anhydride, examples include, but are not limited to, acetic anhydride, propionic anhydride, maleic anhydride and phthalic anhydride. As the organic base, examples include a heterocyclic compound such as pyridine and picoline, and a tertiary amine such as triethylamine and N,N-dimethylaniline.

The content of the catalyst is appropriately controlled depending on the type of the resin, and it is not particularly limited.

The resin composition may be cured as follows, for example: after the resin composition is applied to a support (and dried as needed), it is cured in a curing condition.

As the material for the support, examples include, but are not limited to, resin such as polyethylene terephthalate and polyethylene naphthalate, and metal such as copper, aluminum, nickel, chromium, gold and silver.

As the method for applying the resin composition, a known method may be used, such as dip coating, roller coating, curtain coating, die coating, slit coating and gravure coating.

When the resin composition contains the solvent, it is preferable to dry the resin composition of the present disclosure after it is applied to the support. From the viewpoint of removal of the solvent while the resin composition is kept in an uncured or semi-cured state, the drying temperature is preferably a temperature at which the resin composition is not curable. The drying temperature is generally 20°C or more and 200°C or less, and it is preferably 30°C or more and 150°C or less. The drying time is generally 30 seconds or more and 1 hour or less, and preferably 1 minute or more and 30 minutes or less.

The temperature for curing the resin composition is appropriately controlled depending on the type of the resin, and it is not particularly limited. In the case of the thermosetting resin, the curing temperature is generally 30°C or more and 400°C or less, preferably 70°C or more and 300°C or less, and more preferably 100°C or more and 200°C or less. The heating method is not particularly limited, and an electric oven may be used, for example.

The curing time is generally 5 minutes or more and 5 hours or less, and preferably 30 minutes or more and 3 hours or less.

(3) The third step

In the third step, as the method for reacting the reactive group of the hollow particles with the functional group of the resin, a method for forming a covalent bond between the reactive group and the functional group by a reaction such as an addition reaction, a substitution reaction, a dehydration-condensation reaction and a transesterification reaction, is appropriately selected depending on the type of the reactive group and the functional group. The method of the third step may be the same method as the above-described curing method of the second method.

The third step is preferably carried out along with the resin curing reaction of the second step.

When the reactive group of the hollow particles reacts with the functional group of the resin along with the resin curing reaction, the second step and the third step can be simultaneously carried out by curing the resin composition of the present disclosure into a desired shape. For example, when the resin curing reaction and the reaction of the reactive group of the hollow particles with the functional group of the resin proceed at normal temperature by the addition of the curing agent or the catalyst, the second step and the third step can be simultaneously carried out by curing the resin composition of the present disclosure after adding the curing agent or the catalyst to the resin composition. When the resin curing reaction and the reaction of the reactive group of the hollow particles with the functional group of the resin proceed by heat, the second step and the third step can be simultaneously carried out by heating the resin composition of the present disclosure.

When the reaction of the reactive group of the hollow particles with the functional group of the resin does not proceed in the condition in which the resin curing reaction proceeds, the timing of the reaction of the reactive group and functional group is not particularly limited. Since the reaction of the reactive group of the hollow particles with the functional group of the resin easily proceeds, it is preferable to react the reactive group of the hollow particles with the functional group of the resin before the resin curing reaction. For example, when the resin curing reaction proceeds by heat and the reaction of the reactive group of the hollow particles with the functional group of the resin proceeds by the catalyst, it is preferable that the third step is carried out by reacting the reactive group of the hollow particles with the functional group of the resin by adding the catalyst, and then the second step is carried out by heating the mixture obtained in the third step.

Next, the method for producing the molded body of the present disclosure will be described in detail, which is obtained by melt-kneading the hollow particles of the present disclosure and a thermoplastic resin and molding the mixture.

In this method, a thermoplastic resin is used as the resin. The thermoplastic resin is not particularly limited, as long as at least a part of the thermoplastic resin contains a functional group that is reactive with the reactive group of the hollow particles.

(1) The first step

The method for mixing the thermoplastic resin and the hollow particles is melt-kneading such that the thermoplastic resin is melted by heating. The temperature of the melt-kneading is not particularly limited, as long as it is a temperature at which the thermoplastic resin used can be melted. From the viewpoint of suppressing a collapse of the hollow particles, the melt-kneading temperature is preferably 250°C or less.

The melt-kneading can be carried out by a known method, and it is not particularly limited. For example, it can be carried out by use of a kneader such as a uniaxial or biaxial kneader.

For example, the thermoplastic resin may be composed of only a binder resin, or it may be a thermoplastic resin containing a biner resin and a compatibilizer for improving the compatibility between the binder resin and the hollow particles. Also, the thermoplastic resin may be composed of only a binder resin containing a functional group; it may be a thermoplastic resin containing a binder resin not containing a functional group in combination with a compatibilizer containing a functional group; or it may be a thermoplastic resin containing a binder resin containing a functional group and a compatibilizer containing a functional group.

(Binder resin)

As the thermoplastic resin that can be used as the binder resin, a conventionally-known thermoplastic resin can be used and is not particular limited. As the thermoplastic resin, examples include, but are not limited to, polyvinyl chloride; polyvinylidene chloride; polyvinyl alcohol; an ethylene-based copolymer such as ethylene-vinyl alcohol copolymer, ethylene-vinyl acetate copolymer, ethylene-methyl (meth)acrylate copolymer, ethylene-ethyl (meth)acrylate copolymer and ethylene-butyl (meth)acrylate copolymer; a polyolefin-based resin such as a polyethylene-based resin (e.g., low density polyethylene (LDPE), linear low density polyethylene (LLDPE), ultra-low density polyethylene (ULDPE), medium density polyethylene, high density polyethylene (HDPE)), a polypropylene-based resin (e.g., polypropylene homopolymer (PP homopolymer), random polypropylene (random PP), block polypropylene (block PP)), a polybutene-based resin, a polybutadiene-based resin, a polyisoprene-based resin, a polycycloolefin and a propylene-$\alpha$-olefin copolymer, and a modified polyolefin-based resin obtained by modifying the polyolefin-based resin; a styrene-based copolymer such as styrene-acryronitrile copolymer and styrene-butadiene-acrylonitrile copolymer; polystyrene; polyterpene; polyacetal; polymethyl (meth)acrylate; cellulose acetate; polycarbonate; a polyester-based resin such as polyethylene terephthalate and polybutylene terephthalate; thermoplastic polyurethane; polytetrafluoroethylene resin (PTFE); an ionomer-based resin such as an ethylene-based ionomer, an urethane-based ionomer, a styrene-based ionomer and a fluorine-based ionomer; a thermoplastic plastomer such as polyphenylene sulfide; and a thermoplastic elastomer. As the modified polyolefin-based resin that can be used as the binder resin, examples include, but are not limited to, the same modified polyolefin-based resins as those described below that can be used as the compatibilizer.

These thermoplastic resins may be used alone or in combination of two or more kinds.

Of the thermoplastic resins, a resin containing a functional group is as follows, for example: a binder resin containing a hydroxy group, such as polyvinyl alcohol, an ethylene-vinyl alcohol copolymer and cellulose acetate; a binder resin containing an alkoxycarbonyl group containing 1 to 4 carbon atoms, such as polymethyl (meth)acrylate; or a binder resin containing an acidic group, such as an acid-modified polyolefin-based resin.

The polyolefin-based resin of the present disclosure includes a polymer of one kind of olefin, a copolymer of two or more kinds of olefins, and a copolymer of one or more kinds of olefins and one or more kinds of other monomers. When the polyolefin-based resin is a copolymer of one or more kinds of olefins and one or more kinds of other monomers, the copolymerization ratio of the olefins is preferably 50% by mass or more.

As the polyolefin-based resin, examples include, but are not limited to, the above-described polyethylene-based resin, the above-described polypropylene-based resin, the above-described polybutene-based resin, the above-described polybutadiene-based resin, the above-described polyisoprene-based resin, the above-described polycycloolefin, and the above-described propylene-$\alpha$-olefin copolymer.

For example, the polyethylene-based resin may be a copolymer of ethylene and a small amount of olefin other than ethylene or a small amount of another monomer. The same applies to other polyolefin-based resins. The propylene-$\alpha$-olefin copolymer is a copolymer of propylene and an $\alpha$-olefin other than propylene, or it may be a copolymer of propylene, an $\alpha$-olefin other than propylene, and a small amount of another monomer. For the small amount of another monomer, the copolymerization ratio may be 10% by mass or less, or it may be 5% by mass or less, for example.

As the olefin used to synthesize the polyolefin-based resin, a C2 to C30 alkene is preferred; at least one selected from C2 to C4 alkenes and C5 to C30 $\alpha$-olefins is more preferred; and at least one selected from C2 to C10 $\alpha$-olefins is still more preferred.

As another monomer that is different from the olefin that may be used to synthesize the polyolefin-based resin, examples include, but are not limited to, a C4 to C30 monomer having an unsaturated bond that is copolymerizable with olefin. As the monomer, examples include, but are not limited to, vinyl acetate.

In the propylene-$\alpha$-olefin copolymer, the copolymerization ratio of the propylene and the $\alpha$-olefin is not particularly limited. The copolymerization ratio of the propylene is preferably from 50% by mass to 90% by mass, and more preferably from 70% by mass to 90% by mass. As the $\alpha$-olefin used in the propylene-$\alpha$-olefin copolymer, a C2 to C6 $\alpha$-olefin is preferred, and ethylene and butene are particularly preferred.

The content of the binder resin is not particularly limited. In 100% by mass of the mixture obtained in the first step, that is, in 100% by mass of the molded body, the lower limit of the content is preferably 50% by mass or more, and more preferably 60% by mass or more, from the viewpoint of improving the mechanical strength. On the other hand, the upper limit of the content is preferably 95% by mass or less, and more preferably 90% by mass or less, from the viewpoint of sufficiently containing the hollow particles. When the compatibilizer is contained, the upper limit may be 80% by mass or less, or it may be 70% by mass or less.

(Compatibilizer)

To improve the compatibility between the binder resin and the hollow particles, the molded body of the present disclosure may contain the compatibilizer.

The binder resin used in combination with the compatibilizer is preferably the above-described thermoplastic plastomer, and more preferably the above-described polyolefin-based resin, due to their excellent effect of improving the compatibility between the binder resin and the hollow particles.

When the binder resin does not contain a functional group, from the viewpoint of improving the adhesion between the hollow particles and the resin, the compatibilizer is preferably contained as the resin containing a functional group.

As the compatibilizer, for example, a modified polyolefin-based resin is preferably used. The modified polyolefin-based resin is preferred since it has excellent adhesion to the hollow particles and the compatibility between the polyolefin resin as the binder resin and the hollow particles is improved.

As the polyolefin-based resin used for the modified polyolefin-based resin, examples include, but are not limited to, the same type of polyolefin-based resin as the polyolefin-based resin used as the above-described thermoplastic plastomer. On the other hand, a polyolefin-based resin such that the weight-average molecular weight is in the below-described preferred range, is preferably used. As the polyolefin-based resin used for the modified polyolefin-based resin, due to excellent affinity for the thermoplastic plastomer described above, a polyethylene-based resin, a polypropylene-based resin, a polybutadiene-based resin, a polyisoprene-based resin and a propylene-$\alpha$-olefin copolymer are preferred. Of them, a polypropylene-based resin is particularly preferred.

As the functional group introduced into the modified polyolefin-based resin, from the viewpoint of improving the compatibility between the binder resin and the hollow particles, for example, an epoxy group or an acidic group such as a carboxy group and a carboxylic anhydride group, is preferably used.

The carboxylic acid-modified polyolefin-based resin containing a carboxy group or a carboxylic anhydride group introduced therein, can be obtained by, for example, grafting at least one kind selected from $\alpha,\beta$-unsaturated carboxylic acids and acid anhydrides thereof to the polyolefin-based resin. As the $\alpha,\beta$-unsaturated carboxylic acid and the acid anhydride thereof, examples include, but are not limited to, (meth)acrylic acid, maleic acid, fumaric acid, itaconic acid, citraconic acid and acid anhydrides thereof. Of them, maleic anhydride and maleic acid are preferred, and maleic anhydride is more preferred.

As the carboxylic acid-modified polyolefin-based resin, for example, a commercially-available product such as UMEX series manufactured by Sanyo Chemical Industries, Ltd., may be used.

The acid value of the carboxylic acid-modified polyolefin-based resin is not particularly limited. From the viewpoint of improving the compatibility between the binder resin and the hollow particles, the lower limit of the acid value is preferably 3 mgKOH/g or more, more preferably 10 mgKOH/g or more, and still more preferably 15 mgKOH/g or more. On the other hand, the upper limit of the acid value is preferably 150 mgKOH/g or less, more preferably 120 mgKOH/g or less, and still more preferably 100 mgKOH/g or less, from the viewpoint of the affinity for the binder resin.

An epoxy-modified polyolefin-based resin having an epoxy group introduced therein, can be obtained by copolymerizing polymerizable monomers containing an olefin and an epoxy group-containing monomer. As the epoxy group-containing monomer, examples include, but are not limited to, glycidyl (meth)acrylate, allyl glycidyl ether and epoxybutene.

As the epoxy-modified polyolefin-based resin, for example, a commercially-available product such as MODIPER (registered trademark) A4100, A4300 and A4400 manufactured by NOF Corporation.

The lower limit of the weight-average molecular weight of the compatibilizer is preferably 10,000 or more, more preferably 15,000 or more, and still more preferably 20,000 or more. The upper limit of the weight-average molecular weight thereof is preferably 60,000 or less, more preferably 55,000 or less, and still more preferably 50,000 or less. When the weight-average molecular weight of the compatibilizer is equal to or more than the lower limit value and equal to or less than the upper limit value, the affinity between the binder resin and the hollow particles is improved, and a deterioration in the properties of the molded body is likely to be suppressed.

In the present disclosure, the weight-average molecular weight of the resin is the polystyrene equivalent weight-average molecular weight of the resin measured by gel permeation chromatography (GPC).

The content of the compatibilizer is not particularly limited. With respect to 100 parts by mass of the hollow particles, the content of the compatibilizer is preferably from 10 parts by mass to 150 parts by mass, more preferably from 20 parts by mass to 100 parts by mass, and still more preferably from 30 parts by mass to 70 parts by mass. When the content of the compatibilizer is equal to or more than the lower limit value and the resin composition is molded into a molded body, a deterioration in the properties of the molded body can be suppressed, and an excellent effect of improving the mechanical strength of the molded body is exerted. When the content of the compatibilizer is equal to or less than the upper limit value, the binder resin and the hollow particles can be sufficiently contained in the resin composition. Accordingly, the resin composition can form a lightweight molded body having excellent strength.

In 100% by mass of the mixture obtained in the first step, that is, in 100% by mass of the molded body or in the total solid content (100% by mass) of the resin composition, it is preferably, but is not limited to, from 30% by mass to 95% by mass, more preferably from 40% by mass to 90% by mass, and still more preferably from 60% by mass to 90% by mass. The content of the resin containing a functional group is not particularly limited. With respect to 100 parts by mass of the hollow particles, the content is preferably from 100 parts by mass to 1000 parts by mass, and more preferably from 300 parts by mass to 900 parts by mass. When the content of the resin containing a functional group is equal to or more than the lower limit value, the adhesion between the resin and the hollow particles can be easily improved. On the other hand, when the content of the resin containing a functional group is equal to or less than the upper limit value, the hollow particles can be sufficiently contained. Accordingly, effects such as weight reduction of the molded body can be excellent.

From the viewpoint of improving the adhesion between the hollow particles and the resin in the molded body and improving the pressure resistance of the hollow particles, as the preferred combination of the hollow particles with the resin containing a functional group, examples include, but are not limited to, a combination of hollow particles having at least one kind of reactive group selected from the group consisting of a carboxy group, a carboxylic anhydride group and a sulfo group with at least one kind of hydroxy group-containing resin selected from the group consisting of polyvinyl alcohol, an ethylene-vinyl alcohol copolymer and cellulose acetate, a combination of hollow particles having at least one kind of reactive group selected from a hydroxy group and an amino group with an acid-modified polyolefin-based resin, and a combination of hollow particles having a hydroxy group and an amino group with polymethyl (meth)acrylate. The hollow particles having at least one kind of reactive group selected from the group consisting of a hydroxy group and an amino group, preferably contain both a hydroxy group and an amino group, since the adhesion between the hollow particles and the resin is likely to be improved.

As needed, the mixture containing the hollow particles and the thermoplastic resin obtained in the first step may further contain additives. As the additives, those described above as the additives that are applicable to the resin composition of the present disclosure may be used as well.

(2) The second step

The second step, which is the step of curing the resin, is carried out by molding the mixture containing the hollow particles and the thermoplastic resin, which is the mixture obtained in the first step by melt-kneading, into a desired form by a known molding method such as extrusion molding, injection molding and press molding.

(3) The third step

As the third step, which is the step of reacting the reactive group of the hollow particles and the functional group of the resin, the above-described method for forming a covalent bond between the reactive group and the functional group is appropriately selected, depending on the type of the reactive group and that of the functional group. The method employed in the third step is not particularly limited. As the method, examples include, but are not limited to, heating, addition of an additive such as a curing agent and a catalyst, and light irradiation such as ultraviolet and electron beam. In the method for forming the molded body using the thermoplastic resin, from the viewpoint of ease of production, it is particularly preferable that the reaction of the reactive group of the hollow particles with the functional group of the resin proceeds by heat. In the case of using the thermoplastic resin, the kneading of the hollow particles and the thermoplastic resin and the molding of the mixture are carried out in a high-temperature environment. Accordingly, when the reaction of the reactive group of the hollow particles with the functional group of the resin proceeds by heat, the third step may be simultaneously carried out with the first or second step.

Meanwhile, for example, when the reaction of the reactive group of the hollow particles with the functional group of the resin proceeds by light irradiation, the reaction of the reactive group of the hollow particles with the functional group of the resin does not proceed in the condition of molding or melt-kneading the thermoplastic resin. Accordingly, during the melt-kneading the thermoplastic resin, light irradiation may be carried out to react the reactive group of the hollow particles with the functional group of the resin.

[Solidified resin product]

The molded body of the present disclosure is a resin molded body containing the above-described solidified resin product.

The content of the solidified resin product contained in the molded body of the present disclosure is not particularly limited. From the viewpoint of suppressing a deterioration in the properties of the molded body and improving the mechanical strength of the molded body, in the total solid content (100% by mass) of the molded body, the content is preferably 70% by mass or more, and more preferably 80% by mass or more. On the other hand, from the viewpoint of sufficiently containing the hollow particles, in the total solid content (100% by mass) of the molded body, the content is preferably 95% by mass or less, and more preferably 90% by mass or less.

[Hollow particles]

The hollow particles in the molded body of the present disclosure derive from the above-described hollow particles of the present disclosure. That is, the hollow particles in the molded body of the present disclosure are those that are obtained after the reactive group on the surface of the above-described hollow particles of the present disclosure, reacts with the functional group contained in the resin to form a crosslink therewith.

In the molded body of the present disclosure, the shell of the hollow particles is crosslinked to the solidified resin product. As the crosslink, examples include, but are not limited to, a crosslink formed by a reaction of at least one kind of reactive group selected from the group consisting of a hydroxy group, an amino group, a carboxy group and a carboxylic anhydride group of the hollow particles with an epoxy group of the resin, a crosslink formed by a reaction of at least one kind of reactive group selected from the group consisting of a carboxy group, a carboxylic anhydride group and a sulfo group of the hollow particles with a hydroxy group of the resin, a crosslink formed by a reaction of at least one kind of reactive group selected from a hydroxy group and an amino group of the hollow particles with an isocyanate group of the resin, a crosslink formed by a reaction of at least one kind of reactive group selected from a hydroxy group and an amino group of the hollow particles with at least one kind selected from a carboxy group and a carboxylic anhydride group of the resin, and a crosslink formed by a reaction of a hydroxy group of the hollow particles with an alkoxycarbonyl group containing 1 to 4 carbon atoms of the resin.

More specifically, as the crosslink in the molded body of the present disclosure containing the solidified epoxy-based resin product, examples include, but are not limited to, a crosslink formed by an addition reaction of at least one kind of reactive group selected from the group consisting of a hydroxy group, an amino group, a carboxy group and a carboxylic anhydride group of the hollow particles with an epoxy group of the epoxy-based resin.

As the crosslink in the molded body of the present disclosure containing the solidified polyurethane-based resin product, examples include, but are not limited to, a crosslink formed by a dehydration-condensation reaction of at least one kind of reactive group selected from the group consisting of a carboxy group, a carboxylic anhydride group and a sulfo group of the hollow particles with a hydroxy group of the polyol component, and a crosslink formed by an addition reaction of at least one kind of reactive group selected from a hydroxy group and an amino group of the hollow particles with an isocyanate group of the polyisocyanate component.

As the crosslink in the molded body of the present disclosure containing the solidified polyimide-based resin product, examples include, but are not limited to, a crosslink formed by a dehydration-condensation reaction of at least one kind of reactive group selected from the group consisting of a hydroxy group and an amino group of the hollow particles with a carboxy group of the polyamic acid, and a crosslink formed by a dehydration-condensation reaction of at least one kind selected from a carboxy group and a carboxylic anhydride group of the hollow particles with an amide bond of the polyamic acid.

As the crosslink in the molded body of the present disclosure containing the solidified acid-modified polyolefin product, examples include, but are not limited to, a crosslink formed by a dehydration-condensation reaction of at least one kind of reactive group selected from a hydroxy group and an amino group of the hollow particles with at least one kind selected from a carboxy group and a carboxylic anhydride group of the acid-modified polyolefin.

As the crosslink in the molded body of the present disclosure containing the solidified polymethyl (meth)acrylate product, examples include, but are not limited to, a crosslink formed by a transesterification reaction of a hydroxy group of the hollow particles with a methoxycarbonyl group of the polymethyl (meth)acrylate, and a crosslink formed by an aminolysis reaction of an amino group of the hollow particles with a methoxycarbonyl group of the polymethyl (meth) acrylate.

The content of the hollow particles contained in the molded body of the present disclosure is not particularly limited. From the viewpoint of sufficiently imparting a weight reduction effect and so on, in the total solid content (100% by mass) of the molded body, the content is preferably 5% by mass or more, and more preferably 10% by mass or more. On the other hand, from the viewpoint of suppressing a deterioration in the properties of the molded body and suppressing a deterioration in the mechanical strength, in the total solid content (100% by mass) of the molded body, the content is preferably 30% by mass or less, more preferably 20% by mass or less, and still more preferably 15% by mass or less. When the content of the hollow particles is equal to or more than the lower limit value, improved effects can be obtained, such as weight reduction of the molded body. When the content of the hollow particles is equal to or less than the upper limit value, the resin can be sufficiently contained in the molded body. Accordingly, a deterioration in the properties of the obtained molded body can be suppressed, and the mechanical strength of the obtained molded body can be improved.

The form of the molded body is not particularly limited and may be any kind of form that can be formed by use of the resin composition of the present disclosure. The molded body may be in any form such as a sheet form, a film form and a plate form. When the molded body contains fibers, the fibers in the molded body may be in a non-woven fabric form. Also, when the molded body contain fibers, the molded body may be a molded body obtained by adding the hollow particles of the present disclosure to a fiber reinforced plastic.

As the applications of the resin composition or molded body of the present disclosure, examples include, but are not limited to, members such as a light reflective material, a heat insulation material, a sound insulation material and a low dielectric material, which are used in various kinds of fields such as the automotive field, the electronic field, the electric field, the architecture field, the aviation field and the space field; food containers; footwears such as sports shoes and sandals; components of household appliances; components of bicycles; stationery supplies; tools; and the filament of 3D printers.

Examples

Hereinbelow, the present disclosure is described more specifically using examples and comparative examples. However, the present disclosure is not limited to these examples. Also, "part (s)" and "%" are on a mass basis unless otherwise specified.

[Example 1]

(1) Mixture liquid preparation step

First, the following materials were mixed to produce an oil phase.

Ethylene glycol dimethacrylate: 24 parts
Pentaerythritol tetraacrylate: 20 parts
Divinylbenzene: 17 parts
Ethylvinylbenzene: 13 parts
2-Hydroxy-3-methacryloyloxypropyl acrylate: 26 parts
2,2'-Azobis(2,4-dimethylvaleronitrile) (an oil-soluble polymerization initiator manufactured by Wako Pure Chemical Industries, Ltd., product name: V-65): 3 parts
Rosin acid (softening point: 150°C or more, acid value: 150 mgKOH/g to 160 mgKOH/g): 0.007 parts
Hexane (a hydrophobic solvent): 100 parts

Next, in a stirring tank, in a room temperature condition, an aqueous solution in which 12.1 parts of sodium hydroxide (an alkali metal hydroxide) was dissolved in 121 parts of ion-exchanged water, was gradually added under stirring to an aqueous solution in which 17.1 parts of magnesium chloride (a water-soluble polyvalent metal salt) was dissolved in 494 parts of ion-exchanged water, thereby preparing a magnesium hydroxide colloidal dispersion (a sparingly water-soluble metal hydroxide colloidal dispersion) (magnesium hydroxide: 4 parts). The obtained dispersion was used as an aqueous phase.
The obtained aqueous phase and oil phase were mixed, thereby preparing a mixture liquid.

(2) Suspension step

The mixture liquid obtained in the mixture liquid preparation step was stirred with a disperser (product name: HOMO MIXER, manufactured by: PRIMIX Corporation) for one minute at a rotational frequency of 4,000 rpm to be suspended, thereby preparing a suspension in which droplets of a monomer composition including the hydrophobic solvent, were dispersed in water.

(3) Polymerization step

In a nitrogen atmosphere, the temperature of the suspension obtained in the suspension step was increased from 40°C to 65°C over 30 minutes (temperature increase rate: 50°C/h), and then the suspension was stirred for one and a half hours in a temperature condition of 65°C to perform a polymerization reaction. Accordingly, a precursor composition containing precursor particles was obtained.

(4) Washing step and solid-liquid separation step

The precursor composition was washed (25°C, 10 minutes) with dilute sulfuric acid to bring the pH of the composition to 5.5 or less. Next, water was separated therefrom by filtration. Then, 200 parts of ion-exchanged water was added to the resultant to make a slurry again, and a water washing treatment (washing, filtration and dehydration) was repeatedly performed several times at room temperature (25°C). The resultant was separated by filtration, thereby obtaining a solid component. The obtained solid component was dried with a dryer at a temperature of 40°C, thereby obtaining precursor particles including the hydrophobic solvent.

(5) Solvent removal step

The precursor particles obtained in the solid-liquid separation step were subjected to heating treatment for 12 hours with a vacuum dryer in a nitrogen atmosphere condition at 200°C, thereby removing the hydrophobic solvent from the particles. Accordingly, the hollow particles of Example 1 were obtained. From the scanning electron microscopy observation result and void ratio value of the obtained hollow particles, the particles were confirmed to be spherical and to have a hollow portion.

[Example 2]

The hollow particles of Example 2 were obtained in the same manner as Example 1, except that in "(1) Mixture liquid preparation step", the type and amount of the polymerizable monomer added to the oil phase were changed as shown in Table 1.

[Examples 3 to 11 and Comparative Examples 1 to 3]

The hollow particles of Examples 3 to 11 and Comparative Examples 1 to 3 were obtained in the same manner as Example 1, except that in "(1) Mixture liquid preparation step", the type and amount of the polymerizable monomer added to the oil phase and those of the hydrophobic solvent were changed as shown in Table 1.

[Example 12]

The hollow particles of Example 12 were obtained in the same manner as Example 1, except for the following: in "(1) Mixture liquid preparation step", the materials added to the oil phase were changed as shown below; moreover, in "(3) Polymerization step", after the polymerization reaction of the suspension was performed, 15 parts of 2-hydroxy-3-methacryloyloxypropyl acrylate was added to the stirring tank, and the content was stirred for two and a half hours at a stirring speed of 100 rpm in a nitrogen atmosphere and a temperature condition of 65°C, thereby performing the second polymerization reaction.

<Oil phase in Example 12>

Ethylene glycol dimethacrylate: 65 parts
Pentaerythritol tetraacrylate: 20 parts
2,2'-Azobis(2,4-dimethylvaleronitrile) (an oil-soluble polymerization initiator manufactured by Wako Pure Chemical Industries, Ltd., product name: V-65): 3 parts
Rosin acid (softening point: 150°C or more, acid value: 150 mgKOH/g to 160 mgKOH/g): 0.007 parts
Cyclohexane (hydrophobic solvent): 120 parts

[Example 13]

The hollow particles of Example 13 were obtained in the same manner as Example 12, except for the following: in Example 12, the amount of the added ethylene glycol dimethacrylate and that of the added pentaerythritol tetraacrylate were changed as shown in Table 1, and during the second polymerization reaction, 33 parts of 2-hydroxyethyl methacrylate was added instead of 15 parts of 2-hydroxy-3-methacryloyloxypropyl acrylate.

[Comparative Example 4]

The hollow particles of Comparative Example 4 were obtained in the same manner as Example 12, except for the following: in Comparative Example 4, 100 parts of glycidyl methacrylate was used instead of 65 parts of ethylene glycol dimethacrylate and 20 parts of pentaerythritol tetraacrylate, and during the second polymerization reaction, 40 parts of ethylenediamine was added as the crosslinking agent, instead of 15 parts of 2-hydroxy-3-methacryloyloxypropyl acrylate.

[Evaluation]

The hollow particles obtained in the examples and the comparative examples were measured and evaluated as follows. The results are shown in Table 1.

1. Volume average particle diameter of hollow particles

The particle diameter of each hollow particle was measured using a laser diffraction particle size distribution measuring apparatus (product name: SALD-2000, manufactured by: Shimadzu Corporation), and the volume average of the particle diameters was calculated and used as the volume average particle diameter.

2. Density and void ratio of hollow particles 2-1. Measurement of apparent density of hollow particles

First, approximately 30 $cm^3$ of the hollow particles were introduced into a measuring flask with a volume of 100 $cm^3$, and the mass of the introduced hollow particles was precisely weighed. Next, the measuring flask in which the hollow particles were introduced, was precisely filled with isopropanol up to the marked line while care was taken so that air bubbles did not get in. The mass of the isopropanol added to the measuring flask was precisely weighed, and the apparent density $D_1$ ($g/cm^3$) of the hollow particles was calculated by the following formula (I).

Apparent density $D_1$ = [Mass of the hollow particles]/ (100-[Mass of the isopropanol]/[Specific gravity of the isopropanol at the measuring temperature])    Formula (I)

## 2-2. Measurement of true density of hollow particles

The hollow particles were pulverized in advance; approximately 10 g of the pulverized hollow particles were introduced into a measuring flask with a volume of 100 cm$^3$; and the mass of the introduced pulverized particles was precisely weighed.

Then, similarly to the measurement of the apparent density mentioned above, isopropanol was added to the measuring flask; the mass of the isopropanol was precisely weighed; and the true density $D_0$ (g/cm$^3$) of the hollow particles was calculated by the following formula (II).

True density $D_0$ = [Mass of the pulverized hollow particles]/(100-[Mass of the isopropanol]/[Specific gravity of the isopropanol at the measuring temperature]) Formula (II)    Formula (II)

## 2-3. Calculation of void ratio

The void ratio of the hollow particles was calculated by the following formula (III) from the apparent density $D_1$ and the true density $D_0$.

Void ratio (%) = 100-([Apparent density $D_1$]/[True density $D_0$] )×100    Formula (III)

## 3. Measurement of hydroxyl value

For the hollow particles having a hydroxy group introduced therein as the reactive group, in accordance with JIS K 0070, the hydroxyl value was measured by potentiometric titration. The details of the measurement method are as follows.

## 3-1. Measurement of acid value

A sample solution containing the hollow particles was obtained by adding 2 g of the hollow particles to 50 mL of ethanol and mixing them. Potentiometric titration of the sample solution containing the hollow particles was carried out with potentiometric titrator AT-710 (product name, manufactured by Kyoto Electronics Manufacturing Co., Ltd.) using a 0.1 mol/L KOH alcohol solution as a titrant. An inflection point thus obtained was defined as the end point. Besides this main test, a blank test of a sample solution not containing the hollow particles was carried out, and the acid value of the hollow particles was calculated by the following formula.

$$\text{Acid value (mmol/g)} = (V_1 - V_0) \times N \times f/S$$

S: Mass of the sample solution
$V_1$: Titrant amount (mL) in the main test
$V_0$: Titrant amount (mL) in the blank test
N: Concentration (mol/L) of the titrant
f: Factor of the titrant

## 3-2. Measurement of hydroxyl value

A mixture liquid was obtained by adding 2 g of the hollow particles to 5 mL of an acetylating reagent, which was prepared by dissolving 18 mL of acetic anhydride in 100 mL of pyridine, and mixing them. The obtained mixture liquid was heated in a hot water bath at 105°C for one hour; the mixture liquid was water-cooled; and then 30 mL of purified water was added to the mixture liquid, thereby obtaining a sample solution containing the hollow particles. Potentiometric titration of the sample solution containing the hollow particles was carried out with potentiometric titrator AT-710 (product name, manufactured by Kyoto Electronics Manufacturing Co., Ltd.) using a 0.5 mol/L KOH NaOH aqueous solution as a titrant. An inflection point thus obtained was defined as the end point. Besides this main test, a blank test of a solution not mixed with the hollow particles was carried out, and the hydroxyl value of the hollow particles was calculated by the following formula.

$$\text{hydroxyl value (mmol/g)} = \{(V_1 - V_0) \times N \times f/S\} + [\text{Acid value}]$$

S: Mass of the sample solution
$V_1$: Titrant amount (mL) in the main test
$V_0$: Titrant amount (mL) in the blank test
N: Concentration (mol/L) of the titrant
f: Factor of the titrant

4. Measurement of amine value

For the hollow particles having an amino group introduced therein as the reactive group, in accordance with JIS K 7237, the amine value was measured by potentiometric titration. The details of the measurement method are as follows.
A sample solution containing the hollow particles was obtained by adding 2 g of the hollow particles to 65 mL of a mixed solution of 2-nitrotoluene and acetic acid (at a volume ratio of 9:4) and mixing them. Potentiometric titration of the sample solution containing the hollow particles was carried out with potentiometric titrator AT-710 (product name, manufactured by Kyoto Electronics Manufacturing Co., Ltd.) using a 0.1 mol/L KOH perchloric acid-acetic acid solution as a titrant. An inflection point thus obtained was defined as the end point. Besides this main test, a blank test of a solution not mixed with the hollow particles was carried out, and the amine value of the hollow particles was calculated by the following formula.

$$\text{Amine value (mmol/g)} = (V_1 - V_0) \times N \times f / S$$

S: Mass of the sample solution
$V_1$: Titrant amount (mL) in the main test
$V_0$: Titrant amount (mL) in the blank test
N: Concentration (mol/L) of the titrant
f: Factor of the titrant

5. Adhesion to resin

5-1. Adhesion to acid-modified PP

On a hot plate heated to 200°C or more, 0.2 g of the hollow particles and 0.8 g of an acid-modified PP (product name: UMEX 1001, manufactured by: Sanyo Chemical Industries, Ltd., a highly modified polypropylene having a polypropylene segment and a carboxylic anhydride segment) were melted and mixed to obtain a mixture. The obtained mixture in a melted state was spread into a thin layer having a thickness of about 5 mm, and cooled down, thereby forming a molded body. The obtained molded body was cut, and the state of the interface of the hollow particles and the resin (acid-modified PP) on the section of the cut molded body, was observed by SEM. At least 100 hollow particles were observed, and the percentage of hollow particles with cohesive failure was calculated to evaluate the adhesion to the acid-modified PP based on the following evaluation criteria. The hollow particles with cohesive failure are particles in such a state, that they collapsed with their shells, and cohesive failure is likely to occur when the adhesion of the interface of the hollow particles and the resin is high. In the examples, the shell of the hollow particles with cohesive failure cracked; however, the shape of the hollow portion was retained.

(Evaluation criteria of adhesion)

A: The percentage of the hollow particles with cohesive failure is 40% or more.
B: The percentage of the hollow particles with cohesive failure is 25% or more and less than 40%.
C: The percentage of the hollow particles with cohesive failure is 10% or more and less than 25%.
D: The percentage of the hollow particles with cohesive failure is less than 10%.

5-2. Adhesion to epoxy-based resin

First, 0.2 g of the hollow particles were added to 0.8 g of a base material (agent A), which was an epoxy-based adhesive (product name: QUICK 5, manufactured by: Konishi Co., Ltd.), and they uniformly were mixed to obtain a resin composition. In addition, 0.9 g of a curing agent (agent B) was added to the obtained resin composition, and they were mixed to obtain a mixture. The obtained mixture was spread into a thin layer having a thickness of about 2 mm, and the thin layer of the mixture was left and cured at normal temperature for 24 hours, thereby obtaining a molded body. The obtained molded body was cut and, and the state of the interface of the hollow particles and the resin (epoxy-based resin) on the section of the cut molded body was observed by SEM. At least 100 hollow particles were observed, and the percentage of hollow particles with cohesive failure was calculated to evaluate the adhesion to the epoxy-based resin, based on the same evaluation as the above-mentioned evaluation criteria of the adhesion to the acid-modified PP. In the examples, the shell of the hollow particles with cohesive failure cracked; however, the shape of the hollow portion was retained.

6. Pressure resistance

On a hot plate heated to 200°C or more, 0.1 g of the hollow particles and 0.9 g of a polypropylene (product name: NOVATECPP MA1B, manufactured by: Japan Polypropylene Corporation) were melted and mixed to obtain a mixture. The obtained mixture was poured into a mold (manufactured by AS ONE Corporation, diameter 14 mm) for hot press machines, and the mold was placed in a dryer at 230°C and heated for 15 minutes. Then, the mold was removed from the dryer and placed at a hot press machine (model: H300-15, manufactured by: AS ONE Corporation) set to 90°C. A cylinder at 90°C was put in the mold. At the time the temperature of the mold surface decreased to 130°C, a press pressure of 30 MPa was applied to produce a molded body. At this time, the cylinder pressure of the press machine was set to 2 MPa. The specific gravity of the obtained molded body was measured, and the pressure resistance of the hollow particles was evaluated based on the following evaluation criteria. The theoretical specific gravity on the assumption of retaining the void of the hollow particles in the molded body, is 0.82.

Also, the void retention rate of the hollow particles was calculated by the following formulae (V) to (VII). In the case of using resin curing additives such as a curing agent, a curing accelerator and a catalyst, the total amount of the added resin and the added additives may be used as the amount of the solidified resin product in the following formulae (V) and (VI).

```
Formula (V):
Theoretical specific gravity A1 when all the hollow
particles maintained the void

= 1/{([Amount (% by mass) of the hollow
particles]/[Apparent density D₁ (g/cm³) of the hollow
particles])+([Amount (% by mass) of the solidified resin
product]/[Specific gravity (g/cm³) of the solidified resin
product])}


Formula (VI):
Theoretical specific gravity A2 when all the hollow
particles collapsed

= 1/{([Amont (% by mass) of the hollow particles]/[True
density D₀ (g/cm³) of the hollow particles])+([Amount (% by mass)
of the solidified resin product]/[Specific gravity (g/cm³) of
the solidified resin product])}
```

```
Formula (VII):

Void retention rate (%)

= {(A2-[Specific gravity (g/cm³) of the obtained molded
body])/(A2-A1)}×100
```

(Evaluation criteria of pressure resistance)

A: 0.82 or more and less than 0.84 (Void retention rate: 80% to 100%)
B: 0.84 or more and less than 0.87 (Void retention rate: 53% to 79%)
C: 0.87 or more and less than 0.89 (Void retention rate: 36% to 52%)
D: 0.89 or more (Void retention rate: 0% to 35%)

7. Percentage of impurity particles

The percentage of the impurity particles was calculated by observing the hollow particles with a FE-SEM at a viewing angle at a magnification of 1000x and counting the number of the impurity particles included in randomly selected 100 particles. The hollow particles obtained in the examples and comparative examples were spherical and had a hollow portion, except for the impurity particles.

[Table 1]

Table 1

| | | | | Example 1 | Example 2 | Example 3 | Example 4 | Example 5 | Example 6 | Example 7 |
|---|---|---|---|---|---|---|---|---|---|---|
| Polymerizable monomer | Crosslinkable monomer | Reactive group-free | Ethylene glycol dimethacrylate (parts) | 24 | 25 | 54 | 65 | 68 | 41 | |
| | | | Pentaerythritol tetraacrylate (parts) | 20 | 20 | 20 | 20 | 20 | 20 | |
| | | | Divinylbenzene (parts) | 17 | 17 | | | | | |
| | | Reactive group-containing | 2-Hydroxy-3-methacryloyloxypropyl acrylate (parts) | 26 | | 26 | 15 | 12 | 39 | 100 |
| | | | Diallylamine (parts) | | 25 | | | | | |
| | Non-crosslinkable monomer | Reactive group-free | Ethylvinylbenzene (parts) | 13 | 13 | | | | | |
| | | Reactive group-containing | 2-Hydroxyethyl methacrylate (parts) | | | | | | | |
| | | | Glycidyl methacrylate (parts) | | | | | | | |
| Oil-soluble polymerization initiator (parts) | | | | 3 | 3 | 3 | 3 | 3 | 3 | 3 |
| Hydrophobic solvent | | | Cyclohexane (parts) | | | 120 | 120 | 120 | 120 | 120 |
| | | | Hexane (parts) | 100 | 100 | | | | | |
| Polar component | | | Rosin acid (parts) | 0.007 | 0.007 | 0.007 | 0.007 | 0.007 | 0.007 | 0.007 |
| Dispersion stabilizer | | | Magnesium hydroxide (parts) | 4 | 4 | 4 | 4 | 4 | 4 | 4 |
| Ion-exchanged water (parts) | | | | 615 | 615 | 615 | 615 | 615 | 615 | 615 |
| Crosslinking agent | | | Ethylenediamine (parts) | | | | | | | |
| Properties of hollow particles | | | Volume average particle diameter ($\mu$m) | 12.4 | 11.8 | 10.5 | 10.2 | 10.2 | 9.8 | 8.9 |
| | | | Apparent density $D_1$ (g/cm$^3$) | 0.42 | 0.42 | 0.42 | 0.42 | 0.42 | 0.42 | 0.42 |
| | | | True density $D_0$ (g/cm$^3$) | 1.20 | 1.20 | 1.20 | 1.20 | 1.20 | 1.20 | 1.20 |
| | | | Void ratio (%) | 65 | 65 | 65 | 65 | 65 | 65 | 65 |
| | | | Hydroxyl value (mmol/g) | 0.54 | | 0.52 | 0.38 | 0.21 | 0.61 | 2.60 |
| | | | Amine value (mmol/g) | | 0.25 | | | | | |

42

| | | | Example 1 | Example 2 | Example 3 | Example 4 | Example 5 | Example 6 | Example 7 |
|---|---|---|---|---|---|---|---|---|---|
| | Adhesion to resin | Acid-modified PP | A | A | A | B | B | A | A |
| | | Epoxy-based resin | A | A | A | B | C | A | A |
| | Pressure resistance | | B | B | A | A | A | A | B |
| Impurity particles (%) | | | 3 | 2 | 2 | 1 | 1 | 4 | 1 |

Table 1-continued (1)

| | | | | Example 8 | Example 9 | Example 10 | Example 11 | Example 12 | Example 13 |
|---|---|---|---|---|---|---|---|---|---|
| Polymerizable monomer | Crosslinkable monomer | Reactive group-free | Ethylene glycol dimethacrylate (parts) | 47 | 55 | 50 | 40 | 65 | 47 |
| | | | Pentaerythritol tetraacrylate (parts) | 20 | 20 | 20 | 20 | 20 | 20 |
| | | | Divinylbenzene (parts) | | | | | | |
| | | Reactive group-con-taining | 2-Hydroxy-3-methacryloyloxy-propyl acrylate (parts) | | | | | 15 (Second polymerization reaction) | |
| | | | Diallylamine (parts) | | 25 | 30 | 40 | | |
| | Non-crosslinkable monomer | Reactive group-free | Ethylvinylbenzene (parts) | | | | | | |
| | | Reactive group-containing | 2-Hydroxyethyl methacrylate (parts) | 33 | | | | | 33 (Second polymerization reaction) |
| | | | Glycidyl methacrylate (parts) | | | | | | |
| Oil-soluble polymerization initiator (parts) | | | | 3 | 3 | 3 | 3 | 3 | 3 |
| Hydrophobic solvent | | | Cyclohexane (parts) | 120 | 120 | 120 | 120 | 120 | 120 |
| | | | Hexane (parts) | | | | | | |
| Polar component | | | Rosin acid (parts) | 0.007 | 0.007 | 0.007 | 0.007 | 0.007 | 0.007 |
| Dispersion stabilizer | | | Magnesium hydroxide (parts) | 4 | 4 | 4 | 4 | 4 | 4 |
| Ion-exchanged water (parts) | | | | 615 | 615 | 615 | 615 | 615 | 615 |
| Crosslinking agent | | | Ethylenediamine (parts) | | | | | | |
| Properties of hollow particles | | | Volume average particle diameter ($\mu$m) | 10.7 | 12.5 | 11.2 | 11.2 | 10.6 | 10.7 |
| | | | Apparent density $D_1$ (g/cm$^3$) | 0.42 | 0.42 | 0.42 | 0.42 | 0.41 | 0.38 |
| | | | True density $D_0$ (g/cm$^3$) | 1.20 | 1.20 | 1.20 | 1.20 | 1.20 | 1.20 |
| | | | Void ratio (%) | 65 | 65 | 65 | 65 | 66 | 68 |
| | | | Hydroxyl value (mmol/g) | 1.30 | | | | 0.35 | 1.10 |
| | | | Amine value (mmol/g) | | 0.24 | 0.38 | 0.58 | | |

(continued)

| | | Example 8 | Example 9 | Example 10 | Example 11 | Example 12 | Example 13 |
|---|---|---|---|---|---|---|---|
| Adhesion to resin | Acid-modified PP | B | B | A | A | B | B |
| | Epoxy-based resin | B | A | A | A | B | B |
| Pressure resistance | | C | B | B | C | B | C |
| Impurity particles (%) | | 4 | 3 | 4 | 4 | 1 | 4 |

Table 1-continued (2)

| | | | | Comparative Example 1 | Comparative Example 2 | Comparative Example 3 | Comparative Example 4 |
|---|---|---|---|---|---|---|---|
| Polymerizable monomer | Crosslinkable monomer | Reactive group-free | Ethylene glycol dimethacrylate (parts) | 80 | 70 | 65 | |
| | | | Pentaerythritol tetraacrylate (parts) | 20 | 20 | 20 | |
| | | | Divinylbenzene (parts) | | | | |
| | | Reactive group-containing | 2-Hydroxy-3-methacryloyloxypropyl acrylate (parts) | | 10 | | |
| | | | Diallylamine (parts) | | | 15 | |
| | Non-crosslinkable monomer | Reactive group-free | Ethylvinylbenzene (parts) | | | | |
| | | Reactive group-containing | 2-Hydroxyethyl methacrylate (parts) | | | | |
| | | | Glycidyl methacrylate (parts) | | | | 100 |
| Oil-soluble polymerization initiator (parts) | | | | 3 | 3 | 3 | 3 |
| Hydrophobic solvent | | | Cyclohexane (parts) | 120 | 120 | 120 | 120 |
| | | | Hexane (parts) | | | | |
| Polar component | | | Rosin acid (parts) | 0.007 | 0.007 | 0.007 | 0.007 |
| Dispersion stabilizer | | | Magnesium hydroxide (parts) | 4 | 4 | 4 | 4 |
| Ion-exchanged water (parts) | | | | 615 | 615 | 615 | 615 |
| Crosslinking agent | | | Ethylenediamine (parts) | | | | 40 |
| Properties of hollow particles | | | Volume average particle diameter ($\mu$m) | 8.7 | 9.5 | 9.8 | 10.7 |
| | | | Apparent density $D_1$ (g/cm$^3$) | 0.42 | 0.42 | 0.42 | 0.42 |
| | | | True density $D_0$ (g/cm$^3$) | 1.20 | 1.20 | 1.20 | 1.20 |
| | | | Void ratio (%) | 65 | 65 | 65 | 65 |
| | | | Hydroxyl value (mmol/g) | | 0.19 | | Not measured |
| | | | Amine value (mmol/g) | | | 0.18 | |
| | | | Adhesion to resin — Acid-modified PP | D | C | D | B |
| | | | Adhesion to resin — Epoxy-based resin | D | D | C | B |

EP 4 714 536 A2

(continued)

| | | Comparative Example 1 | Comparative Example 2 | Comparative Example 3 | Comparative Example 4 |
|---|---|---|---|---|---|
| | Pressure resistance | B | B | B | D |
| Impurity particles (%) | | 0 | 1 | 2 | 8 |

Table 2 shows molded bodies M1 to M26 and CM1 to CM8, which were produced to evaluate the adhesion of the hollow particles of the examples and comparative examples shown in Table 1 to the resin. The molded bodies M1 to M26 contained the hollow particles derived from the hollow particles of the present disclosure and the solidified resin product, and the shell of the hollow particles was crosslinked to the solidified resin product.

[Table 2]

Table 2

| Resin molded body number | Hollow particles | | | | Resin | | | Curing agent | Adhesion between hollow particles and resin |
| | Example number | Reactive group | Hydroxyl value or amine value (mmol/g) | Mass % | Type | Functional group | Mass % | Mass % | |
|---|---|---|---|---|---|---|---|---|---|
| M1 | Example 1 | -OH | 0.54 | 20 | Acid-modified PP | Carboxylic anhydride group | 80 | 0 | A |
| M2 | Example 1 | -OH | 0.54 | 11 | Epoxy-based adhesive | Epoxy group | 42 | 47 | A |
| M3 | Example 2 | -NHR | 0.25 | 20 | Acid-modified PP | Carboxylic anhydride group | 80 | 0 | A |
| M4 | Example 2 | -NHR | 0.25 | 11 | Epoxy-based adhesive | Epoxy group | 42 | 47 | A |
| M5 | Example 3 | -OH | 0.52 | 20 | Acid-modified PP | Carboxylic anhydride group | 80 | 0 | A |
| M6 | Example 3 | -OH | 0.52 | 11 | Epoxy-based adhesive | Epoxy group | 42 | 47 | A |
| M7 | Example 4 | -OH | 0.38 | 20 | Acid-modified PP | Carboxylic anhydride group | 80 | 0 | B |
| M8 | Example 4 | -OH | 0.38 | 11 | Epoxy-based adhesive | Epoxy group | 42 | 47 | B |
| M9 | Example 5 | -OH | 0.21 | 20 | Acid-modified PP | Carboxylic anhydride group | 80 | 0 | B |
| M10 | Example 5 | -OH | 0.21 | 11 | Epoxy-based adhesive | Epoxy group | 42 | 47 | C |
| M11 | Example 6 | -OH | 0.61 | 20 | Acid-modified PP | Carboxylic anhydride group | 80 | 0 | A |

(continued)

| Resin molded body number | Hollow particles | | | | Resin | | | Curing agent | Adhesion between hollow particles and resin |
|---|---|---|---|---|---|---|---|---|---|
| | Example number | Reactive group | Hydroxyl value or amine value (mmol/g) | Mass % | Type | Functional group | Mass % | Mass % | |
| M12 | Example 6 | -OH | 0.61 | 11 | Epoxy-based adhesive | Epoxy group | 42 | 47 | A |
| M13 | Example 7 | -OH | 2.60 | 20 | Acid-modified PP | Carboxylic anhydride group | 80 | 0 | A |
| M14 | Example 7 | -OH | 2.60 | 11 | Epoxy-based adhesive | Epoxy group | 42 | 47 | A |
| M15 | Example 8 | -OH | 1.30 | 20 | Acid-modified PP | Carboxylic anhydride group | 80 | 0 | B |
| M16 | Example 8 | -OH | 1.30 | 11 | Epoxy-based adhesive | Epoxy group | 42 | 47 | B |
| M17 | Example 9 | -NHR | 0.24 | 20 | Acid-modified PP | Carboxylic anhydride group | 80 | 0 | B |
| M18 | Example 9 | -NHR | 0.24 | 11 | Epoxy-based adhesive | Epoxy group | 42 | 47 | A |
| M19 | Example 10 | -NHR | 0.38 | 20 | Acid-modified PP | Carboxylic anhydride group | 80 | 0 | A |
| M20 | Example 10 | -NHR | 0.38 | 11 | Epoxy-based adhesive | Epoxy group | 42 | 47 | A |
| M21 | Example 11 | -NHR | 0.58 | 20 | Acid-modified PP | Carboxylic anhydride group | 80 | 0 | A |
| M22 | Example 11 | -NHR | 0.58 | 11 | Epoxy-based adhesive | Epoxy group | 42 | 47 | A |
| M23 | Example 12 | -OH | 0.35 | 20 | Acid-modified PP | Carboxylic anhydride group | 80 | 0 | B |
| M24 | Example 12 | -OH | 0.35 | 11 | Epoxy-based adhesive | Epoxy group | 42 | 47 | B |
| M25 | Example 13 | -OH | 1.10 | 20 | Acid-modified PP | Carboxylic anhydride group | 80 | 0 | B |

(continued)

| Resin molded body number | Hollow particles | | | | Resin | | Curing agent | Adhesion between hollow particles and resin |
|---|---|---|---|---|---|---|---|---|
| | Example number | Reactive group | Hydroxyl value or amine value (mmol/g) | Mass % | Type | Functional group | Mass % | Mass % |
| M26 | Example 13 | -OH | 1.10 | 11 | Epoxy-based adhesive | Epoxy group | 42 | 47 | B |



| Resin molded body number | Example number | Reactive group | Hydroxyl value or amine value (mmol/g) | Mass % | Type | Functional group | Mass % (Resin) | Mass % (Curing agent) | Adhesion between hollow particles and resin |
|---|---|---|---|---|---|---|---|---|---|
| M26 | Example 13 | -OH | 1.10 | 11 | Epoxy-based adhesive | Epoxy group | 42 | 47 | B |

Table 2-continued

| Resin molded body number | Example number | Reactive group | Hydroxyl value or amine value (mmol/g) | Mass % | Type | Functional group | Mass % (Resin) | Mass % (Curing agent) | Adhesion between hollow particles and resin |
|---|---|---|---|---|---|---|---|---|---|
| CM1 | Comparative Example 1 | - | - | 20 | Acid-modified PP | Carboxylic anhydride group | 80 | 0 | D |
| CM2 | Comparative Example 1 | - | - | 11 | Epoxy-based adhesive | Epoxy group | 42 | 47 | D |
| CM3 | Comparative Example 2 | -OH | 0.19 | 20 | Acid-modified PP | Carboxylic anhydride group | 80 | 0 | C |
| CM4 | Comparative Example 2 | -OH | 0.19 | 11 | Epoxy-based adhesive | Epoxy group | 42 | 47 | D |
| CM5 | Comparative Example 3 | -NHR | 0.18 | 20 | Acid-modified PP | Carboxylic anhydride group | 80 | 0 | D |
| CM6 | Comparative Example 3 | -NHR | 0.18 | 11 | Epoxy-based adhesive | Epoxy group | 42 | 47 | C |
| CM7 | Comparative Example 4 | - | Not measured | 20 | Acid-modified PP | Carboxylic anhydride group | 80 | 0 | B |
| CM8 | Comparative Example 4 | - | Not measured | 11 | Epoxy-based adhesive | Epoxy group | 42 | 47 | B |

[Consideration]

In the hollow particles obtained in Comparative Example 1, the polymer in the shell did not contain a monomer unit containing a reactive group, and the hollow particles did not have enough reactive groups on the surface. Accordingly, the hollow particles had poor adhesion to the resin.

In the hollow particles obtained in Comparative Example 2, although the polymer in the shell contained the monomer unit containing a hydroxy group, the amount of a hydroxy group on the particle surface was insufficient, and the hydroxyl value was less than 0.20 mmol/g. Accordingly, the hollow particles had poor adhesion to the resin.

In the hollow particles obtained in Comparative Example 3, although the polymer in the shell contained the monomer unit containing an amino group, the amount of the amino group on the particle surface was insufficient, and the amine value was less than 0.20 mmol/g. Accordingly, the hollow particles had poor adhesion to the resin.

The hollow particles obtained in Comparative Example 4 were such hollow particles, that the shell was formed by polymerizing glycidyl methacrylate and then crosslinking the polymer by ethylenediamine, and the hollow particles had poor pressure resistance. It is presumed that, since the shell of the hollow particles obtained in Comparative Example 4 did not contain a crosslinkable monomer unit, the strength of the shell was insufficient and resulted in poor pressure resistance.

In the hollow particles obtained in Examples 1 to 13, the polymer in the shell contained from 60 parts by mass to 100 parts by mass of the crosslinkable monomer unit in 100 parts by mass of all the monomer units; since the polymer contained in the shell contained the monomer unit containing at least one kind selected from a hydroxy group and an amino group, the hollow particles had at least one kind selected from a hydroxy group and an amino group on the particle surface; and the hydroxyl value was 0.20 mmol/g or more, or the amine value was 0.20 mmol/g or more. Accordingly, the pressure resistance of the hollow particles was excellent even though the void ratio is 50% or more and high; and the hollow particles had excellent adhesion to the resin in the molded body formed by use of the epoxy-based resin or acid-modified PP resin containing a functional group that was able to form a crosslink with a hydroxyl or amino group.

Especially, the hollow particles obtained in Examples 1 to 6, 9, 10 and 12 were particularly excellent in pressure resistance. In the hollow particles obtained in these examples, the content of the crosslinkable monomer unit was large; the hollow particles contained the reactive group-free monomer unit as the crosslinkable monomer unit; and the total content of the (meth)acrylic monomer unit and the crosslinkable monomer unit derived from the vinyl-based crosslinkable monomer having a molecular weight of 250 or less and not containing a reactive group, was large. It is estimated that for these reasons, the hollow particles obtained in these examples had an excellent effect of improving the pressure resistance. Especially, the hollow particles obtained in Examples 3 to 6 were particularly excellent in pressure resistance. This is presumed to be because, in the hollow particles obtained in these examples, the content of the crosslinkable monomer unit and the total content of the (meth)acrylic monomer unit and the crosslinkable monomer unit derived from the vinyl-based crosslinkable monomer having a molecular weight of 250 or less and not containing a reactive group, were particularly large.

Also, the hollow particles obtained in Example 7 were excellent in pressure resistance. Although the hollow particles obtained in Example 7 did not contain the reactive group-free monomer unit as the crosslinkable monomer unit, the content of the crosslinkable monomer unit was large, and the total content of the (meth)acrylic monomer unit and the crosslinkable monomer unit derived from the vinyl-based crosslinkable monomer having a molecular weight of 250 or less and not containing a reactive group was large. It is presumed that for these reasons, the hollow particles obtained in Example 7 had an excellent effect of improving the pressure resistance.

The polymerizable monomers used to form the shell in Examples 12 and 13 are the same as those used in Examples 4 and 8. However, the hydroxyl values of Examples 12 and 13 are slightly lower than those of Example 4 an 8. This is presumed to be because, in Examples 12 and 13, a part of the hydroxy group-containing polymerizable monomer, which was added during the second polymerization reaction, was not introduced in the shell. Considering the amount of the monomer that passed to the aqueous phase side, which is calculated from the theoretical apparent density $D_2$ (a theoretical apparent density calculated from the true density $D_0$ and theoretical void ratio of the hollow particles) and apparent density $D_1$ of the hollow particles, the contents of the monomer units in Examples 12 and 13 can be calculated.

The formulae for calculating the theoretical void ratio, the theoretical apparent density $D_2$ and the amount of the monomer that passed to the aqueous phase side in all the polymerizable monomers, are as follows.

```
Theoretical void ratio (%)

= ([Parts by mass of the hydrophobic solvent]/[Specific

gravity of the hydrophobic solvent])/([Parts by mass of the

hydrophobic solvent]/[Specific gravity of the hydrophobic

solvent]+[Parts by mass of the polymerizable monomer]/[True

density D₀])×100
```

Theoretical apparent density $D_2$ (g/cm$^3$)

= [True density $D_0$]×(100-[Theoretical void ratio])

Amount (% by mass) of the monomer that passed to the aqueous phase side

= ([Theoretical apparent density $D_2$]-[Apparent density $D_1$])/[Theoretical apparent density $D_2$]×100

In Example 12, with respect to 100 parts by mass of all the monomer units, the content of the monomer unit derived from ethylene glycol dimethacrylate was 67 parts by mass; the content of the monomer unit derived from pentaerythritol tetraacrylate was 21 parts by mass; and the content of the monomer unit derived from 2-hydroxy-3-methacryloyloxypropyl acrylate was 12 parts by mass.

In Example 12, the amount of the monomer that passed to the aqueous phase side (2-hydroxy-3-methacryloyloxypropyl acrylate) was 2.9% by mass of all the polymerizable monomers. Considering this, the ethylene glycol dimethacrylate (EGDMA) unit was calculated as follows, for example. Each of the calculated monomer unit amounts was a value rounded off to the whole number.

Amount (67 parts by mass) of the EGDMA unit

= [Amount (65 parts by mass) of EGDMA]×100/(100-[Amount (2.9 parts by mass) of the monomer that passed to the aqueous phase side])

Even in Example 13, the amounts of the monomer units were calculated in the same manner as Example 12. As a result, with respect to 100 parts by mass of all the monomer units, the content of the monomer unit derived from ethylene glycol dimethacrylate was 52 parts by mass; the content of the monomer unit derived from pentaerythritol tetraacrylate was 22 parts by mass; and the content of the monomer unit derived from 2-hydroxyethyl methacrylate was 26 parts by mass. In Example 13, the amount of the monomer that passed to the aqueous phase side (2-hydroxyethyl methacrylate) was 9.5% by mass of all the polymerizable monomers.

[Examples 14 to 29]

The hollow particles of Examples 14 to 29 were obtained in the same manner as Example 1, except that in "(1) Mixture liquid preparation step", the type and amount of the polymerizable monomer added to the oil phase and those of the hydrophobic solvent were changed as shown in Table 3.

The hollow particles obtained in Examples 14 to 29 were subjected to the same measurement as the one performed on the hollow particles of Examples 1 to 13. The hollow particles obtained in Examples 18 and 29 were further subjected to acid value measurement. The acid value of the hollow particles was measured by the same method as the one described above in "3-1. Measurement of acid value" under "3. Measurement of hydroxyl value". The hollow particles obtained in Examples 14 to 29 were spherical and had a hollow portion, except for the impurity particles.

[Table 3]

Table 3

| | | | | Example 14 | Example 15 | Example 16 | Example 17 | Example 18 | Example 19 |
|---|---|---|---|---|---|---|---|---|---|
| Polymerizable monomer | Crosslinkable monomer | Reactive group-free | Ethylene glycol dimethacrylate (parts) | 65 | 65 | | 40 | 40 | 30 |
| | | | Pentaerythritol tetraacrylate (parts) | | | 20 | | 20 | 20 |
| | | | Divinylbenzene (parts) | | | | | 29 | 29 |
| | | | Trimethylolpropane triacrylate (parts) | | | 50 | | | |
| | | | Bifunctional urethane acrylate (parts) | | | | 10 | | |
| | | Reactive group-containing | 2-Hydroxy-3-methacryloyloxypropyl acrylate (parts) | 15 | 15 | 30 | | | |
| | | | Glycerol diacrylate (parts) | | | | 30 | | |
| | | | 1,3-Bis(methacryloyloxy)-2-hydroxypropane (parts) | | | | | | |
| | | | Modified polybasic acrylic oligomer (parts) | | | | | 10 | |
| | | | Diallylamine (parts) | | | | | | 20 |
| | | Reactive group-free | Ethylvinylbenzene (parts) | | | | | 1 | 1 |
| | | | Styrene (parts) | | | | 20 | | |
| | | | Methyl methacrylate (parts) | | 20 | | | | |
| | | | Butyl acrylate (parts) | 20 | | | | | |

EP 4 714 536 A2

53

EP 4 714 536 A2

| | | | | Example 14 | Example 15 | Example 16 | Example 17 | Example 18 | Example 19 |
|---|---|---|---|---|---|---|---|---|---|
| | Non-crosslink-able monomer | Reactive group-con-taining | 2-Hydroxyethyl methacrylate (parts) | | | | | | |
| | | | 2-Hydroxyethyl acrylate (parts) | | | | | | |
| | | | Allyl glycidyl ether (parts) | | | | | | |
| | | | Glycidyl methacrylate (parts) | | | | | | |
| | | | 2-(tert-Butylamino)ethyl methacrylate (parts) | | | | | | |
| | | | Methacrylamide (parts) | | | | | | |
| | | | 2-Acrylamido-2-methylpropanesulfonate (parts) | | | | | | |
| Oil-soluble polymerization initiator (parts) | | | | 3 | 3 | 3 | 3 | 3 | 3 |
| Hydrophobic solvent | | | Cyclohexane (parts) | 120 | 120 | 120 | | | |
| | | | Hexane (parts) | | | | 100 | 100 | 100 |
| Polar component | | | Rosin acid (parts) | 0.007 | 0.007 | 0.007 | 0.007 | 0.007 | 0.007 |
| Dispersion stabilizer | | | Magnesium hydroxide (parts) | 4 | 4 | 4 | 4 | 4 | 4 |
| Ion-exchanged water (parts) | | | | 615 | 615 | 615 | 615 | 615 | 615 |
| Properties of hollow particles | | | Volume average particle diameter ($\mu$m) | 8.6 | 10.3 | 9.9 | 11.4 | 12.0 | 11.7 |
| | | | Apparent density $D_1$ (g/cm$^3$) | 0.42 | 0.42 | 0.42 | 0.42 | 0.42 | 0.42 |
| | | | True density $D_0$ (g/cm$^3$) | 1.20 | 1.20 | 1.20 | 1.20 | 1.20 | 1.20 |
| | | | Void ratio (%) | 65 | 65 | 65 | 65 | 65 | 65 |
| | | | Hydroxyl value (mmol/g) | 0.36 | 0.38 | 0.55 | 0.54 | | |
| | | | Amine value (mmol/g) | | | | | | 0.22 |
| | | | Acid value (mmol/g) | | | | | 0.88 | |
| Impurity particles (%) | | | | 4 | 4 | 0 | 4 | 2 | 2 |

Table 3-continued (1)

| | | | | Example 20 | Example 21 | Example 22 | Example 23 | Example 24 |
|---|---|---|---|---|---|---|---|---|
| Polymerizable monomer | Crosslinkable monomer | Reactive group-free | Ethylene glycol dimethacrylate (parts) | | | | 10 | 10 |
| | | | Pentaerythritol tetraacrylate (parts) | 20 | 20 | 20 | 20 | 20 |
| | | | Divinylbenzene (parts) | 29 | | | 29 | 29 |
| | | | Trimethylolpropane triacrylate (parts) | | | | | |
| | | | Bifunctional urethane acrylate (parts) | | | | | |
| | | Reactive group-containing | 2-Hydroxy-3-methacryloyloxypropyl acrylate (parts) | | | | | |
| | | | Glycerol diacrylate (parts) | | | | | |
| | | | 1,3-Bis(methacryloyloxy)-2-hydroxypropane (parts) | 45 | 45 | 40 | 25 | 25 |
| | | | Modified polybasic acrylic oligomer (parts) | | | | | |
| | | | Diallylamine (parts) | | | | | |
| | | Reactive group-free | Ethylvinylbenzene (parts) | 1 | | | 1 | 1 |
| | | | Styrene (parts) | | 30 | | | |
| | | | Methyl methacrylate (parts) | | | 35 | | |
| | | | Butyl acrylate (parts) | | | | | |

(continued)

| | | | Example 20 | Example 21 | Example 22 | Example 23 | Example 24 |
|---|---|---|---|---|---|---|---|
| Non-crosslinkable monomer | Reactive group-containing | 2-Hydroxyethyl methacrylate (parts) | | | | | |
| | | 2-Hydroxyethyl acrylate (parts) | | | | | 15 |
| | | Allyl glycidyl ether (parts) | | | | | |
| | | Glycidyl methacrylate (parts) | | | | | |
| | | 2-(tert-Butylamino)ethyl methacrylate (parts) | 5 | 5 | 5 | 15 | |
| | | Methacrylamide (parts) | | | | | |
| | | 2-Acrylamido-2-methylpropanesulfonate (parts) | | | | | |
| Oil-soluble polymerization initiator (parts) | | | 3 | 3 | 3 | 3 | 3 |
| Hydrophobic solvent | | Cyclohexane (parts) | | | | | |
| | | Hexane (parts) | 100 | 100 | 100 | 100 | 100 |
| Polar component | | Rosin acid (parts) | 0.007 | 0.007 | 0.007 | 0.007 | 0.007 |
| Dispersion stabilizer | | Magnesium hydroxide (parts) | 4 | 4 | 4 | 4 | 4 |
| Ion-exchanged water (parts) | | | 615 | 615 | 615 | 615 | 615 |
| Properties of hollow particles | | Volume average particle diameter ($\mu$m) | 10.7 | 10.7 | 10.7 | 10.1 | 9.7 |
| | | Apparent density $D_1$ (g/cm$^3$) | 0.42 | 0.42 | 0.42 | 0.42 | 0.42 |
| | | True density $D_0$ (g/cm$^3$) | 1.20 | 1.20 | 1.20 | 1.20 | 1.20 |
| | | Void ratio (%) | 65 | 65 | 65 | 65 | 65 |
| | | Hydroxyl value (mmol/g) | 0.61 | 0.59 | 0.60 | 0.52 | 0.66 |
| | | Amine value (mmol/g) | 0.35 | 0.34 | 0.33 | 0.71 | |
| | | Acid value (mmol/g) | | | | | |
| Impurity particles (%) | | | 0 | 0 | 0 | 2 | 2 |

Table 3-continued (2)

| | | | | Example 25 | Example 26 | Example 27 | Example 28 | Example 29 |
|---|---|---|---|---|---|---|---|---|
| Polymerizable monomer | Crosslinkable monomer | Reactive group-free | Ethylene glycol dimethacrylate (parts) | 10 | 10 | 10 | | 25 |
| | | | Pentaerythritol tetraacrylate (parts) | 20 | 20 | 20 | 20 | 20 |
| | | | Divinylbenzene (parts) | 29 | 29 | 29 | 29 | 29 |
| | | | Trimethylolpropane triacrylate (parts) | | | | | |
| | | | Bifunctional urethane acrylate (parts) | | | | | |
| | | Reactive group-containing | 2-Hydroxy-3-methacryloyloxypropyl acrylate (parts) | | | | | |
| | | | Glycerol diacrylate (parts) | | | | | |
| | | | 1,3-Bis(methacryloyloxy)-2-hydroxypropane (parts) | 25 | 25 | 25 | 45 | 10 |
| | | | Modified polybasic acrylic oligomer (parts) | | | | | |
| | | | Diallylamine (parts) | | | | | |
| | Non-crosslinkable monomer | Reactive group-free | Ethylvinylbenzene (parts) | 1 | 1 | 1 | 1 | 1 |
| | | | Styrene (parts) | | | | | |
| | | | Methyl methacrylate (parts) | | | | | |
| | | | Butyl acrylate (parts) | | | | | |
| | | Reactive group-containing | 2-Hydroxyethyl methacrylate (parts) | 15 | | | | |
| | | | 2-Hydroxyethyl acrylate (parts) | | | | | |
| | | | Allyl glycidyl ether (parts) | | | 15 | | |
| | | | Glycidyl methacrylate (parts) | | 15 | | | |
| | | | 2-(tert-Butylamino)ethyl methacrylate (parts) | | | | 5 | |
| | | | Methacrylamide (parts) | | | | | |
| | | | 2-Acrylamido-2-methylpropanesulfonate (parts) | | | | | 15 |
| Oil-soluble polymerization initiator (parts) | | | | 3 | 3 | 3 | 3 | |
| Hydrophobic solvent | | | Cyclohexane (parts) | | | | | |
| | | | Hexane (parts) | 100 | 100 | 100 | 150 | 100 |

(continued)

| | | Example 25 | Example 26 | Example 27 | Example 28 | Example 29 |
|---|---|---|---|---|---|---|
| Polar component | Rosin acid (parts) | 0.007 | 0.007 | 0.007 | 0.007 | 0.007 |
| Dispersion stabilizer | Magnesium hydroxide (parts) | 4 | 4 | 4 | 4 | 4 |
| Ion-exchanged water (parts) | | 615 | 615 | 615 | 615 | 615 |
| Properties of hollow particles | Volume average particle diameter ($\mu$m) | 10.2 | 11.0 | 11.8 | 12.5 | 10.3 |
| | Apparent density $D_1$ (g/cm$^3$) | 0.42 | 0.42 | 0.42 | 0.3 | 0.42 |
| | True density $D_0$ (g/cm$^3$) | 1.20 | 1.20 | 1.20 | 1.20 | 1.20 |
| | Void ratio (%) | 65 | 65 | 65 | 75 | 65 |
| | Hydroxyl value (mmol/g) | 0.69 | 0.88 | 0.82 | 0.64 | |
| | Amine value (mmol/g) | | | | 0.31 | |
| | Acid value (mmol/g) | | | | | 0.22 |
| Impurity particles (%) | | 2 | 0 | 0 | 2 | 3 |

EP 4 714 536 A2

For the hollow particles obtained in Examples 14 to 29, the adhesion thereof to the acid-modified PP and the adhesion to the epoxy-based resin were evaluated in the same manner as Examples 1 to 13. In addition, the adhesion to the PMMA, the adhesion to the polyurethane-based resin, and the adhesion to the polyimide-based resin were also evaluated. The evaluation of the adhesions to the PMMA, the polyurethane-based resin and the polyimide-based resin was carried out as follows: a PMMA molded body, a polyurethane-based resin molded body and a polyimide-based resin molded body were produced, and the adhesion between the hollow particles and each resin in the obtained molded bodies, was evaluated in the same manner as the above-described evaluation of the adhesion to the acid-modified PP.

For the molded bodies $M_A1$ to $M_A80$, which were produced to evaluate the adhesion between the resins and the hollow particles obtained in Examples 14 to 29, the content ratio of the components, the evaluation results and so on are shown in Tables 4 to 6. Of the molded bodies $M_A1$ to $M_A80$, in $M_A23$, $M_A78$ and $M_A80$, are those in which the reactive group of the hollow particles and the functional group of the resin were not reactive with each other; therefore, the shell of the hollow particles was not crosslinked to the solidified resin product. The molded bodies other than them contained the hollow particles derived from the hollow particles of the present disclosure and the solidified resin product, and the shell of the hollow particles was crosslinked to the solidified resin product.

<Production of PMMA molded body>

On a hot plate heated to 180°C or more, 0.2 g of the hollow particles and 0.8 g of an acrylic resin (polymethyl methacrylate (PMMA)) were melted and mixed to obtain a mixture. The obtained mixture in a melted state was spread into a thin layer having a thickness of about 5 mm and cooled down, thereby forming a PMMA molded body containing hollow particles.

<Production of polyurethane-based resin molded body>

First, 0.2 g of the hollow particles were added to 0.4 g of a polyol component and 0.4 g of a polyisocyanate component, and they were uniformly mixed to obtain a mixture. The obtained mixture was poured onto an aluminum plate, and the mixture on the plate was left and cured at 200°C for two hours, thereby obtaining a polyurethane-based resin molded body containing hollow particles.

<Production of polyimide-based resin molded body>

First, 0.2 g of the hollow particles were added to 0.8 g of polyamic acid, and they were uniformly mixed to obtain a mixture. The obtained mixture was poured onto an aluminum plate, and the mixture on the plate was left at 350°C for one hour and imidized (cured) by cyclization of amic acid, thereby obtaining a polyimide-based resin molded body containing hollow particles.

Molded bodies $M_A1$ to $M_A80$ are shown in Tables 4 to 6, which were produced to evaluate the adhesion of the hollow particles of the examples shown in Table 3 to resin. The molded bodies shown in Tables 4 to 6 contained the hollow particles derived from the hollow particles of the present disclosure and the solidified resin product, and the shell of the hollow particles was crosslinked to the solidified resin product.

[Table 4]

EP 4 714 536 A2

Table 4

| Resin molded body number | Hollow particles | | | | | | Resin | | | Curing agent | Adhesion between hollow particles and resin |
|---|---|---|---|---|---|---|---|---|---|---|---|
| | Example number | Reactive group | Hydroxyl value (mmol/g) | Amine value (mmol/g) | Acid value (mmol/g) | Mass % | Type | Functional group | Mass % | Mass % | |
| M$_A$1 | Example 14 | -OH | 0.36 | - | - | 20 | Acid-modified PP | Carboxylic anhydride group | 80 | 0 | B |
| M$_A$2 | Example 14 | -OH | 0.36 | - | - | 11 | Epoxy-based adhesive | Epoxy group | 42 | 47 | B |
| M$_A$3 | Example 14 | -OH | 0.36 | - | - | 20 | PMMA | Methoxycarbonyl group | 80 | 0 | B |
| M$_A$4 | Example 14 | -OH | 0.36 | - | - | 20 | Polyurethane-based resin | Hydroxy group Isocyanate group | 80 | 0 | B |
| M$_A$5 | Example 14 | -OH | 0.36 | - | - | 20 | Polyimide-based resin | Carboxy group Amide bond | 80 | 0 | B |
| M$_A$6 | Example 15 | -OH | 0.38 | - | - | 20 | Acid-modified PP | Carboxylic anhydride group | 80 | 0 | B |
| M$_A$7 | Example 15 | -OH | 0.38 | - | - | 11 | Epoxy-based adhesive | Epoxy group | 42 | 47 | B |
| M$_A$8 | Example 15 | -OH | 0.38 | - | - | 20 | PMMA | Methoxycarbonyl group | 80 | 0 | B |
| M$_A$9 | Example 15 | -OH | 0.38 | - | - | 20 | Polyurethane-based resin | Hydroxy group Isocyanate group | 80 | 0 | B |
| M$_A$10 | Example 15 | -OH | 0.38 | - | - | 20 | Polyimide-based resin | Carboxy group Amide bond | 80 | 0 | B |
| M$_A$11 | Example 16 | -OH | 0.55 | - | - | 20 | Acid-modified PP | Carboxylic anhydride group | 80 | 0 | B |
| M$_A$12 | Example 16 | -OH | 0.55 | - | - | 11 | Epoxy-based adhesive | Epoxy group | 42 | 47 | B |

60

(continued)

| Resin molded body number | Example number | Hollow particles | | | | | Resin | | | Curing agent | Adhesion between hollow particles and resin |
|---|---|---|---|---|---|---|---|---|---|---|---|
| | | Reactive group | Hydroxyl value (mmol/g) | Amine value (mmol/g) | Acid value (mmol/g) | Mass % | Type | Functional group | Mass % | Mass % | |
| M$_A$13 | Example 16 | -OH | 0.55 | - | - | 20 | PMMA | Methoxycarbonyl group | 80 | 0 | B |
| M$_A$14 | Example 16 | -OH | 0.55 | - | - | 20 | Polyurethane-based resin | Hydroxy group Isocyanate group | 80 | 0 | B |
| M$_A$15 | Example 16 | -OH | 0.55 | - | - | 20 | Polyimide-based resin | Carboxy group Amide bond | 80 | 0 | B |
| M$_A$16 | Example 17 | -OH | 0.54 | - | - | 20 | Acid-modified PP | Carboxylic anhydride group | 80 | 0 | B |
| M$_A$17 | Example 17 | -OH | 0.54 | - | - | 11 | Epoxy-based adhesive | Epoxy group | 42 | 47 | B |
| M$_A$18 | Example 17 | -OH | 0.54 | - | - | 20 | PMMA | Methoxycarbonyl group | 80 | 0 | B |
| M$_A$19 | Example 17 | -OH | 0.54 | - | - | 20 | Polyurethane-based resin | Hydroxy group Isocyanate group | 80 | 0 | B |
| M$_A$20 | Example 17 | -OH | 0.54 | - | - | 20 | Polyimide-based resin | Carboxy group Amide bond | 80 | 0 | B |
| M$_A$21 | Example 18 | -COOH | - | - | 0.88 | 20 | Acid-modified PP | Carboxylic anhydride group | 80 | 0 | C |
| M$_A$22 | Example 18 | -COOH | - | - | 0.88 | 11 | Epoxy-based adhesive | Epoxy group | 42 | 47 | B |
| M$_A$23 | Example 18 | -COOH | - | - | 0.88 | 20 | PMMA | Methoxycarbonyl group | 80 | 0 | C |
| M$_A$24 | Example 18 | -COOH | - | - | 0.88 | 20 | Polyurethane-based resin | Hydroxy group Isocyanate group | 80 | 0 | B |
| M$_A$25 | Example 18 | -COOH | - | - | 0.88 | 20 | Polyimide-based resin | Carboxy group Amide bond | 80 | 0 | B |

(continued)

| Resin molded body number | Hollow particles | | | | | | Resin | | | Curing agent | Adhesion between hollow particles and resin |
|---|---|---|---|---|---|---|---|---|---|---|---|
| | Example number | Reactive group | Hydroxyl value (mmol/g) | Amine value (mmol/g) | Acid value (mmol/g) | Mass % | Type | Functional group | Mass % | Mass % | |
| M$_A$26 | Example 19 | -NHR | - | 0.22 | - | 20 | Acid-modified PP | Carboxylic anhydride group | 80 | 0 | B |
| M$_A$27 | Example 19 | -NHR | - | 0.22 | - | 11 | Epoxy-based adhesive | Epoxy group | 42 | 47 | B |
| M$_A$28 | Example 19 | -NHR | - | 0.22 | - | 20 | PMMA | Methoxycarbonyl group | 80 | 0 | B |
| M$_A$29 | Example 19 | -NHR | - | 0.22 | - | 20 | Polyurethane-based resin | Hydroxy group Isocyanate group | 80 | 0 | B |
| M$_A$30 | Example 19 | -NHR | - | 0.22 | - | 20 | Polyimide-based resin | Carboxy group Amide bond | 80 | 0 | B |

[Table 5]

[Table 5]

Table 5

| Resin molded body number | Hollow particles | | | | Resin | | | Curing agent | Adhesion between hollow particles and resin |
| | Example number | Reactive group | Hydroxyl value (mmol/g) | Amine value (mmol/g) | Mass % | Type | Functional group | Mass % | Mass % | |
|---|---|---|---|---|---|---|---|---|---|---|
| M$_A$31 | Example 20 | -OH, -NHR | 0.61 | 0.35 | 20 | Acid-modified PP | Carboxylic anhydride group | 80 | 0 | A |
| M$_A$32 | Example 20 | -OH, -NHR | 0.61 | 0.35 | 11 | Epoxy-based adhesive | Epoxy group | 42 | 47 | A |
| M$_A$33 | Example 20 | -OH, -NHR | 0.61 | 0.35 | 20 | PMMA | Methoxycarbonyl group | 80 | 0 | A |
| M$_A$34 | Example 20 | -OH, -NHR | 0.61 | 0.35 | 20 | Polyurethane-based resin | Hydroxy group Isocyanate group | 80 | 0 | A |
| M$_A$35 | Example 20 | -OH, -NHR | 0.61 | 0.35 | 20 | Polyimide-based resin | Carboxy group Amide bond | 80 | 0 | A |
| M$_A$36 | Example 21 | -OH, -NHR | 0.59 | 0.34 | 20 | Acid-modified PP | Carboxylic anhydride group | 80 | 0 | A |
| M$_A$37 | Example 21 | -OH, -NHR | 0.59 | 0.34 | 11 | Epoxy-based adhesive | Epoxy group | 42 | 47 | A |
| M$_A$38 | Example 21 | -OH, -NHR | 0.59 | 0.34 | 20 | PMMA | Methoxycarbonyl group | 80 | 0 | A |
| M$_A$39 | Example 21 | -OH, -NHR | 0.59 | 0.34 | 20 | Polyurethane-based resin | Hydroxy group Isocyanate group | 80 | 0 | A |
| M$_A$40 | Example 21 | -OH, -NHR | 0.59 | 0.34 | 20 | Polyimide-based resin | Carboxy group Amide bond | 80 | 0 | A |
| M$_A$41 | Example 22 | -OH, -NHR | 0.60 | 0.33 | 20 | Acid-modified PP | Carboxylic anhydride group | 80 | 0 | A |
| M$_A$42 | Example 22 | -OH, -NHR | 0.60 | 0.33 | 11 | Epoxy-based adhesive | Epoxy group | 42 | 47 | A |

| Resin molded body number | Hollow particles | | | | | Resin | | | Curing agent | Adhesion between hollow particles and resin |
| | Example number | Reactive group | Hydroxyl value (mmol/g) | Amine value (mmol/g) | Mass % | Type | Functional group | Mass % | Mass % | |
|---|---|---|---|---|---|---|---|---|---|---|
| M$_A$43 | Example 22 | -OH, -NHR | 0.60 | 0.33 | 20 | PMMA | Methoxycarbonyl group | 80 | 0 | A |
| M$_A$44 | Example 22 | -OH, -NHR | 0.60 | 0.33 | 20 | Polyurethane-based resin | Hydroxy group Isocyanate group | 80 | 0 | A |
| M$_A$45 | Example 22 | -OH, -NHR | 0.60 | 0.33 | 20 | Polyimide-based resin | Carboxy group Amide bond | 80 | 0 | A |
| M$_A$46 | Example 23 | -OH, -NHR | 0.52 | 0.71 | 20 | Acid-modified PP | Carboxylic anhydride group | 80 | 0 | A |
| M$_A$47 | Example 23 | -OH, -NHR | 0.52 | 0.71 | 11 | Epoxy-based adhesive | Epoxy group | 42 | 47 | A |
| M$_A$48 | Example 23 | -OH, -NHR | 0.52 | 0.71 | 20 | PMMA | Methoxycarbonyl group | 80 | 0 | A |
| M$_A$49 | Example 23 | -OH, -NHR | 0.52 | 0.71 | 20 | Polyurethane-based resin | Hydroxy group Isocyanate group | 80 | 0 | A |
| M$_A$50 | Example 23 | -OH, -NHR | 0.52 | 0.71 | 20 | Polyimide-based resin | Carboxy group Amide bond | 80 | 0 | A |
| M$_A$51 | Example 24 | -OH | 0.66 | - | 20 | Acid-modified PP | Carboxylic anhydride group | 80 | 0 | B |
| M$_A$52 | Example 24 | -OH | 0.66 | - | 11 | Epoxy-based adhesive | Epoxy group | 42 | 47 | B |
| M$_A$53 | Example 24 | -OH | 0.66 | - | 20 | PMMA | Methoxycarbonyl group | 80 | 0 | B |
| M$_A$54 | Example 24 | -OH | 0.66 | - | 20 | Polyurethane-based resin | Hydroxy group Isocyanate group | 80 | 0 | B |
| M$_A$55 | Example 24 | -OH | 0.66 | - | 20 | Polyimide-based resin | Carboxy group Amide bond | 80 | 0 | B |

| Resin molded body number | Hollow particles | | | | | Resin | | | Curing agent | Adhesion between hollow particles and resin |
|---|---|---|---|---|---|---|---|---|---|---|
| | Example number | Reactive group | Hydroxyl value (mmol/g) | Amine value (mmol/g) | Mass % | Type | Functional group | Mass % | Mass % | |
| M$_A$56 | Example 25 | -OH | 0.69 | - | 20 | Acid-modified PP | Carboxylic anhydride group | 80 | 0 | B |
| M$_A$57 | Example 25 | -OH | 0.69 | - | 11 | Epoxy-based adhesive | Epoxy group | 42 | 47 | B |
| M$_A$58 | Example 25 | -OH | 0.69 | - | 20 | PMMA | Methoxycarbonyl group | 80 | 0 | B |
| M$_A$59 | Example 25 | -OH | 0.69 | - | 20 | Polyurethane-based resin | Hydroxy group Isocyanate group | 80 | 0 | B |
| M$_A$60 | Example 25 | -OH | 0.69 | - | 20 | Polyimide-based resin | Carboxy group Amide bond | 80 | 0 | B |

[Table 6]

[Table 6]

Table 6

| Resin molded body number | Hollow particles | | | | | | Resin | | | Curing agent | Adhesion between hollow particles and resin |
|---|---|---|---|---|---|---|---|---|---|---|---|
| | Example number | Reactive group | Hydroxyl value (mmol/g) | Amine value (mmol/g) | Acid value (mmol/g) | Mass % | Type | Functional group | Mass % | Mass % | |
| $M_A61$ | Example 26 | -OH | 0.88 | - | - | 20 | Acid-modified PP | Carboxylic anhydride group | 80 | 0 | B |
| $M_A62$ | Example 26 | -OH | 0.88 | - | - | 11 | Epoxy-based adhesive | Epoxy group | 42 | 47 | B |
| $M_A63$ | Example 26 | -OH | 0.88 | - | - | 20 | PMMA | Methoxycarbonyl group | 80 | 0 | B |
| $M_A64$ | Example 26 | -OH | 0.88 | - | - | 20 | Polyurethane-based resin | Hydroxy group Isocyanate group | 80 | 0 | B |
| $M_A65$ | Example 26 | -OH | 0.88 | - | - | 20 | Polyimide-based resin | Carboxy group Amide bond | 80 | 0 | B |
| $M_A66$ | Example 27 | -OH | 0.82 | - | - | 20 | Acid-modified PP | Carboxylic anhydride group | 80 | 0 | B |
| $M_A67$ | Example 27 | -OH | 0.82 | - | - | 11 | Epoxy-based adhesive | Epoxy group | 42 | 47 | B |
| $M_A68$ | Example 27 | -OH | 0.82 | - | - | 20 | PMMA | Methoxycarbonyl group | 80 | 0 | B |
| $M_A69$ | Example 27 | -OH | 0.82 | - | - | 20 | Polyurethane-based resin | Hydroxy group Isocyanate group | 80 | 0 | B |
| $M_A70$ | Example 27 | -OH | 0.82 | - | - | 20 | Polyimide-based resin | Carboxy group Amide bond | 80 | 0 | B |
| $M_A71$ | Example 28 | -OH, -NHR | 0.64 | 0.31 | - | 20 | Acid-modified PP | Carboxylic anhydride group | 80 | 0 | A |
| $M_A72$ | Example 28 | -OH, -NHR | 0.64 | 0.31 | - | 11 | Epoxy-based adhesive | Epoxy group | 42 | 47 | A |

68

(continued)

| Resin molded body number | Hollow particles | | | | | | Resin | | | Curing agent | Adhesion between hollow particles and resin |
|---|---|---|---|---|---|---|---|---|---|---|---|
| | Example number | Reactive group | Hydroxyl value (mmol/g) | Amine value (mmol/g) | Acid value (mmol/g) | Mass % | Type | Functional group | Mass % | Mass % | |
| $M_A73$ | Example 28 | -OH, -NHR | 0.64 | 0.31 | - | 20 | PMMA | Methoxycarbonyl group | 80 | 0 | A |
| $M_A74$ | Example 28 | -OH, -NHR | 0.64 | 0.31 | - | 20 | Polyurethane-based resin | Hydroxy group Isocyanate group | 80 | 0 | A |
| $M_A75$ | Example 28 | -OH, -NHR | 0.64 | 0.31 | - | 20 | Polyimide-based resin | Carboxy group Amide bond | 80 | 0 | A |
| $M_A76$ | Example 29 | $-SO_3H$ | - | - | 0.22 | 20 | Acid-modified PP | Carboxylic anhydride group | 80 | 0 | C |
| $M_A77$ | Example 29 | $-SO_3H$ | - | - | 0.22 | 11 | Epoxy-based adhesive | Epoxy group | 42 | 47 | A |
| $M_A78$ | Example 29 | $-SO_3H$ | - | - | 0.22 | 20 | PMMA | Methoxycarbonyl group | 80 | 0 | C |
| $M_A79$ | Example 29 | $-SO_3H$ | - | - | 0.22 | 20 | Polyurethane-based resin | Hydroxy group Isocyanate group | 80 | 0 | A |
| $M_A80$ | Example 29 | $-SO_3H$ | - | - | 0.22 | 20 | Polyimide-based resin | Carboxy group Amide bond | 80 | 0 | C |

EP 4 714 536 A2

69

For the hollow particles of Examples 14 to 29, the pressure resistance thereof in the molded bodies formed by use of the PMMA, the polyurethane-based resin or the polyimide-based resin, were evaluated as follows.

For molded bodies $M_P1$ to $M_P48$, which were produced to evaluate the pressure resistance of the hollow particles obtained in Examples 14 to 29, the content ratio of the components, the evaluation results and so on are shown in Tables 7 to 9. Of the molded bodies $M_P1$ to $M_P48$, $M_P13$, $M_P46$ and $M_P48$ are those in which the reactive group of the hollow particles and the functional group of the resin did not have reactivity; therefore, the shell of the hollow particles was not crosslinked to the solidified resin product. The molded bodies other than them contained the hollow particles derived from the hollow particles of the present disclosure and the solidified resin product, and the shell of the hollow particles was crosslinked to the solidified resin product.

<Pressure resistance in PMMA molded body>

On a hot plate heated to 180°C or more, 0.1 g of the hollow particles and an acrylic resin were melted and mixed to obtain a resin composition. The obtained resin composition was poured into a mold (manufactured by AS ONE Corporation, diameter 14 mm) for hot press machines, and the mold was placed in a dryer at 230°C and heated for 15 minutes. Then, the mold was removed from the dryer and placed at a hot press machine (model: H300-15, manufactured by: AS ONE Corporation) set to 90°C. A cylinder at 90°C was put in the mold. At the time the temperature of the mold surface decreased to 130°C, a press pressure of 45 MPa was applied to produce a molded body. At this time, the cylinder pressure of the press machine was set to 3 MPa. The specific gravity of the obtained molded body was measured. The void retention rate of the hollow particles was calculated by the above formulae (V), (VI) and (VII), and the pressure resistance thereof was evaluated based on the following evaluation criteria.

(Evaluation criteria of pressure resistance)

A: The void retention rate was from 71% to 100%.
B: The void retention rate was from 51% to 70%.
C: The void retention rate was from 21% to 50%.
D: The void retention rate was from 0% to 20%.

<Pressure resistance in polyurethane-based resin molded body>

First, 0.1 g of the hollow particles were added to 0.45 g of a polyol component and 0.45 g of polyisocyanate, and they were uniformly mixed to obtain a mixture. The obtained mixture was poured into a mold (manufactured by AS ONE Corporation, diameter 14 mm) for hot press machines, and the mold was placed in a dryer at 200°C and heated for two hours. Then, the mold was removed from the dryer and placed at a hot press machine (model: H300-15, manufactured by: AS ONE Corporation) set to 90°C. A cylinder at 90°C was put in the mold. At the time the temperature of the mold surface decreased to 130°C, a press pressure of 45 MPa was applied to produce a molded body. At this time, the cylinder pressure of the press machine was set to 3 MPa. The specific gravity of the obtained molded body was measured. The void retention rate of the hollow particles was calculated by the above formulae (V), (VI) and (VII), and the pressure resistance thereof was evaluated based on the same evaluation criteria as those described above in "Pressure resistance in PMMA molded body".

<Pressure resistance in polyimide-based resin molded body>

First, 0.1 g of the hollow particles were added to 0.9 g of polyamic acid, and they were uniformly mixed to obtain a mixture. The obtained mixture was poured into a mold (manufactured by AS ONE Corporation, diameter 14 mm) for hot press machines, and the mold was placed in a dryer at 350°C and heated for two hours. Then, the mold was removed from the dryer and placed at a hot press machine (model: H300-15, manufactured by: AS ONE Corporation) set to 90°C. A cylinder at 90°C was put in the mold. At the time the temperature of the mold surface decreased to 130°C, a press pressure of 45 MPa was applied to produce a molded body. At this time, the cylinder pressure of the press machine was set to 3 MPa. The specific gravity of the obtained molded body was measured. The void retention rate of the hollow particles was calculated by the above formulae (V), (VI) and (VII), and the pressure resistance thereof was evaluated based on the same evaluation criteria as those described above in "Pressure resistance in PMMA molded body".

[Table 7]

Table 7

| Resin molded body number | Hollow particles | | | | | | | Resin | | | Pressure resistance |
|---|---|---|---|---|---|---|---|---|---|---|---|
| | Example number | Reactive group | Hydroxyl value (mmol/g) | Amine value (mmol/g) | Acid value (mmol/g) | Crosslinkable monomer unit (Mass %) | Mass % | Type | Functional group | Mass % | |
| $M_P1$ | Example 14 | -OH | 0.36 | - | - | 80 | 10 | PMMA | Methoxycarbonyl group | 90 | C |
| $M_P2$ | Example 14 | -OH | 0.36 | - | - | 80 | 10 | Polyurethane-based resin | Hydroxy group Isocyanate group | 90 | C |
| $M_P3$ | Example 14 | -OH | 0.36 | - | - | 80 | 10 | Polyimide-based resin | Carboxy group Amide bond | 90 | C |
| $M_P4$ | Example 15 | -OH | 0.38 | - | - | 80 | 10 | PMMA | Methoxycarbonyl group | 90 | C |
| $M_P5$ | Example 15 | -OH | 0.38 | - | - | 80 | 10 | Polyurethane-based resin | Hydroxy group Isocyanate group | 90 | C |
| $M_P6$ | Example 15 | -OH | 0.38 | - | - | 80 | 10 | Polyimide-based resin | Carboxy group Amide bond | 90 | C |
| $M_P7$ | Example 16 | -OH | 0.55 | - | - | 100 | 10 | PMMA | Methoxycarbonyl group | 90 | A |
| $M_P8$ | Example 16 | -OH | 0.55 | - | - | 100 | 10 | Polyurethane-based resin | Hydroxy group Isocyanate group | 90 | A |
| $M_P9$ | Example 16 | -OH | 0.55 | - | - | 100 | 10 | Polyimide-based resin | Carboxy group Amide bond | 90 | A |
| $M_P10$ | Example 17 | -OH | 0.54 | - | - | 80 | 10 | PMMA | Methoxycarbonyl group | 90 | C |
| $M_P11$ | Example 17 | -OH | 0.54 | - | - | 80 | 10 | Polyurethane-based resin | Hydroxy group Isocyanate group | 90 | C |
| $M_P12$ | Example 17 | -OH | 0.54 | - | - | 80 | 10 | Polyimide-based resin | Carboxy group Amide bond | 90 | C |
| $M_P13$ | Example 18 | -COOH | - | - | 0.88 | 99 | 10 | PMMA | Methoxycarbonyl group | 90 | B |

EP 4 714 536 A2

(continued)

| Resin molded body number | Hollow particles | | | | | | | Resin | | | Pressure resistance |
|---|---|---|---|---|---|---|---|---|---|---|---|
| | Example number | Reactive group | Hydroxyl value (mmol/g) | Amine value (mmol/g) | Acid value (mmol/g) | Crosslinkable monomer unit (Mass %) | Mass % | Type | Functional group | Mass % | |
| $M_P14$ | Example 18 | -COOH | - | - | 0.88 | 99 | 10 | Polyurethane-based resin | Hydroxy group Isocyanate group | 90 | A |
| $M_P15$ | Example 18 | -COOH | - | - | 0.88 | 99 | 10 | Polyimide-based resin | Carboxy group Amide bond | 90 | A |
| $M_P6$ | Example 19 | -NHR | - | 0.22 | - | 99 | 10 | PMMA | Methoxycarbonyl group | 90 | B |
| $M_P17$ | Example 19 | -NHR | - | 0.22 | - | 99 | 10 | Polyurethane-based resin | Hydroxy group Isocyanate group | 90 | B |
| $M_P18$ | Example 19 | -NHR | - | 0.22 | - | 99 | 10 | Polyimide-based resin | Carboxy group Amide bond | 90 | B |

[Table 8]

[Table 8]

Table 8

| Resin molded body number | Hollow particles | | | | | | Resin | | | Pressure resistance |
|---|---|---|---|---|---|---|---|---|---|---|
| | Example number | Reactive group | Hydroxyl value (mmol/g) | Amine value (mmol/g) | Crosslinkable monomer unit (Mass %) | Mass % | Type | Functional group | Mass % | |
| $M_P19$ | Example 20 | -OH, -NHR | 0.61 | 0.35 | 94 | 10 | PMMA | Methoxycarbonyl group | 90 | A |
| $M_P20$ | Example 20 | -OH, -NHR | 0.61 | 0.35 | 94 | 10 | Polyurethane-based resin | Hydroxy group Isocyanate group | 90 | A |
| $M_P21$ | Example 20 | -OH, -NHR | 0.61 | 0.35 | 94 | 10 | Polyimide-based resin | Carboxy group Amide bond | 90 | A |
| $M_P22$ | Example 21 | -OH, -NHR | 0.59 | 0.34 | 65 | 10 | PMMA | Methoxycarbonyl group | 90 | B |
| $M_P23$ | Example 21 | -OH, -NHR | 0.59 | 0.34 | 65 | 10 | Polyurethane-based resin | Hydroxy group Isocyanate group | 90 | B |
| $M_P24$ | Example 21 | -OH, -NHR | 0.59 | 0.34 | 65 | 10 | Polyimide-based resin | Carboxy group Amide bond | 90 | B |
| $M_P25$ | Example 22 | -OH, -NHR | 0.60 | 0.33 | 60 | 10 | PMMA | Methoxycarbonyl group | 90 | B |
| $M_P26$ | Example 22 | -OH, -NHR | 0.60 | 0.33 | 60 | 10 | Polyurethane-based resin | Hydroxy group Isocyanate group | 90 | B |
| $M_P27$ | Example 22 | -OH, -NHR | 0.60 | 0.33 | 60 | 10 | Polyimide-based resin | Carboxy group Amide bond | 90 | B |
| $M_P28$ | Example 23 | -OH, -NHR | 0.52 | 0.71 | 84 | 10 | PMMA | Methoxycarbonyl group | 90 | B |
| $M_P29$ | Example 23 | -OH, -NHR | 0.52 | 0.71 | 84 | 10 | Polyurethane-based resin | Hydroxy group Isocyanate group | 90 | B |
| $M_P30$ | Example 23 | -OH, -NHR | 0.52 | 0.71 | 84 | 10 | Polyimide-based resin | Carboxy group Amide bond | 90 | B |
| $M_P31$ | Example 24 | -OH | 0.66 | - | 84 | 10 | PMMA | Methoxycarbonyl group | 90 | B |

EP 4 714 536 A2

| Resin molded body number | Hollow particles | | | | | | Resin | | | Pressure resistance |
|---|---|---|---|---|---|---|---|---|---|---|
| | Example number | Reactive group | Hydroxyl value (mmol/g) | Amine value (mmol/g) | Crosslinkable monomer unit (Mass %) | Mass % | Type | Functional group | Mass % | |
| $M_P32$ | Example 24 | -OH | 0.66 | - | 84 | 10 | Polyurethane-based resin | Hydroxy group Isocyanate group | 90 | B |
| $M_P33$ | Example 24 | -OH | 0.66 | - | 84 | 10 | Polyimide-based resin | Carboxy group Amide bond | 90 | B |
| $M_P34$ | Example 25 | -OH | 0.69 | - | 84 | 10 | PMMA | Methoxycarbonyl group | 90 | B |
| $M_P35$ | Example 25 | -OH | 0.69 | - | 84 | 10 | Polyurethane-based resin | Hydroxy group Isocyanate group | 90 | B |
| $M_P36$ | Example 25 | -OH | 0.69 | - | 84 | 10 | Polyimide-based resin | Carboxy group Amide bond | 90 | B |

[Table 9]

[Table 9]

Table 9

| Resin molded body number | Hollow particles | | | | | | | Resin | | | Pressure resistance |
|---|---|---|---|---|---|---|---|---|---|---|---|
| | Example number | Reactive group | Hydroxyl value (mmol/g) | Amine value (mmol/g) | Acid value (mmol/g) | Crosslinkable monomer unit (Mass %) | Mass % | Type | Functional group | Mass% | |
| M$_P$37 | Example 26 | -OH | 0.88 | - | - | 84 | 10 | PMMA | Methoxycarbonyl group | 90 | B |
| M$_P$38 | Example 26 | -OH | 0.88 | - | - | 84 | 10 | Polyurethane-based resin | Hydroxy group Isocyanate group | 90 | B |
| M$_P$39 | Example 26 | -OH | 0.88 | - | - | 84 | 10 | Polyimide-based resin | Carboxy group Amide bond | 90 | B |
| M$_P$40 | Example 27 | -OH | 0.82 | - | - | 84 | 10 | PMMA | Methoxycarbonyl group | 90 | B |
| M$_P$41 | Example 27 | -OH | 0.82 | - | - | 84 | 10 | Polyurethane-based resin | Hydroxy group Isocyanate group | 90 | B |
| M$_P$42 | Example 27 | -OH | 0.82 | - | - | 84 | 10 | Polyimide-based resin | Carboxy group Amide bond | 90 | B |
| M$_P$43 | Example 28 | -OH, -NHR | 0.64 | 0.31 | - | 94 | 10 | PMMA | Methoxycarbonyl group | 90 | A |
| M$_P$44 | Example 28 | -OH, -NHR | 0.64 | 0.31 | - | 94 | 10 | Polyurethane-based resin | Hydroxy group Isocyanate group | 90 | A |
| M$_P$45 | Example 28 | -OH, -NHR | 0.64 | 0.31 | - | 94 | 10 | Polyimide-based resin | Carboxy group Amide bond | 90 | A |
| M$_P$46 | Example 29 | -SO$_3$H | - | - | 0.22 | 84 | 10 | PMMA | Methoxycarbonyl group | 90 | B |
| M$_P$47 | Example 29 | -SO$_3$H | - | - | 0.22 | 84 | 10 | Polyurethane-based resin | Hydroxy group Isocyanate group | 90 | B |
| M$_P$48 | Example 29 | -SO$_3$H | - | - | 0.22 | 84 | 10 | Polyimide-based resin | Carboxy group Amide bond | 90 | B |

[Consideration]

In the hollow particles obtained in Examples 14 to 17 and 19 to 28, as in the hollow particles obtained in Examples 1 to 13, the polymer in the shell contained from 60 parts by mass to 100 parts by mass of the crosslinkable monomer unit in 100 parts by mass of all the monomer units; since the polymer in the shell contained the monomer unit containing at least one kind selected from a hydroxy group and an amino group, the hollow particles had at least one kind selected from a hydroxy group and an amino group on the particle surface; and the hydroxyl value was 0.20 mmol/g or more, or the amine value was 0.20 mmol/g or more. Therefore, as shown in Tables 4 to 6, the hollow particles of Examples 14 to 17 and 19 to 28 had excellent adhesion to the resin in the molded body formed by use of the acid-modified PP resin, the epoxy-based resin, the PMMA, the polyurethane-based resin or the polyimide-based resin, all of which contained a functional group that was able to form a crosslink with a hydroxyl or amino group. Also, it was revealed that the pressure resistance of the hollow particles of Examples 14 to 17 and 19 to 28 was excellent even though the void ratio is 50% or more and high, and as shown in Tables 7 to 9, the pressure resistance was also excellent as well in the molded body formed by use of the PMMA, the polyurethane-based resin or the polyimide-based resin.

As is clear from the results shown in Tables 4 to 6, especially, the hollow particles obtained in Examples 20 to 23 and 28 had excellent adhesion to the resin in the molded body formed by use of the acid-modified PP resin, the epoxy-based resin, the polyurethane resin or the polyimide-based resin. This is presumed to be because the hollow particles had both a hydroxy group and an amino group as the reactive group.

Also, as is clear from the results shown in Tables 7 to 9, the hollow particles obtained in Examples 16, 20 and 28 were particularly excellent in pressure resistance. This is presumed be because the content of the crosslinkable monomer unit was large; the crosslinkable monomer unit not containing a reactive group is contained; and the total content of the (meth)acrylic polymerizable monomer unit and the crosslinkable monomer unit derived from the vinyl-based crosslinkable monomer having a molecular weight of 250 or less and not containing a reactive group, was large.

In the hollow particles obtained in Example 18, the polymer in the shell contained from 60 parts by mass to 100 parts by mass of the crosslinkable monomer unit in 100 parts by mass of all the monomer units; the polymer in the shell contained the monomer unit containing a carboxy group, the hollow particles had a carboxy group on the particle surface; and the acid value was 0.20 mmol/g or more. Therefore, as shown in Table 4, the hollow particles of Example 18 had excellent adhesion to the resin in the molded body formed by use of the epoxy-based resin, the polyurethane resin or the polyimide-based resin, all of which contained a functional group that was able to form a crosslink with a carboxy group. Also, it was revealed that the pressure resistance of the hollow particles of Example 18 was excellent even though the void ratio is 50% or more and high, and as shown in Table 7, the hollow particles are particularly excellent in the pressure resistance in the molded body formed by use of the polyurethane resin or the polyimide-based resin.

In the hollow particles obtained in Example 29, the polymer in the shell contained from 60 parts by mass to 100 parts by mass of the crosslinkable monomer unit in 100 parts by mass of all the monomer units; since the polymer in the shell contained the monomer unit containing a sulfo group, the hollow particles had a sulfo group on the particle surface; and the acid value was 0.20 mmol/g or more. Therefore, as shown in Table 6, the hollow particles of Example 29 had excellent adhesion to the resin in the molded body formed by use of the epoxy-based resin or the polyurethane resin, all of which contained a functional group that was able to form a crosslink with a sulfo group. Also, the pressure resistance of the hollow particles of Example 29 was excellent, even though the void ratio is 50% or more and high.

In the molded body $M_A23$ (shown in Table 4) and the molded bodies $M_A78$ and $M_A80$ (shown in Table 6), the adhesion between the hollow particles and the resin was poor. This is presumed to be because the shell of the hollow particles was not crosslinked to the solidified resin product.

In the molded bodies shown in Table 1, which were used to evaluate the pressure resistance, the shell of the hollow particles is not crosslinked to the solidified resin product since the polypropylene not containing a functional group was used as the resin. The molded bodies shown in Tables 7 to 9 include those having similar or slightly poor pressure resistances compared to the pressure resistances shown in Table 1, even though the shell of the hollow particles formed a crosslink with the solidified resin product. This is presumed to be because stronger external pressure was applied to the molded bodies shown in Tables 7 to 9 in the production process.

Also, the pressure resistance of the hollow particles is strongly influenced by not only whether the shell of the hollow particles is crosslinked to the solidified resin product or not, but also the strength of the shell of the hollow particles. For example, as the content of the crosslinkable monomer unit increases and as the total content of the (meth)acrylic monomer unit and the crosslinkable monomer unit derived from the vinyl-based crosslinkable monomer having a molecular weight of 250 or less and not containing a reactive group increases, the shell strength of the hollow particles tends to improve. Also, when the crosslinkable monomer unit not containing a reactive group is contained, the shell strength of the hollow particles tends to improve. Accordingly, compared to the hollow particles forming the crosslink and having poor shell strength, the hollow particles forming no crosslink and having excellent shell strength can sometimes have better pressure resistance. In the case of the hollow particles having similar shell strength, the pressure resistance of the hollow particles tends to improve by crosslinking the shell of the hollow particles to the solidified resin product. For example, in the case of comparing the molded bodies $M_P13$ to $M_P15$ shown in Table 7, which were formed by use of the hollow particles of Example 18, $M_P14$ and $M_P15$ in each of which the shell of the hollow particles was crosslinked to the solidified resin product, had better pressure resistance than $M_P13$ in which the shell of the hollow particles was not crosslinked to the solidified resin product.

Refence Signs List

1. Aqueous medium
2. Low polarity material
4a. Hydrophobic solvent
4b. Material not containing hydrophobic solvent
5. Shell
6. Hollow portion
10. Droplet
20. Precursor particle
100. Hollow particle having a hollow portion filled with gas

**Claims**

1. Hollow particles which comprise a shell containing a resin and a hollow portion surrounded by the shell,

   wherein a void ratio is 50% or more;
   the shell contains, as the resin, a polymer in which from 60 parts by mass to 100 parts by mass of a crosslinkable monomer unit is contained in 100 parts by mass of all monomer units;
   the hollow particles have at least one kind of reactive group selected from the group consisting of a carboxy group, a carboxylic anhydride group and a sulfo group on a surface thereof; and
   an acid value is 0.20 mmol/g or more;
   the crosslinkable monomer unit is a monomer unit derived from a crosslinkable monomer, and the crosslinkable monomer is a polymerizable monomer which has two or more polymerizable functional groups and which forms a crosslink in a resin by a polymerization reaction;
   the void ratio (%) of the hollow particles is calculated by the following formula (III) where $D_1$ is the apparent density of the hollow particles and $D_0$ is the true density thereof:

   $$\text{Void ratio (\%)} = 100 - ([\text{Apparent density } D_1]/[\text{True density } D_0]) \times 100 \qquad \text{Formula (III)};$$

   the apparent density $D_1$ and true density $D_0$ of the hollow particles are determined as indicated in the description; and wherein the acid value is determined in accordance with JIS K 0070 as indicated in the description.

2. The hollow particles according to Claim 1,

   wherein the polymer includes a reactive group-containing monomer unit, and the reactive group-containing monomer unit includes a crosslinkable monomer unit containing a carboxy group or a non-crosslinkable monomer unit containing a sulfo group, and
   wherein the non-crosslinkable monomer unit is a monomer unit derived from a non-crosslinkable monomer, and the non-crosslinkable monomer is a polymerizable monomer which has only one polymerizable functional group.

3. The hollow particles according to Claim 1 or 2,
   wherein the crosslinkable monomer unit contains a reactive group-containing monomer unit and a reactive group-free monomer unit.

4. The hollow particles according to any one of Claims 1 to 3,
   wherein, when the polymer includes a non-crosslinkable monomer unit, the non-crosslinkable monomer unit consists of a reactive group-free monomer unit.

5. The hollow particles according to Claim 1 or 2,
   wherein the reactive group is a sulfo group.

6. The hollow particles according to Claim 5,

   wherein the shell contains, as the resin, from 60 parts by mass to 97 parts by mass of a crosslinkable monomer unit and from 3 parts by mass to 40 parts by mass of a non-crosslinkable monomer unit in 100 parts by mass of all the monomer units, and
   wherein a content of a reactive group-containing monomer unit in 100 parts by mass of the non-crosslinkable monomer unit is 80 parts by mass or more.

7. A method for producing the hollow particles defined by any one of Claims 1 to 6,
   the method comprising:

   preparing a mixture liquid containing a polymerizable monomer, a hydrophobic solvent, a dispersion stabilizer and an aqueous medium,
   suspending the mixture liquid to prepare a suspension in which droplets of a monomer composition containing the polymerizable monomer and the hydrophobic solvent are dispersed in the aqueous medium,
   subjecting the suspension to a polymerization reaction to prepare a precursor composition containing precursor particles which have the hollow portion surrounded by the shell containing the resin and which include the hydrophobic solvent in the hollow portion, and
   removing the hydrophobic solvent from the precursor particles,
   wherein, in the polymerization, a second polymerization reaction is optionally performed by further adding a second polymerizable monomer after a first polymerization reaction is performed by subjecting the suspension to the polymerization reaction;
   wherein from 60 parts by mass to 100 parts by mass of a crosslinkable monomer is contained in 100 parts by mass of the polymerizable monomer contained in the mixture liquid; and
   wherein at least one of the polymerizable monomer contained in the mixture liquid and the second polymerizable monomer contains a crosslinkable or non-crosslinkable monomer containing at least one kind of reactive group selected from the group consisting of a carboxy group, a carboxylic anhydride group and a sulfo group.

8. The method for producing the hollow particles according to Claim 7,
   wherein the polymerizable monomer contained in the mixture liquid includes a crosslinkable monomer containing a carboxy group or a non-crosslinkable monomer containing a sulfo group.

9. The method for producing the hollow particles according to Claim 7 or 8,
   wherein the crosslinkable monomer contained in the mixture liquid contains a reactive group-free monomer.

10. The method for producing the hollow particles according to any one of Claims 7 to 9,
    wherein at least one of the polymerizable monomer contained in the mixture liquid and the second polymerizable monomer contains a non-crosslinkable monomer; a content of the crosslinkable monomer in a total of 100 parts by mass of the polymerizable monomer contained in the mixture liquid and the second polymerizable monomer, is from 60 parts by mass to 97 parts by mass; a content of the non-crosslinkable monomer is from 3 parts by mass to 40 parts by mass; a content of a reactive group-containing monomer in a total of 100 parts by mass of the non-crosslinkable monomer, is 80 parts by mass or more; and the reactive group-containing monomer includes a non-crosslinkable monomer containing a sulfo group.

11. A resin composition comprising the hollow particles defined by any one of Claims 1 to 6 and a resin containing a functional group,
    wherein the reactive group on the surface of the hollow particles is able to react with the functional group of the resin.

12. The resin composition according to Claim 11,
    wherein a combination of the hollow particles with the resin containing the functional group is any one selected from the following:

    a combination of hollow particles having at least one kind of reactive group selected from the group consisting of a carboxy group and a carboxylic anhydride group with an epoxy-based resin,
    a combination of hollow particles having at least one kind of reactive group selected from the group consisting of a carboxy group, a carboxylic anhydride group and a sulfo group with a resin containing a polyol component and a polyisocyanate component, and

a combination of hollow particles having at least one kind of reactive group selected from the group consisting of a carboxy group and a carboxylic anhydride group with polyamic acid.

13. A molded body comprising hollow particles derived from the hollow particles defined by any one of Claims 1 to 6 and a solidified resin product,
wherein the shell of the hollow particles is crosslinked to the solidified resin product.

14. The molded body according to Claim 13,
wherein the crosslink is any one selected from the following:

a crosslink formed by a reaction of at least one kind of reactive group selected from the group consisting of a carboxy group and a carboxylic anhydride group of the hollow particles with an epoxy group of the resin, and
a crosslink formed by a reaction of at least one kind of reactive group selected from the group consisting of a carboxy group, a carboxylic anhydride group and a sulfo group of the hollow particles with a hydroxy group of the resin.

15. A method for producing a molded body,
the method comprising:

mixing the hollow particles defined by any one of Claims 1 to 6 and a resin containing a functional group that is able to react with the reactive group on the surface of the hollow particles,
solidifying the resin, and
reacting the reactive group of the hollow particles with the functional group of the resin.

FIG. 1

**REFERENCES CITED IN THE DESCRIPTION**

**Patent documents cited in the description**

- WO 2019177006 A

- JP 2006089648 A